(19) **Europäisches Patentamt / European Patent Office / Office européen des brevets**

(11) **EP 1 661 354 B1**

(12) **EUROPEAN PATENT SPECIFICATION**

(45) Date of publication and mention
of the grant of the patent:
**16.01.2008 Bulletin 2008/03**

(21) Application number: **03753389.0**

(22) Date of filing: **05.09.2003**

(51) Int Cl.:
**H04L 29/06** (2006.01)

(86) International application number:
**PCT/EP2003/009875**

(87) International publication number:
**WO 2005/025170 (17.03.2005 Gazette 2005/11)**

(54) **TERMINAL MOBILITY FOR GLOBAL IPV4/GLOBAL IPV6 TRANSITION**

ENDGERÄTEMOBILITÄT MIT NETZÜBERGANG ZWISCHEN IPV4 UND IPV6

MOBILITE DES TERMINAUX POUR LA TRANSITION IPV4 GLOBAL / IPV6 GLOBAL

(84) Designated Contracting States:
**DE GB**

(43) Date of publication of application:
**31.05.2006 Bulletin 2006/22**

(73) Proprietor: **NTT DoCoMo, Inc.**
**Tokyo 100-6150 (JP)**

(72) Inventors:
  • **THAKOLSRI, Srisakul**
    **80686 München (DE)**
  • **MINOKUCHI, Atsushi**
    **Yokosuka-shi, Kanagawa-ken 239-0847 (JP)**
  • **PREHOFER, Christian**
    **81477 München (DE)**
  • **HORI, Kazumasa**
    **Tokyo 144-0052 (JP)**

(74) Representative: **HOFFMANN EITLE**
**Patent- und Rechtsanwälte**
**Arabellastrasse 4**
**81925 München (DE)**

(56) References cited:
  • **PERKINS C E: "MOBILE NETWORKING THROUGH MOBILE IP" IEEE INTERNET COMPUTING, IEEE SERVICE CENTER, PISCATAWAY, NJ, US, vol. 2, no. 1, 1998, pages 58-69, XP000764776 ISSN: 1089-7801**
  • **CARPENTER B ET AL: "RFC 3056. Connection of IPv6 Domains via IPv4 Clouds" NETWORK WORKING GROUP REQUEST FOR COMMENTS, XX, XX, February 2001 (2001-02), pages 1-23, XP002240357**

**Description**

**FIELD OF THE INVENTION**

The invention relates to a registration method, communication method, gateway and a mobile communication terminal in a communication system which comprises several networks having different protocols and/or address spaces. The invention in particular relates to a roaming situation for IP-based mobile networks when a mobile communication terminal previously registered in a first network roams to another network and more particularly relates to the roaming situation when this other network roamed to is implemented using a different protocol to that used in the first network.

The present invention in particular relates to the problem how the mobile communication terminal can be registered in the network to which it has roamed and how this mobile communication terminal can communicate with other mobile communication terminals belonging to a still further network of the communication system. The different networks may be Internet Protocol (IP) implemented mobile networks in which different versions of the Internet Protocol like IPv4 and IPv6 may coexist as will be explained below with more details.

However, it should be noted that the invention generally relates to networks having different protocols and different address bases and that the explanations made here are not restricted to Internet Protocol implemented networks.

**BACKGROUND OF THE INVENTION**

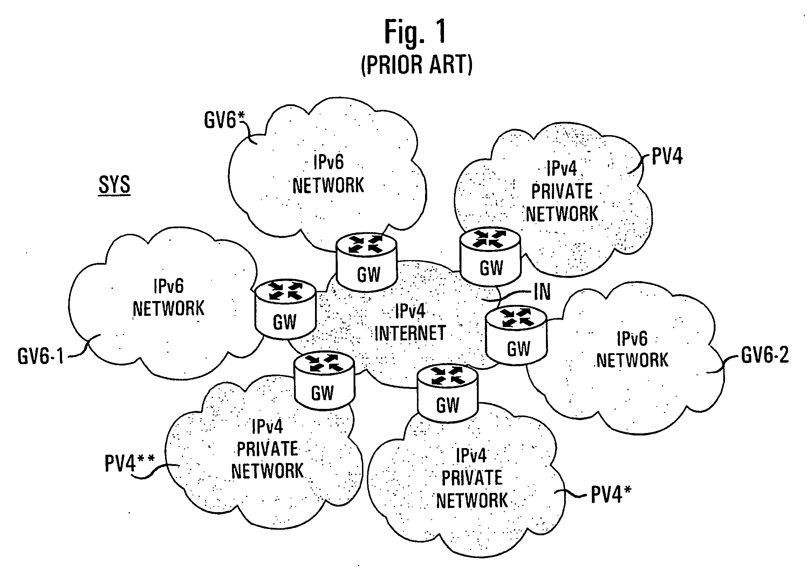

Fig. 1 shows a communication system SYS in accordance with the prior art. As shown in Fig. 1, the communication system SYS can comprise a first network IN implemented using a first protocol such as the Internet Protocol IPv4 (the first network may be the global Internet), three second networks GV6-1; GV6-2; GV6* implemented using a second protocol such as the Internet Protocol IPv6, and a third and fourth network PV4; PV4** implemented using said first protocol such as IPv4. As shown in Fig. 1, the first network IN (IPv4 Internet) is connected through respective gateways GW to the other networks. The function of such gateways GW is known to the skilled person and the gateways GW typically perform the protocol conversion between IPv6 and IPv4 networks and the address conversion. The configuration in Fig. 1 is typical during the IPv4-IPv6 transition period where it is expected that the IPv4 private network and the IPv6 network or networks will coexist. Typically, since the first and second protocols IPv4, IPv6 are different and cannot interoperate, some transition solutions are necessary to enable transport communication between the existing IPv4 network and the upcoming IPv6 networks.

However, problems exist for the interoperability in Fig. 1 not only because of the usage of different protocols IPv4 and IPv6 in different networks but also due to usage of addresses in respective networks. For example, in principle the third and fourth networks PV4, PV4** use the same first protocol IPv4 as the first network IN such that in principle interoperability could exist. However, whilst for example the first and fourth networks IN, PV4 use the first protocol IPv4 for addressing in said first and fourth networks IN, PV4, the first and fourth addresses are respectively first protocol first network addresses and first protocol fourth network addresses selected from different address ranges of the first protocol. That is, although the networks IN, PV4, PV4** use the same type of addresses (because the same protocol IPv4 is used for the addressing in these networks), a user or a communication terminal in the first network IN has no general knowledge and usage of the address range which is respectively reserved for the third and fourth networks PV4, PV**. The fact that the first and fourth addresses are selected from different address ranges is indicated with the wording "private" in the third and fourth networks PV, PV**.

On the other hand, regarding the usage of addresses, the second networks GV6-1 ; GV6-2; Gv6* use the second protocol IPv6 for addressing and they globally share the same address space, i.e. there are no reserved "private" addresses.

Thus, in the communication system SYS in Fig. 1 there are several incompatibilities for the interoperability regarding the usage of protocols and the usage of addresses. This causes problems when a mobile communication terminal registered in one of the networks connected to the first network IN roams to another network. In particular, it may not be possible for such a mobile communication terminal to register itself in the new (roamed to) network and it might not be reachable by another mobile communication terminal or might not be capable of transmitting information to such another mobile communication terminal. Of course, as may be appreciated already from Fig. 1, a mobile communication terminal for example roaming from the IPv4 private network PV4** to a IPv6 network GV6-1 needs to be a dual-stack protocol mobile communication terminal in order to allow an operation in the two networks respectively having different protocols. However, in addition to the usage of a dual-stack (dual protocol) mobile communication terminal, procedures must be established for allowing the routing of for example IPv6 information through a IPv4 protocol network, for example when two mobile communication terminals of the networks GV6* and GV6-2 communicate by routing information through the Internet IN. Different scenarios of such roaming procedures and communication scenarios can be distinguished when a mobile communication terminal is moving across the network scenario in Fig. 1. This calls for more dedicated transition mechanisms enabling the communication between different IP protocols for this roaming or moving terminal.

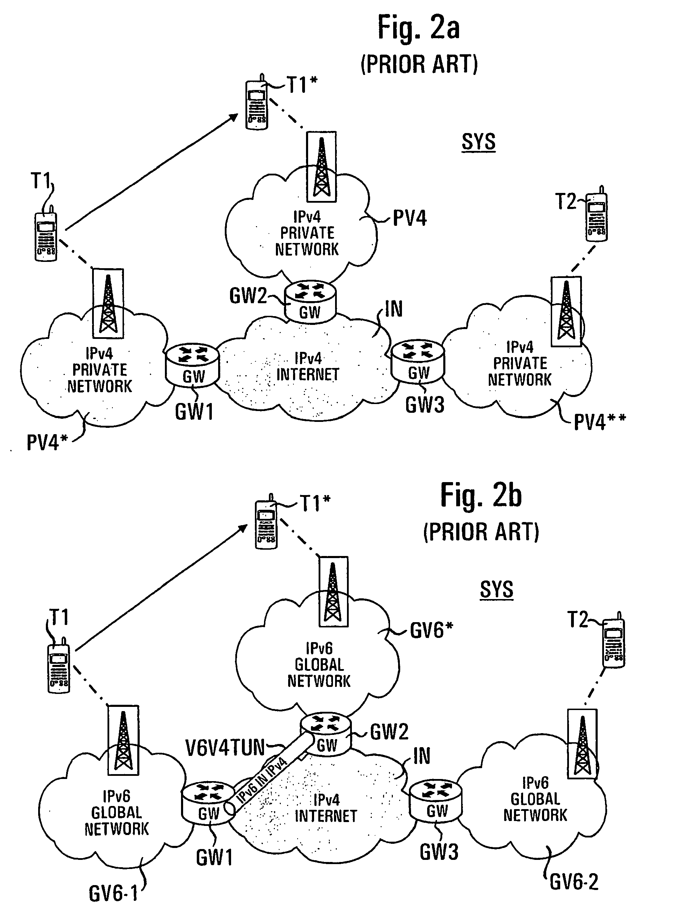

Fig. 2a shows a communication system SYS in which first protocol networks PV4, PV4*, PV4** are respectively connected to a first protocol network IN (the IPv4 Internet) through respective gateways GW1, GW2, GW3. As explained above, in this case the protocols are the same in all networks, however, the address ranges are different in the respective "private" IPv4 networks PV4, PV4*, PV4**. In Fig. 2a the mobile communication terminal T1 (belonging to its home network PV4*)roams to the other IPv4 network PV4 in which it is registered as the mobile communication terminal T1*. The aim is that the mobile communication terminal T1* communicates with the corresponding mobile communication terminal T2 registered in its home network PV4**. The registration/communication scenario in Fig. 2a is solved in the prior art by using the mobile IP protocol such that an IP-based mobile terminal can move around the IPv4 domain connected to the IPv4 Internet IN. Using the mobile IP protocol allows a communication between the terminals T1* and T2 and there is no need that the mobile terminals T1*, T2 are dual-protocol terminals because the communication system SYS in Fig. 2a only comprises IPv4 networks, i.e. first protocol networks.

Another communication scenario, as shown in Fig. 2b of the prior art, relates to the case when second protocol networks, such as IPv6 global networks GV6-1, GV6*, GV6-2 are respectively connected to a first protocol network IN, i.e. a IPv4 Internet, through respective gateways GW1, GW2, GW3. In this case, as explained before, the IPv6 global networks GV6-1, GV6*, GV6-2 use a second protocol for addressing and comprise addresses selected from the same "global" address space. Similarly, the first protocol (IPv4) Internet IN uses a first protocol IPv4 and has its own address specification and address range. Similarly as in Fig. 2a, it is desired that the mobile terminal T1* having roamed from its home network GV6-1 can be registered in the foreign (visitor) network GVG* and can communicate with for example a mobile communication terminal T2 registered in the second protocol network GV6-2. As can be seen from Fig. 2b, the communication and registration between the two terminals T1* and T2 is essentially enabled by setting up a first protocol tunnel V6V4TUN between the first gateway GW1 and the second gateway GW2. As is indicated in Fig. 2b (with "IPv6 in IPv4"), the tunnel V6V4TUN is used for encapsulating second protocol (IPv6) information in the first protocol (IPv4). In the case of Fig. 2b where the IPv6 domain is connected to the IPv4 Internet, the combination of 6to4 transition mechanism and Mobile IPv6 (MIPv6) protocol can be used for the IP-based terminal moving in these IPv6 domains. In principle, the configuration in Fig. 2b is not extremely complicated since the mobile terminal T1 has a second protocol (IPv6) home network GV6-1 and it also roams to a second protocol foreign network GV6*. The only problem is how to route information through the IPv4 Internet and this is easily achieved with the tunnel V6V4TUN.

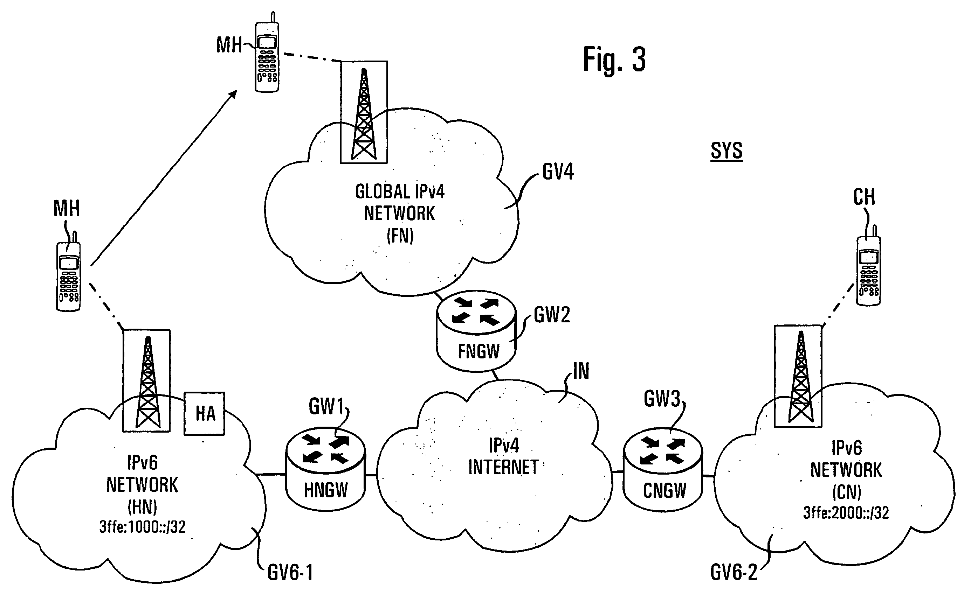

Whilst the communication in Fig. 2a is achieved by using the Mobile IP protocol and the communication in Fig. 2b is achieved by using the Mobile IPv6 protocol, in accordance with the prior art, no solutions are so far available for the more complicated communication scenario as shown in Fig. 3.

The difference to the scenarios in Fig. 2a and Fig. 2b is that the mobile terminal (or mobile host MH) moves away from its second protocol home network GV6-1 to a network GV4 which is implemented using a different first protocol IPv4. That is, in Fig. 3 the mobile host MH moves away from its IPv6 home network HN to the global IPv4 foreign network FN. In the communication system SYS in Fig. 3 it is assumed that the first network IN and the fourth network GV4 are implemented using the first protocol IPv4 and that the first and fourth addresses used in the first and fourth networks IN, GV4 are selected from a common address range of said first protocol. That is, the addresses of the fourth network GV4 are "global" and share the same global address range used in the first network IN. On the other hand, the second and third networks GV6-1, GV6-2 use the same second protocol IPv6 for addressing and the second and third addresses of the second and third networks GV6-1, GV6-2 are "global" addresses, i.e. they are selected from a common address range of said second protocol IPv6. No solution for the communication scenario in Fig. 3 has so far been reported in the prior art.

The problems that comes up when the first terminal MH moves to the different protocol network GV4 and wants to communicate with corresponding mobile terminal CH registered in its second protocol network GV6-2 are due to the fact that the mobile host MH moves to a different protocol domain in which it is in principle not reachable for the corresponding host CH due to address mismatch problems.

Firstly, of course the mobile host MH must be a dual protocol mobile communication terminal which can register using the second protocol IPv6 in its home network (HN, GV6-1) and can use the first protocol IPv4 for registering in the first protocol foreign network GV4. However, even if the mobile host MH is capable to be registered in the first protocol global network GV4, its home agent (home register) in the second network GV6-1 still has stored as identification a second protocol (IPv6) home address. Therefore, when communication is to be established between MH and CH, the corresponding host CH will still try to reach the mobile host MH under the second protocol IPv6 address which is registered in the home agent HA. However, in the scenario in Fig. 3, the mobile host MH is not reachable under this address any longer because it has roamed to the global network GV4 and is now registered in this foreign global IPv4 network GV4. Therefore, the mobile host MH is not reachable under a new globally unit IPv6 address and no communication can be established.

Secondly, during a communication between MH and CH, the mobile host MH will intrinsically transmit second protocol information to the corresponding host CH through the networks GV4, IN and GV6-2. However, since the information to be transmitted is intrinsically second protocol IPv6 based, this information cannot be easily routed by the fourth network GV4 and the first network IN (for example due to the usage of global first protocol IPv4 address specifications and global second protocol IPv6 address specifications in the second and third networks GV6-1, GV6-2).

In the prior art, it is already known from PERKINS CE: "MOBILE NETWORKING THROUGH MOBILE IP' EEEE INTERNET COMPUTING, IEEE SERVICE CENTER, PISCATAWAY, NJ, US, vol. 2, no. 1, 1998, pages 58-69, XP000764776 ISSN: 1089-7801 that a mobile station is provided with a care-of-address when it moves from a home network to a foreign network running the same protocol. The foreign care-of-address is forwarded to the home agent of the home network in order to be registered in the home agent. Thus, the location/address of the roamed mobile station in the foreign network is always known also in the home network, for example when a communication is desired from another mobile station to the roamed mobile station.

CARPENTER B ET AL: 'RFC 3056. Connection of IPv6 Domains via IPv4 Clouds' NETWORK WORKING GROUP REQUEST FOR COMMENTS, XX, XX, February 2001 (2001-02), pages 1-23, XP002240357 discloses a communication process and the generation of addresses if a communication is to take place between a mobile station having roamed to a foreign network from its home network wherein the home network and the foreign network run different protocols. In particular, IPv4 packets are encapsulated in IPv6 packets and are forwarded through a tunnelling process to the home network, i.e. to the home agent. Using the concept of tunnelling/encapsulation/decapsulation, a communication between a roamed mobile station having roamed to the foreign network and a mobile station of the home network is achieved.

Both aforementioned prior art documents only relate to the interconnection of two networks with regard to the registration and communication process.


## SUMMARY OF THE INVENTION

As explained above with reference to Fig. 3, in a communication system SYS of Fig. 3 there are registration and communication problems when a first communication terminal MH registered in a second protocol IPv6 home network GV6-1 roams to a first protocol IPv4 global network GV4 and wants to communicate through a first protocol IPv4 network IN with a corresponding host CH registered in a further second protocol IPv6 network GV6-2.

The object of the present invention is to overcome the aforementioned described disadvantages. In particular, it is the object of the present invention to provide a registration and communication method, a gateway and a communication system which allow a communication between a first terminal MH having roamed from its second protocol home network to a first protocol fourth network and a second terminal registered in another second protocol network which is connected to the first terminal foreign network through a first protocol first network.

This object is solved by a registration method according to claim 1 in a communication system including a first network implemented using a first protocol, said first network being connected to a second network implemented using a second protocol, and a fourth network implemented using said first protocol through a respective first and second gateway, for registering in said second network a first terminal of said second network having roamed to said fourth network; said first and second protocols being different; said first and fourth networks using said first protocol for addressing in said first and fourth networks; said second network using said second protocol for addressing in said second network; said first, second and fourth networks respectively comprising first, second and fourth addresses; said second addresses being second protocol second network addresses; said first and fourth addresses being respectively first protocol first network addresses and first protocol fourth network addresses. In one aspect said registration method comprises the following steps: generating in said first terminal a second protocol second network first terminal foreign address of said first terminal from a first protocol fourth network first terminal address; setting up a first protocol first tunnel between said first terminal and said first gateway; transmitting said second protocol second network first terminal foreign address through said first protocol first tunnel; receiving said second protocol second network first terminal foreign address in said first gateway; transmitting said second protocol second network first terminal foreign address through said second network to a home agent in said second network.

The object is further solved by a communication method according to claim 6 in a communication system including a first network implemented using a first protocol, said first network being connected to a second network implemented using a second protocol, to a fourth network implemented using said first protocol, and to a third network implemented using said second protocol through a respective first, second and third gateway, for providing communication information from a second terminal of said third network to a first terminal of said second network having roamed to said fourth network; said first and second protocols being different; said first and fourth networks using said first protocol for addressing in said first and fourth networks; said second and third networks using said second protocol for addressing in said second and third networks; said first, second, third and fourth networks respectively comprising first, second, third and fourth addresses; said second and third addresses being respectively second protocol second network addresses and second protocol third network addresses; said first and fourth addresses being respectively first protocol first network addresses and first protocol fourth network addresses selected from different address ranges of said first protocol. In one aspect said communication method comprises the following steps:

> transmitting said communication information from said second terminal through said third network to said third gateway; setting up a first protocol first tunnel between said third gateway and said first gateway; transmitting said communication information through said first protocol first tunnel; receiving said communication information in said first gateway; setting up a first protocol second tunnel between said first gateway and said first terminal; transmitting said communication information through said first protocol second tunnel; receiving said communication information in said first terminal.

Furthermore, the object is solved by a gateway in a communication system according to claim 34 including a first network implemented using a first protocol, said first network being connected to a second network implemented using a second protocol, to a fourth network implemented using said first protocol, and to a third network implemented using said second protocol respectively through said gateway forming a first gateway, a second and a third gateway, for providing communication information from a second terminal of said third network to a first terminal of said second network having roamed to said fourth network or from said first terminal to said second terminal; said first and second protocols being different; said first and fourth networks using said first protocol for addressing in said first and fourth networks; said second and third networks using said second protocol for addressing in said second network; said first, second, third and fourth networks respectively comprising first, second, third and fourth addresses; said second and third addresses being respectively second protocol second network addresses and second protocol third network addresses; said first and fourth addresses being respectively first protocol first network addresses and first protocol fourth network addresses. In one aspect said gateway comprises a conversion unit adapted to convert between a first protocol fourth network first terminal address and a second protocol second network first terminal foreign address.

The object is further solved by a communication system according to claim 21. In one aspect the system comprises a first network implemented using a first protocol, said first network being connected to a second network implemented using a second protocol, a third network implemented using said second protocol and a fourth network implemented using said first protocol through a respective first, second and third gateway, for providing communications between a first terminal of said second network and having roamed to said fourth network and a second terminal of said third network; said first and second protocols being different; said first and fourth networks using said first protocol for addressing in said first and fourth networks; said second and third networks using said second protocol for addressing in said second and third networks; said first to fourth networks respectively comprising first to fourth addresses; said second and third addresses being respectively second protocol second network addresses and second protocol third network addresses; said first and fourth addresses being respectively first protocol first network addresses and first protocol fourth network addresses; wherein said second network comprises a home agent adapted to store a second protocol second network first terminal origin address assigned in and generated by said second network to said first terminal in said second network and a second protocol second network first terminal foreign address generated by said first terminal having roamed to said fourth network ; said first terminal is capable of communicating using said first protocol and said second protocol; said first terminal comprises a first tunnel set up unit for setting up a first protocol first tunnel between said first terminal and said first gateway; said first gateway between said second and first networks comprises a second tunnel set up unit for setting up a first protocol second tunnel between said first gateway and said third gateway and a fourth tunnel set up unit for setting up a first protocol fourth tunnel between said first gateway and said first terminal; said third gateway between said third and first networks comprises a third tunnel set up unit for setting up a first protocol third tunnel between said third gateway and said first gateway.

In accordance with one aspect of the invention, a dual protocol mobile terminal is used in connection with a registration method in which a new second protocol IPv6 address of the first terminal is informed to its home agent and this new address is globally unique and compatible with the home agent. This second network first terminal foreign address is communicated during registration to the home agent of the first terminal through a tunnel in the fourth network and the first network.

Similarly, during communication there is used a tunnel between the first terminal and the home gateway (interconnecting the first network and the second network) through the foreign gateway (interconnecting the fourth network and the first network) and a tunnel between the home gateway and a corresponding node gateway (interconnecting the first network and the third network). Thus, mechanisms are provided to allow a communication from the first terminal and to the first terminal after the first terminal has moved to the fourth foreign network.

For allowing the set-up of such tunnels the inventive mobile communication terminal comprises a tunnel set-up unit for setting up a first protocol tunnel between the first terminal and the home gateway and the home gateway comprises a conversion unit to convert between a first protocol fourth network first terminal address and a second protocol second network first terminal foreign address. During registration the home gateway will be supplied with corresponding information through the set up tunnels and the conversion unit uses this information set up during registration during the communication between the first and the second terminal.

Preferably, in the registration method, before said step a) said first protocol fourth network first terminal address is distributed from a first protocol address distribution unit to said first terminal.

Preferably, the registration method includes in said step b) encapsulating of at least said second protocol second network first terminal foreign address with a first protocol fourth network header at least including said first protocol fourth network first terminal address.

Preferably, the registration method includes in said step d) decapsulating said encapsulated second protocol second network first terminal foreign address from said first protocol fourth network header.

Preferably, the registration method includes in said step d) storing of said second protocol second network first terminal foreign address.

In accordance with the invention in claim 1, in the registration method, a mapping correlation is stored in a mapping table between said first protocol fourth network first terminal address and said second protocol second network first terminal foreign address.

Preferably, in the registration method in said step b) said first protocol first tunnel between said first terminal and said first gateway is set up through said fourth network, said second gateway, and said first network.

Preferably, in the communication method of claim 6 a second protocol third network second terminal address is distributed from a second protocol address distribution unit to said first terminal.

Preferably, the communication method includes encapsulating of at least said communication information with a second-protocol header at least including a second protocol second network first terminal origin address and a second protocol third network second terminal address, and with a first protocol fourth network header at least including a first protocol fourth network first terminal address and a first protocol first network first gateway address.

Preferably, the communication method includes decapsulating said communication information at least from said first protocol fourth network header; and encapsulating said decapsulated communication information with a first protocol first network header at least including a first protocol first network third gateway address.

Preferably, the communication method includes decapsulating said communication information at least from said first protocol first network header.

Preferably, in the communication method a second protocol second network first terminal origin address is distributed from a second protocol address distribution unit to said second terminal.

Preferably, in the communication method at least said communication information is encapsulated at least with a second protocol third network header at least including a second protocol third network second terminal address (CHA-6-3) and said second protocol second network first terminal origin address (MHA-6-2-ORIG).

Preferably, the communication method includes encapsulating of at least said communication information with a first protocol first network first header at least including a first protocol first network first gateway address.

Preferably, in the communication method said communication information is decapsulated at least from said first protocol first network first header; and said decapsulated communication information is transmitted through said second network to a home agent of said second network.

Preferably, in the communication method said decapsulated communication information is encapsulated at least with a second protocol second network first terminal foreign address.

Preferably, in the communication method said encapsulated communication information is transmitted through said second network to said first gateway.

Preferably, the communication method includes encapsulating of at least said communication information with a first protocol first network second header at least including a first protocol first network first gateway address and a first protocol fourth network first terminal address.

Preferably, the communication method includes decapsulating said communication information at least from said first protocol first network second header.

Preferably, in the communication method said first protocol fourth tunnel between said first gateway and said first terminal is set up through said first network, said second gateway, and said fourth network.

Preferably, the mobile communication terminal used in said system of claim 21 further comprises a generating unit for generating a second protocol second network mobile communication terminal foreign address;

Preferably, the mobile communication terminal further comprises a transmitting unit for transmitting at least said second protocol second network mobile communication terminal foreign address to said home agent through said first-protocol tunnel.

Preferably, the mobile communication terminal further comprises a receiving unit for receiving a first protocol fourth network mobile communication terminal address from a first-protocol address distribution unit.

Preferably, in the mobile communication terminal in said generating unit said first protocol fourth network mobile communication terminal address is used for generating said second protocol second network mobile communication terminal foreign address.

Preferably, said mobile communication terminal further comprises a storage unit for storing at least a second protocol second network mobile communication terminal origin address, a second protocol second network home agent address, and a first protocol first network first gateway address.

Preferably, in the mobile communication terminal said second protocol second network mobile communication terminal origin address, said second protocol second network home agent address, and said first protocol first network first gateway address are permanently stored in said storage unit.

Preferably, the mobile communication terminal further comprises an encapsulating unit for encapsulating at least said second protocol second network mobile communication terminal foreign address with a first protocol fourth network header at least including said first protocol fourth network mobile communication terminal address.

Preferably, in the mobile communication terminal said encapsulating unit is further adapted to encapsulate at least a communication information with a second-protocol header at least including said second protocol second network mobile communication terminal origin address and a second protocol third network other terminal address, and with a first protocol fourth network header at least including said first protocol fourth network mobile communication terminal address and a first protocol first network first gateway address.

Preferably, the mobile communication terminal further comprises a decapsulating unit for decapsulating a communication information received from said second terminal at least from a first-protocol header.

Preferably, in the mobile communication terminal said tunnel set up unit for setting up a first-protocol tunnel between said mobile communication terminal and said first gateway is adapted to set up said first-protocol tunnel through said fourth network, said second gateway, and said first network.

The gateway according to 34 comprises a first tunnel set up unit for setting up a first-protocol tunnel between said gateway and said first terminal, and a second tunnel set up unit for setting up another first-protocol tunnel between said gateway and said third gateway.

Preferably, the gateway further comprises a storage unit for storing a first protocol fourth network first terminal address and a second protocol second network first terminal foreign address.

Preferably, in the gateway said first protocol fourth network first terminal address and said second protocol second network first terminal foreign address are stored in a mapping table.

Preferably, in the gateway in said mapping table a mapping correlation is stored between said first protocol fourth network first terminal address and said second protocol second network first terminal foreign address.

Preferably, in the gateway said first tunnel set up unit for setting up a first-protocol tunnel between said gateway and said first terminal is adapted to set up said first-protocol tunnel through said first network, said second gateway, and said fourth network.

Preferably, in the communication system said first terminal further comprises a storage unit for storing at least said second protocol second network first terminal origin address, a second protocol second network home agent address of said home agent, and a first protocol first network first gateway address of said first gateway;

Preferably, in the communication system said first gateway comprises a storage unit for storing a first protocol fourth network first terminal address and a second protocol second network first terminal foreign address.

Preferably, in the communication system said second protocol second network addresses and said second protocol third network addresses are selected from a common address range of said second protocol; and said first protocol first network addresses and said first protocol fourth network addresses are selected from a common address range of said first protocol.

The invention, according to further aspects, also comprises a program according to claim 39 a data carrier having computer readable code embodied therein according to claim 40.

Further advantageous embodiments and improvements of the invention may be taken from the dependent claims. Furthermore, it should be noted that the invention comprises further embodiments and examples which result from a combination of steps and features which have been separately described in the specification and the claims.

Furthermore, it should be noted that what is described hereinafter is only considered to be the best mode of the invention as currently conceived by the inventors. However, the invention might comprise other embodiments which may be derived by the skilled person on the basis of the teachings herein.

## BRIEF DESCRIPTION OF THE DRAWINGS

In the drawings:

Fig. 1 shows an overview of a communication system SYS comprising a plurality of networks which are implemented using different protocol versions such as IPv4 and IPv6;

Fig, 2a shows a communication system SYS in which a first terminal T1* roams to a foreign fourth network PV4 and communicates with a second terminal T2 of a third network PV4** wherein the fourth and third networks as well as a second network PV4* are implemented using the same first protocol IPv4;

Fig. 2b    shows a communication system SYS similar as in Fig. 2a wherein the second GV6-1, third GV6-2 and fourth GV6* networks are implemented using a second protocol IPv6 and are interconnected through gateways GW1, GW2, GW3 to a first network IN which is implemented using a first protocol IPv4;

Fig. 3    shows a communication system SYS in accordance with the principle of the invention in which a first terminal MH moves from a second protocol IPv6 home network to a first protocol IPv4 foreign network and communicates with a second terminal CH registered in a second-protocol IPv6 network GV6-2 which is interconnected to a first-protocol IPv4 first network IN through a gateway GW3;

Fig. 4a    shows a communication system SYS, a mobile communication terminal MH, a home network gateway HNGW and a foreign network gateway FNGW for providing communication between the first terminal MH and the corresponding second terminal CH through tunnels TUN' and TUN'';

Fig. 4b    shows a block diagram of the home network gateway HNGW in accordance with the principle of the invention;

Fig. 4c    shows a block diagram of the mobile communication terminal MH in accordance with the principle of the invention;

Fig. 4d    shows an embodiment of the registration method in accordance with the invention;

Fig. 4e    shows a communication method in accordance with the invention for a communication initiated by the first terminal MH;

Fig. 4f    shows a communication method in accordance with the invention when the second terminal CH initiates a communication;

Fig. 4g    is a diagram illustrating the set-up of tunnels for the registration and communication procedures in Figs. 4d, 4e, 4f, respectively;

Fig. 5a    shows a registration information (e.g. a packet) REG which is sent from the first terminal MH to the home network gateway HNGW during the registration method in accordance with Fig. 4d;

Fig. 5b    shows the acknowledgement information (e.g. a packet) ACK sent from the home network gateway HNGW to the first terminal MH in an acknowledgement procedure as principally shown in Fig. 10a;

Fig. 6    shows the mapping correlation HNGW-MC in the home network gateway HNGW and the mapping correlation HA-MC in the home agent HA at the beginning of the registration process in Fig. 10a;

Figs. 7-9    respectively show the entries of HNGW-MC and HA-MC during different stages of the registration method in Fig. 4d wherein Fig. 9 shows the contents of the mapping correlations MC at the end of the registration procedure and in the form in which they are used for setting up the tunnels during the communication methods;

Fig. 10a    shows detailed steps of the registration/acknowledgement procedure of the first terminal MH wherein steps S10a.1 to S10a.9 are used for setting the respective information in the mapping correlations of Figs. 6 to 9;

Fig. 10b    shows detailed steps of the step S10a.2 in Fig. 10a;

Fig. 10c    shows detailed steps of the step S10a.16 in Fig. 10a, the step S11b.12 of Fig. 11b and of step S12b.3 of Fig. 12b;

Fig. 10d    shows a concept of using an IPv4 address for creating an IPv6 address;

Fig. 10e    shows an embodiment of the concept shown in Fig. 10d according to the invention;

Fig. 11a    shows detailed steps of a communication procedure when the communication is initiated by the first terminal MH to the second terminal CH;

Fig. 11b    shows a continuation of the communication between MH → CH from Fig. 11a;

Fig. 11c    shows detailed steps of step S11a.4 of Fig. 11a and of step S12b.4 of Fig. 12b;

Fig. 12a    shows detailed steps of a communication procedure when the communication is initiated by the second terminal CH; and

Fig. 12b    shows the continuation of the communication between MH ← CH of Fig. 12b.

Fig. 13a    shows detailed steps of a further embodiment of a registration/acknowledgement procedure of the first terminal MH wherein steps S10a.1 - S10a.5, S10a.6', S10a.7', and S10a.8 - S10a.9 are used for setting the respective information in the mapping correlations of Fig. 6-9;

Fig. 13b    shows detailed steps of steps S10a.7' and S10a.11' of Fig. 13a, step S11a.9' of Fig. 14a, steps S11b.2' and S11b.7' of Fig. 14b, steps S12a.8' and S12a.13' of Fig. 15a, step S12b.9' of Fig. 15b;

Fig. 14a    shows detailed steps of another embodiment of a communication procedure when the communication is initiated by the first terminal MH to the second terminal CH;

Fig. 14b    shows a continuation of the communication between MH → CH from Fig. 14a;

Fig. 15a    shows detailed steps of another embodiment of a communication procedure when the communication is initiated by the second terminal CH;

Fig. 15b    shows the continuation of the communication between MH ← CH of Fig. 15a;

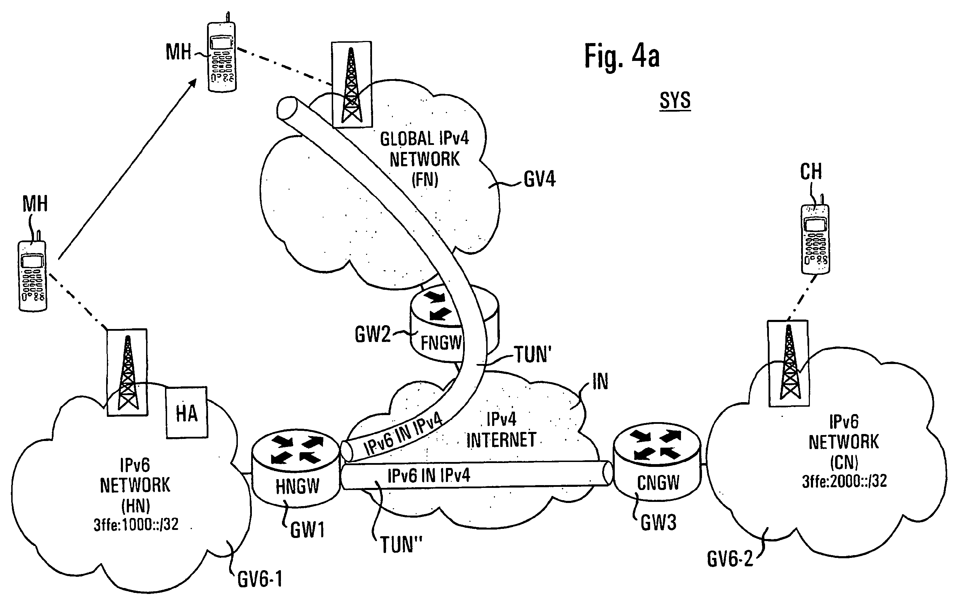

Hereinafter, some specific examples and embodiments of the invention will be described in the context of Internet protocol (IP) based networks such as those shown in Fig. 4a. However, it should be noted that the invention is not restricted to the specific use of these first (IPv4) and second (IPv6) Internet protocols. The communication system SYS may comprise another kind of different first and second protocols. Furthermore, the fourth network GV4 and the first network IN use the same first protocol IPv4 for addressing in the respective network and the fourth and first addresses in the fourth GV4 and first IN networks are selected from a common address range of said first protocol. This is signified with the expression "global" in the fourth network GV4. Similarly, the second GV6-1 and third GV6-2 networks are second-protocol IPv6 networks having the same "global" address range of said second protocol.

Furthermore, in the examples and embodiments below the following nomenclature is used. The first protocol is the IPv4 protocol. The second protocol is the IPv6 protocol. The first network IN is the IPv4 (global) Internet. The second network is the IPv6 network GV6-1. The third network is the IPv6 network GV6-2. The fourth network is the global IPv4 network GV4. Since the communication system SYS in Fig. 4a, representing the principle of the invention, considers a communication scenario in which a first mobile terminal MH moves away from its home network GV6-1 to a foreign network GV4 having a different protocol, the first network GV6-1 will hereinafter also be referred to as the home network HN. Similarly, the fourth network GV4 will be referred to as the foreign network FN.

As already explained above with reference to Fig. 3, the respective networks are interconnected through a first GW1, second GW2 and third GW3 gateway. As shown in Fig. 4a, the first gateway GW1 will hereinafter also be referred to as the home network gateway HNGW, the second gateway GW2 will also be referred to as the foreign network gateway FNGW. The third gateway GW3 will hereinafter also be referred to as the corresponding network gateway CNGW.

Furthermore, in Fig. 4a one of the principles of the invention is shown, namely on the one hand the set up of a tunnel TUN' between the first terminal MH and the home network gateway HNGW through the fourth network GV4, the second gateway FNGW and the first network IN and on the other hand the set up of a tunnel TUN" between the home network gateway HNGW and the corresponding network gateway CNGW. As well known in the technical area to a skilled person, tunnels are set up in order to encapsulate information from one protocol into another protocol. For example, in the above described Fig. 2b the IPv6 information is encapsulated in an IPv4 tunnel. This encapsulation is performed respectively by the transmitting unit depending on the transmission direction.

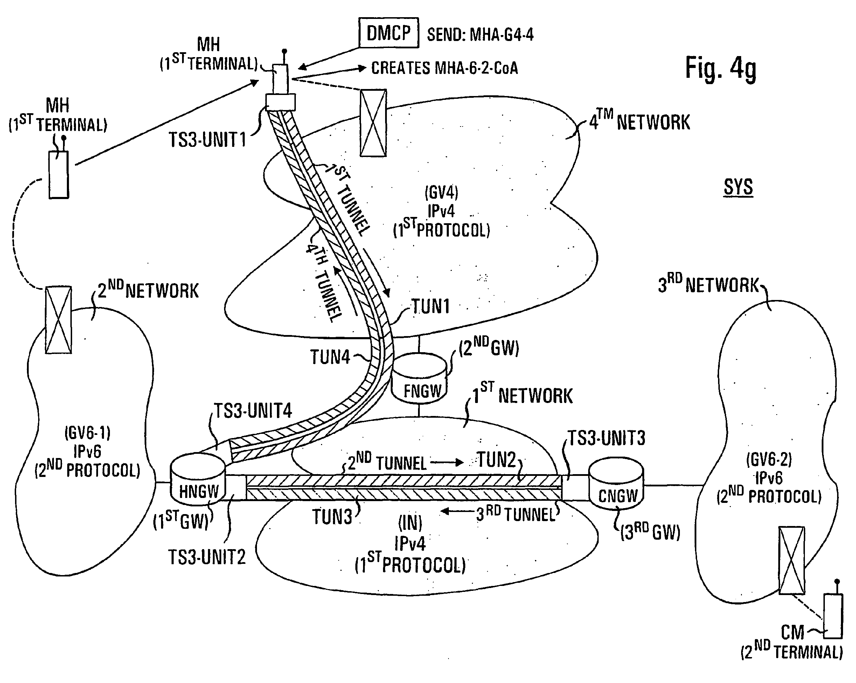

On the other hand, the receiving side performs a decapsulation of the information to retrieve the information which has been transmitted through the tunnel. In the description of the embodiments and the examples below the numbering of the tunnels will be performed in the order in which they respectively appear in a registration, acknowledgement, MH → CH communication and MH ← CH communication. The designation of tunnels and protocols may also be understood from the explanatory drawing in Fig. 4g.

During a registration procedure a first tunnel TUN1 will be set up between the first terminal MH and the home network gateway HNGW through the foreign network GV4, the foreign network gateway FNGW, and the IPv4 global network IN. If a communication from MH to CH takes place, there is also set up a second tunnel TUN2 between the home network gateway HNGW and the corresponding node gateway CNGW. On the other hand, if a communication is initiated by the corresponding terminal CH, in this communication the first tunnel to be set up will be a tunnel between CNGW and HNGW. For nomenclature reasons this tunnel is here designated to be the third tunnel TUN3 although it is in fact, for the communication from CH → MH, the first tunnel which is being set up. Likewise, in the CH → MH communication, the tunnel which is set up between HNGW and the first terminal MH is here designated to be the fourth tunnel TUN4 although it is in fact, for the communication from CH → MH, the second tunnel which is being set up.

## PRINCIPLE OF THE INVENTION

Hereinafter, the principle of the invention will be described with reference to Fig. 4a to Fig. 4g.

Basically, one aspect of the invention is the tunneling of the IPv6 packet with IPv4 header and use the home network gateway HNGW as the anchor point to redirect all packets sent either by MH or by CH, as shown in Fig. 4a. The invention proposes a new mechanism for MH moving from the IPv6 network to the global IPv4 network to establish the connection as a caller or as a callee. Additionally, it can also be used for registration of its current location to its home agent HA. Whilst in Fig. 4a the communication system SYS is shown to comprise two tunnels TUN' and TUN", these tunnels will be respectively used separately during the registration and communication. During the registration, the tunnel TUN' is used and during the communication all two tunnels TUN' and TUN" are used. As also shown in Fig. 4a, in the principle of the invention each tunnel TUN' and TUN" , is a first-protocol IPv4 tunnel for encapsulating second protocol IPv6 information.

As already described above with reference to Fig. 3, the communication system SYS includes a first network IN implemented using a first protocol IPv4, said first network IN being connected to a second network GV6-1 implemented using a second protocol IPv6, a third network GV6-2 implemented using said second protocol IPv6 and a fourth network GV4 implemented using said first protocol IPv4 through a respective first, second and third gateway HNGW, FNGW, CNGW, for providing communications between the first terminal MH of said second network GV6-1 and having roamed to said fourth network GV4 and a second terminal CH of said third network GV6-2; said first and second protocols IPv4, IPv6 being different; said first and fourth networks IN, GV4 using said first protocol IPv4 for addressing in said first and fourth networks IN, GV4; said second and third networks GV6-1, GV6-2 using said second protocol IPv6 for addressing in said second and third networks GV6-1, GV6-2; said first to fourth networks IN, GV6-1, GV6-2, GV4 respectively comprising first to fourth addresses; said second and third addresses being respectively second protocol second network addresses and second protocol third network addresses; said first and fourth addresses being respectively first protocol first network addresses and first protocol fourth network addresses.

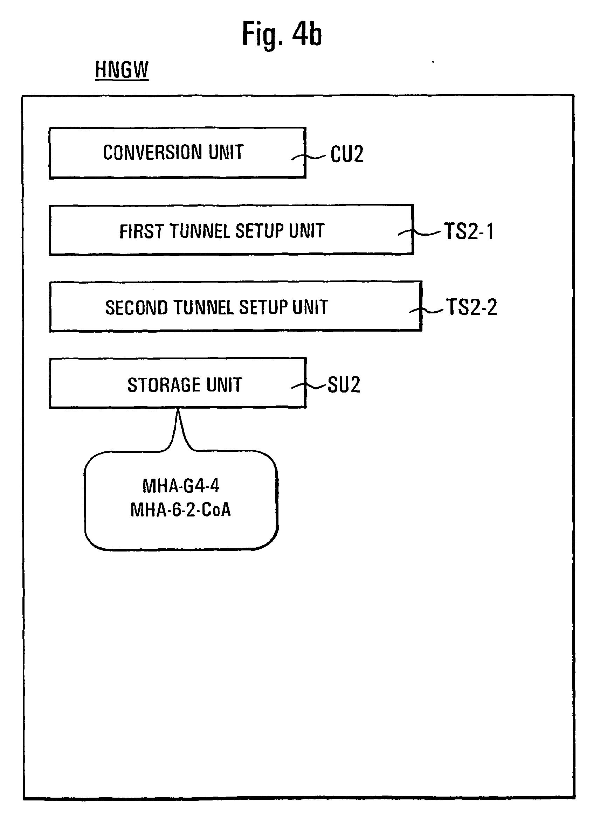

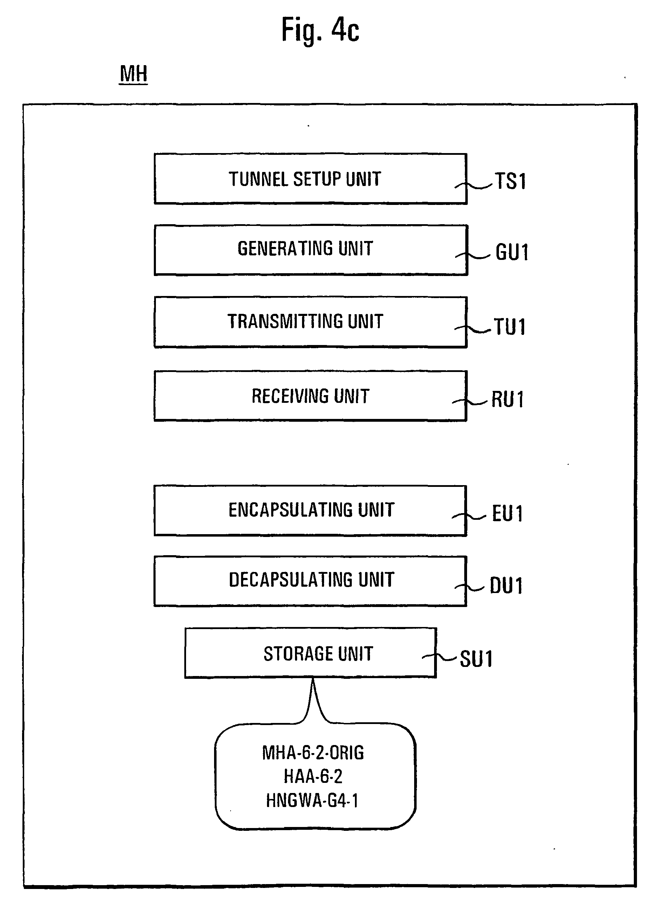

In order to carry out the inventive registration method, the MH → CH communication method and the MH ← CH communication method when the first terminal MH has roamed from the second network GV6-1 to said fourth network GV4, as shown in Fig. 4a, 4g, the home network gateway HNGW and the first terminal MH are constituted as shown in Figs. 4b and 4c.

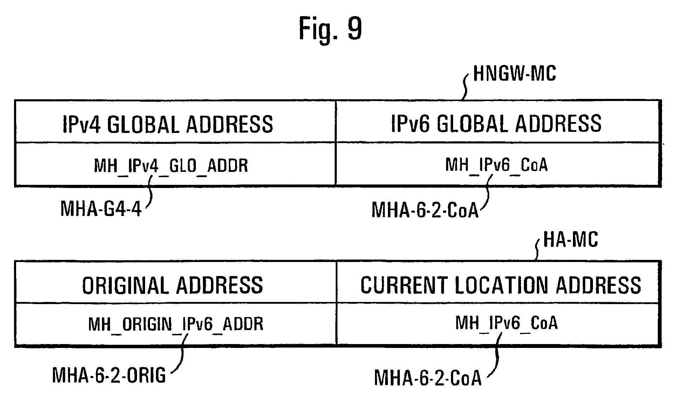

In particular, the home network gateway HNGW comprises a conversion unit CU2 adapted to convert between a first protocol fourth network first terminal address MHA-G4-4 and a second protocol second network first terminal foreign address MHA-6-2-CoA, which are shown in Fig. 9. Such information can for example be stored as a mapping correlation HNGW-MC in a storage unit SU2 of the home network gateway HNGW. The mapping table HNGW-MC of the storage unit SU2 contains an entry as shown in Fig. 9 for each first terminal station which has moved from its home network GV6-1 to the global network GV4. For easier understanding, Fig. 9 only shows one entry for the first terminal MH.

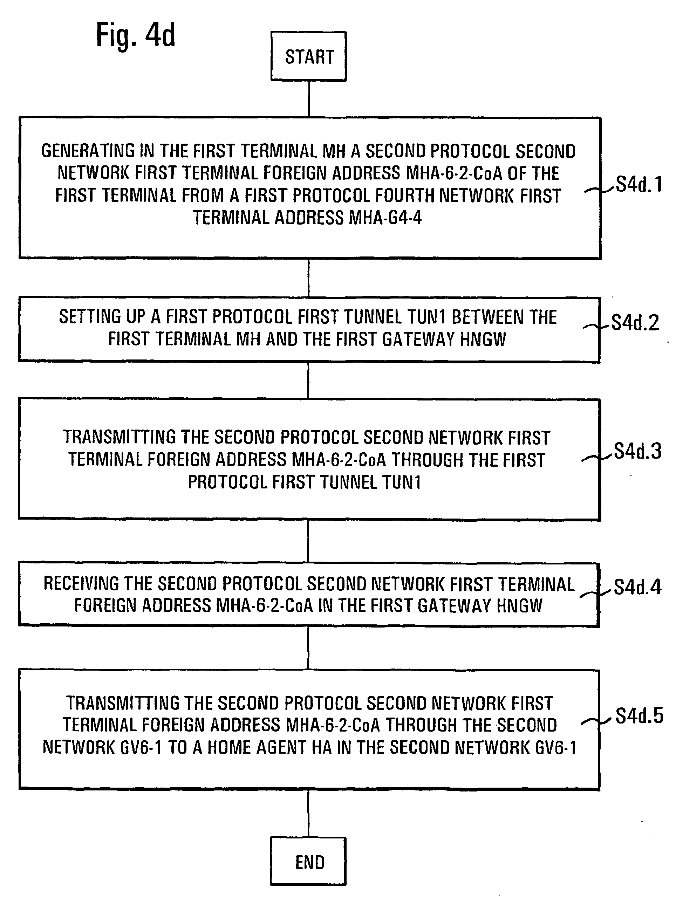

The entries in the mapping table or mapping correlation HNGW-MC in Fig. 9 will be set during the registration procedure which is illustrated in Fig. 4d. The usage and the setting of the mapping table HNGW-MC with the entries as shown in Fig. 9 is essential in order to carry out the communication methods between MH and CH. Therefore, hereinafter, the meaning of these entries shall be explained with more details.

The parameter MHA-G4-4 constitutes the first terminal address in the fourth network and in the first protocol. Using IPv4 in the fourth network, this parameter MHA-G4-4 could be constituted as MH_IPv4_GLO_ADDR, namely an IPv4 (first protocol) global address GLO_ADDR of the first terminal MH. It is called the first protocol "fourth network" first terminal address because it is the global address of the first terminal as used in the "fourth IPv4 network".

Similarly, the second protocol second network first terminal foreign address MHA-6-2-CoA is a second protocol IPv6 care-of-address CoA for the first terminal MH as used in the second network. Therefore, all such parameters regarding addresses in Fig. 9 have the following format:

```
protocol version - used in the network - referenced unit - address
```

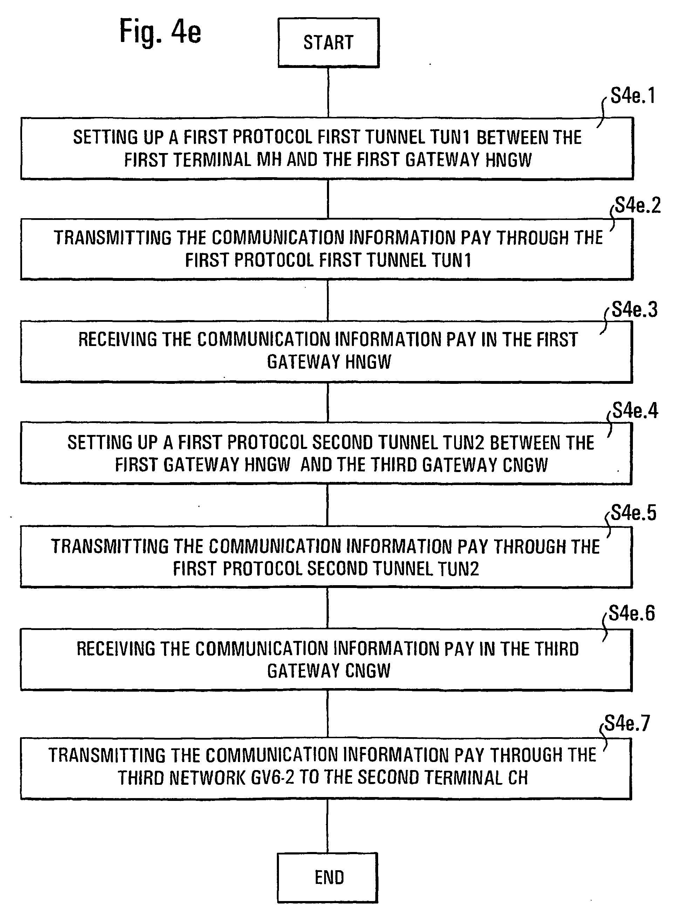

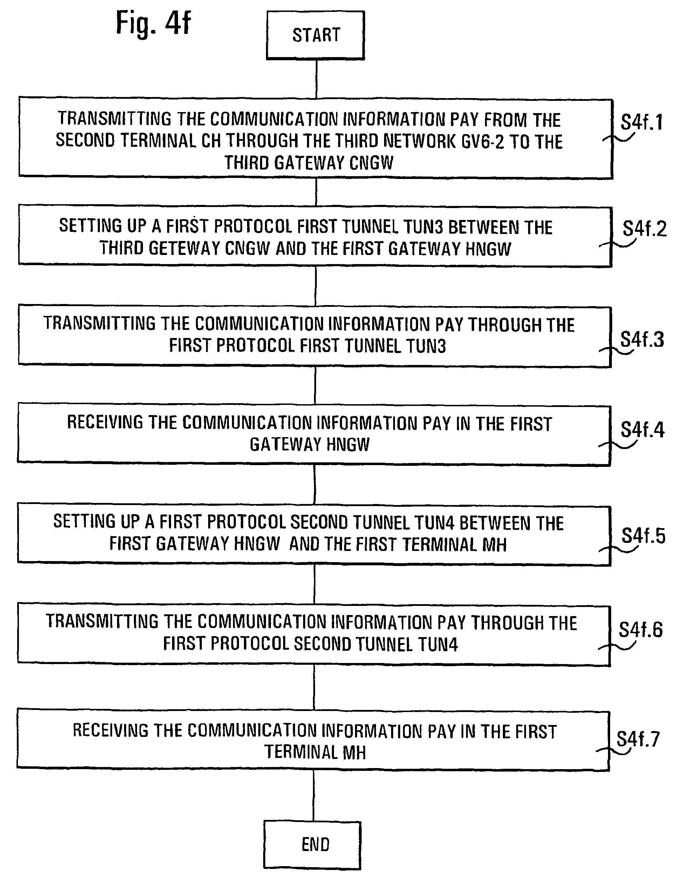

As mentioned above, the mapping table HNGW-MC in the home network gateway HNGW comprising the information/parameters as shown in Fig. 9 is essential in order to allow a communication between MH and CH as will be described hereinafter with reference to Fig. 4e (MH → CH)and Fig. 4f (MH ← CH).

In particular, and as will be explained below, the mapping table HNGW-MC is used in order to set up the tunnels TUN' and TUN''. Thus, the gateway HNGW also comprises a first tunnel set-up unit TS2-1 for setting up a first-protocol tunnel between said gateway HNGW and the first terminal MH. The gateway HNGW also comprises a second tunnel setting-up unit TS2-2 for setting up another first-protocol tunnel between said gateway HNGW and said third gateway CNGW. The usage of these tunnels for the communication will be described below.

A block diagram of the mobile communication terminal MH which has moved from its home network HN to the foreign network FN is shown in Fig. 4c. The mobile communication terminal MH is a dual-protocol terminal (dual-stack terminal) which means that it is capable of communicating using said first protocol, e.g. IPv4, and said second protocol, eg. IPv6. In addition to a transmitting unit TU1 for transmitting information (packets) and the receiving unit RU1 for receiving information (packets) the mobile communication terminal in accordance with the embodiment in Fig. 4c comprises a tunnel set-up unit TS1 for setting up a first protocol tunnel, e.g. TUN1 in Fig. 4g, between the mobile communication terminal MH and the first gateway HNGW through the fourth network GV4, the second gateway FNGW, and the first network IN. This first protocol tunnel TUN1 is used in the registration method and in the MH ← CH communication method.

In particular, the transmitting unit TU1 of the mobile communication terminal MH is adapted for transmitting at least a so-called second protocol second network mobile communication terminal foreign address MHA-6-2-CoA, as shown in Fig. 9, to said home agent HA through said first protocol tunnel TUN1. Furthermore, the receiving unit RU1 is adapted for receiving a first protocol fourth network mobile communication terminal address MHA-G4-4 from a first-protocol address distribution unit DHCP as schematically shown in Fig. 4g. It is pointed out that the invention is not limited to the use of DHCP (Dynamic Host Configuration Protocol) in the first-protocol address distribution unit but also other protocols can be used for assigning addresses within the invention. The aforementioned address MHA-6-2-CoA and MHA-G4-4 will be explained below with more details regarding the registration method.

The mobile communication terminal MH also comprises a generating unit GU1 for generating the second protocol second network mobile communication terminal foreign address MHA-6-2-CoA. In accordance with one embodiment, the generating unit GU1 generates the second protocol second network mobile communication terminal foreign address MHA-6-2-CoA by using the first protocol fourth network mobile communication terminal address MHA-G4-4.

A storage unit SU1 is provided also for storing at least the second protocol second network mobile communication terminal origin address MHA-6-2-ORIG, a second protocol second network home agent address HAA-6-2 and a first protocol first network first gateway address HNGWA-G4-1.

In particular, the storage unit SU1 permanently stores the second protocol second network mobile communication terminal origin address MHA-6-2-ORIG, the second protocol second network home agent address HAA-6-2 and the first protocol first network first gateway address HNGWA-G4-1.

An encapsulation unit EU1 is generally adapted for encapsulating second protocol (IPv6) transmission information with a IPv4 header. Since "encapsulation" is a part of the setting up of the first tunnel TUN1, the encapsulating unit EU1 may also be viewed to be part of the tunnel set-up unit TS1 of the mobile terminal MH. Finally, the mobile terminal MH comprises a decapsulating unit DU1 for decapsulating a communication information PAY received from the corresponding terminal CH at least from a first-protocol IPv4 header. That is, the decapsulating unit DU1 strips off the header from the communication information PAY in order to retrieve the payload communication information PAY.

The special information which will be encapsulated with a header by the encapsulating unit EU1 will hereinafter be described with reference to the registration and MH → CH communication method in Fig. 4d (registration) and Fig. 4e (MH → CH communication).

It should be noted that one of the novel features of the mobile communication terminal MH for allowing the registration and communication is the fact that the mobile communication terminal MH is capable of communicating using the first protocol IP4 as well as the second protocol IP6, and that the mobile communication terminal MH can set up the first protocol tunnel TUN1 by the tunnel set-up unit TS1.

The setting up of the tunnel TUN1 - during registration and communication - is enabled using the information (parameters) stored in the storage unit SU1, preferably, as shown in Fig. 4c, by using the second protocol second network mobile communication terminal origin address MHA-6-2-ORIG, the second protocol second network home agent address HAA-6-2 and the first protocol first network first gateway address HNGWA-G4-1.

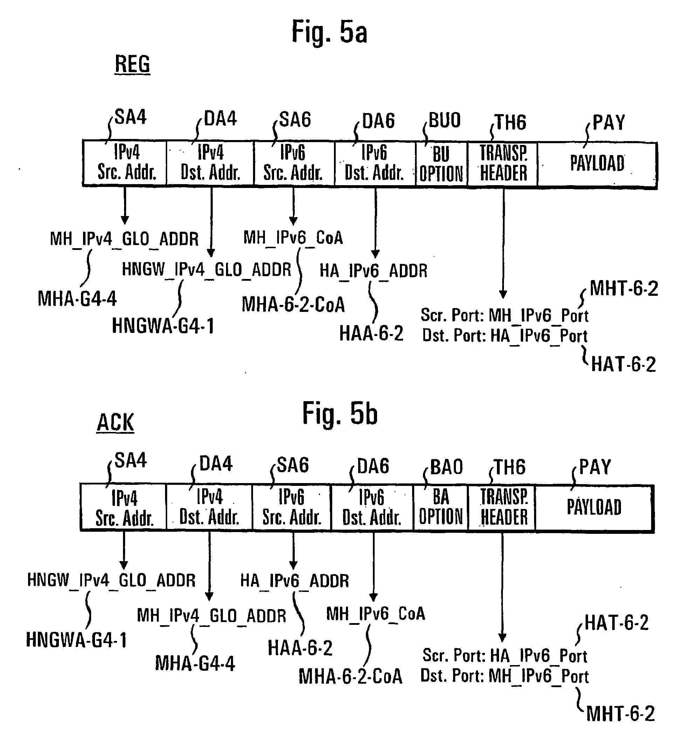

Preferably, the storage unit SU1 permanently stores the aforementioned addresses. Thus, from the basic concept of MIPv6, the aforementioned two addresses must permanently be stored in MH as its IPv6 home agent address HA_IPv6_ADDR and its IPv6 address itself MH_ORIGIN_IPv6_ADDR, which are for example shown in the registration packet REG in Fig. 5a. Furthermore, the IPv4 global address of the gateway HNGW corresponding to the MH home network must be permanently stored in the first terminal MH. This first protocol first network first gateway address HNGW_IPv4_GLO_ADDR is also shown in the registration packet REG in Fig. 5a.

Furthermore, in order to enable the registration and communication procedures, some routing protocol is necessary which can exchange the IPv6 reachability information between each gateway interconnected between IPv6 islands and IPv4 Internet. One example for the routing protocol which can be used in the present invention is the extension of Border Gateway Protocol (BGP).

## REGISTRATION OF THE MOBILE HOST MH

Fig. 4d shows an embodiment of the registration method in accordance with the invention. Essentially, the registration is carried out such that the second protocol second network first terminal foreign address MHA-6-2-CoA - which is generated in the mobile terminal MH - is stored in the home agent HA of the second network GV6-1 (the home network HN of the first terminal MH) in association with the second protocol second network first terminal origin address MHA-6-2-ORIG as shown with the mapping correlation HA-MC in Fig. 9. This association of mapping in the home agent HA between the original address and the current location address is necessary because for any communication between MH and CH a current location address in the second protocol IPv6 must be available because of the fact that the first terminal MH has roamed from its home network HN to its foreign network FN.

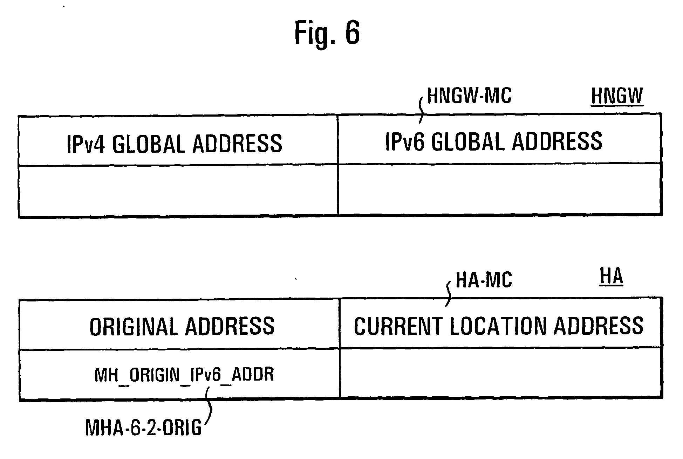

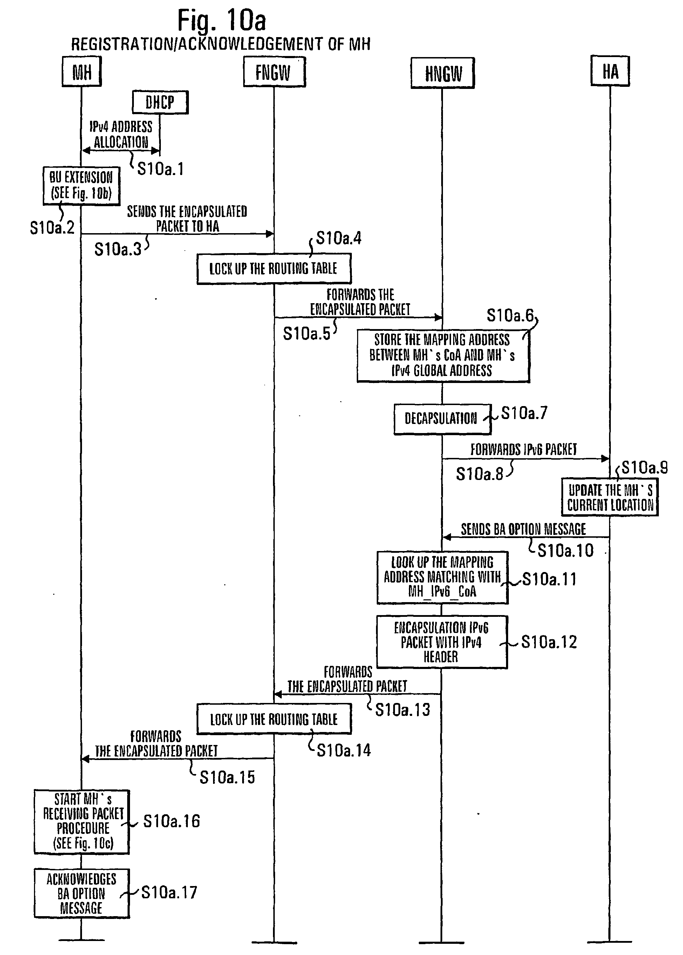

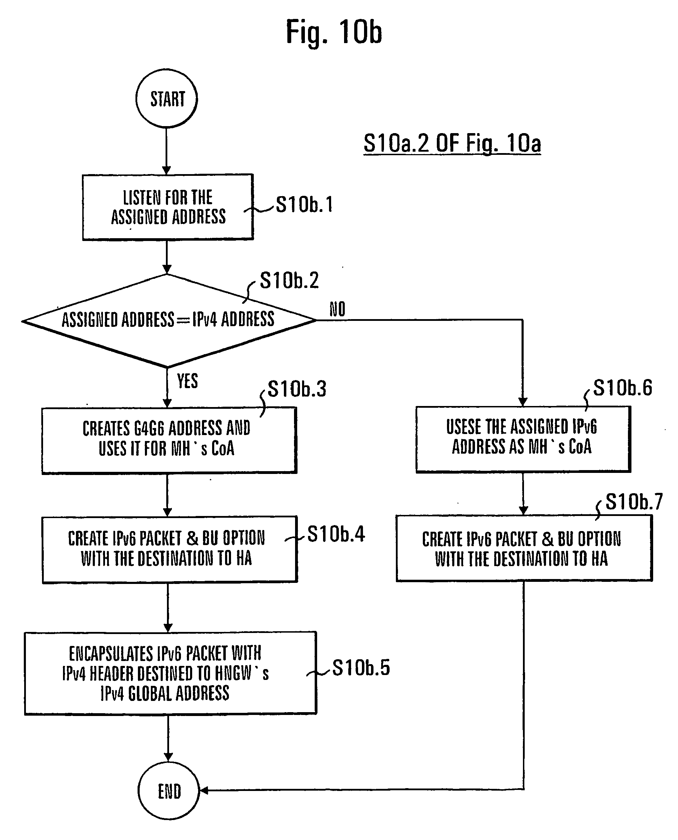

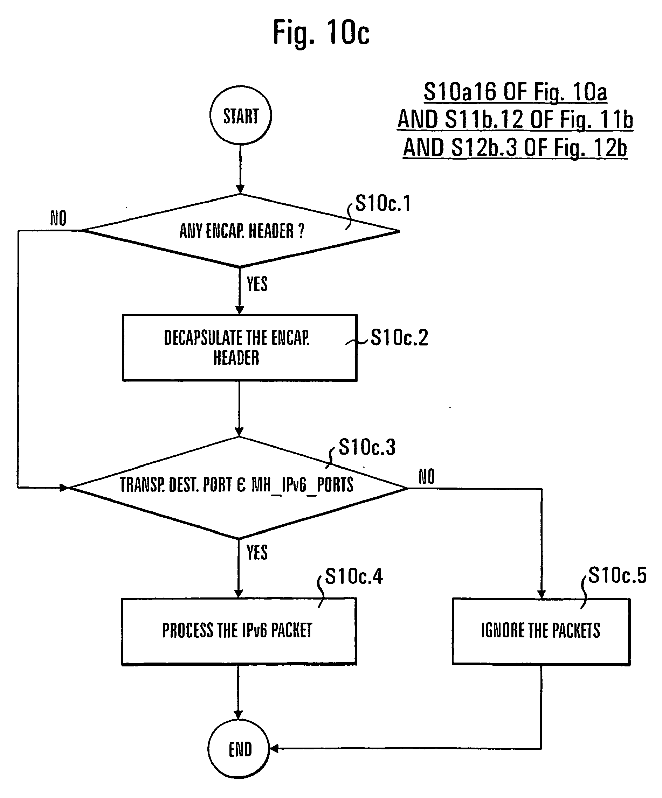

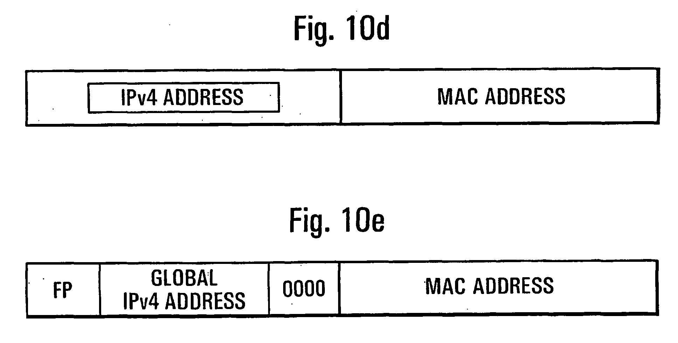

The registration method in Fig. 4d comprises steps S4d.1 to S4d.5. A more concrete embodiment how the mapping tables HNGW-MC and HA-MC in Fig. 6 will be filled during the registration method, is shown in the first part of Fig. 10a.

In step S4d.1 the first terminal MH generates a second protocol second network first terminal foreign address MHA-6-2-CoA of said first terminal from a first protocol fourth network first terminal address MHA-G4-4. MHA-6-2-CoA is a kind of second protocol IPv6 care-of-address for the first terminal MH in the fourth network GV4. It is essentially the foreign address of the first terminal as seen from the second network. The generation step S4d.1 may be carried out by the generating unit GU1 of the mobile host MH as shown in Fig. 4c.

In step S4d.2 the tunnel set-up unit TS1 sets up a first protocol first tunnel TUN1 (see Fig. 4g) between the first terminal MH and the first gateway HNGW through the fourth network GV4, the second gateway FNGW and the first network IN.

In step S4d.3 the second protocol second network first terminal foreign address MHA-6-2-CoA is transmitted through first protocol first tunnel TUN1 by the transmitting unit TU1 to the home network gateway HNGW.

In step S4d.4 a receiving unit (not shown in Fig. 4b) of the home network gateway HNGW receives the second protocol second network first terminal foreign address MHA-6-2-CoA.

The home network gateway HNGW also comprises a transmission unit (not shown in Fig. 4b) which transmit in step S4d.5 the second protocol second network first terminal foreign address MHA-6-2-CoA through the second network GV6-1 to the home agent HA of said second network GV6-1. Thus, during this binding update extension procedure the assigned address to the first terminal MH is detected and registered as current location in the home agent HA. The storing of the second protocol second network first terminal foreign address MHA-6-2-CoA in the home agent HA is essentially possible due to the set up of the first protocol IPv4 tunnel TUN1 between MH → HNGW through the fourth network GV4, the second gateway FNGW and the first network IN because otherwise a second protocol IPv6 information cannot be transmitted through the fourth and first networks GV4, IN which are implemented using the first protocol IPv4.

As will be explained below with more concrete details in the registration of Fig. 10a, the MH's care-of-address MH_IPv6_CoA can be generated as a G4G6 address. This will be described with more detail with reference to step S10a.2 of Fig. 10a and with reference to Fig. 10b. Therefore, hereinafter a special embodiment of the registration method as shown in Fig. 10a will be described. By contrast to the more general registration method of Fig. 4d, Fig. 10a also contains with steps S10a.10 to S10a.17 an acknowledgement procedure which is not shown with more general details in Fig. 4d.

Before the start of the registration procedure in Fig. 10a the mobile host terminal MH was firstly located in its home network HN and, if it is registered in its home network HN, the IPv6 original address MH_ORIGIN_IPv6_ADDR is registered in the home agent mapping correlation HA-MC as shown in Fig. 6. Fig. 6 shows the entries of the mapping correlations HNGW-MC and HA-MC before the start of the registration procedure in Fig. 10a. Then the mobile host MH moves from its home network HN to its foreign network FN (see Fig. 4a), wherein the IPv4 protocol is used. The foreign network FN is the global IPv4 network which means that the foreign network FN (fourth network GV4) is not only implemented using the same IPv4 protocol as the global IPv4 first network (Internet IN) but also selects its first protocol fourth network addresses from a common address range of said first protocol IPv4 as the global IPv4 first network IN does. Thus, after the MH has moved away to the FN, the registration method in Fig. 10a is used as a mechanism on how the home agent HA can be informed of the current location of MH. In step S10a.1 a first protocol address distribution unit DHCP (Dynamic Host Configuration Protocol) distributes to the first terminal MH the first protocol fourth network first terminal address MHA-G4-4. That is, in step S10a.1, after the MH has moved to the foreign network FN, the MH receives the new assigned global IPv4 address. In step S10a.2 the generating unit GU1 generates the second protocol second network mobile communication terminal foreign address MHA-6-2-CoA on the basis of the first protocol fourth network first terminal address MHA-G4-4. Fig. 10b shows the details of step S10a.2 of Fig. 10a.

Basically, in step S10a.2 the mobile host MH needs to be assigned a global IPv6 address which can be automatically created by the terminal after MH moves to another network. A basic concept of using an IPv4 address for creating an IPv6 address is the combination of an IPv4 and a MAC (Media Access Control) address as shown in Fig. 10d. Many types of such automatically created IPv6 addresses have already been proposed such as 6 to 4 address. In the present application a G4G6 address is used as the care-of-address MH_IPv6_CoA of the mobile host MH and the structure of this G4G6 address (the second protocol second network first terminal foreign address MHA-6-2-CoA) is shown in Fig. 10e. From Fig. 10e the specific value of the G4G6 format prefix (FP) needs to be assigned. Principally, the concept of G4G6 is almost the same as the 6 to 4 address structure and the differences are that the prefix is different and G4G6 has zero 16 bits in the SLA part of the 6to4 address.

Therefore, in step S10b.1 the roamed mobile host MH listens for the assigned IPv4 address, i.e. the IPv4 address generated by DHCP. In step S10b.2 it is checked whether the assigned address is an IPv4 address. If "yes" in step S10b.2, then in step S10b.3 a G4G6 address is created and is used as the care-of-address of the mobile host MH. Thus, in step S10b.3 the second protocol second network first terminal foreign address MHA-6-2-CoA is generated. One example should illustrate this G4G6 address. For example, if the first terminal MH gets the IPv4 address from DHCP in the IPv4 global network as

212.119.9.178

then the IPv6 care-of-address MH_IPv6_CoA of the mobile host MH will look like

FP:D477: 09B2:0000:MAC_MH.

This is one example of the second protocol second network first terminal foreign address MHA-6-2-CoA, also shown in Fig. 5a. Thus, steps S10a.1 and S10a.2 with steps S10b.1, S10b.2 and S10b.3 correspond to the step S4d.1 in Fig. 4d. The result is, that the second protocol IPv6 care-of-address has been generated to be transmitted to the home agent HA.

In step S10b.4 and step S10b.7 first an IPv6 packet & BU option with the destination to HA is created and then this IPv6 packet is encapsulated with transportation and IPv4 header destined to the HNGWs IPv4 global address. In steps S10b.4 and S10b.7, therefore, the registration packet REG as shown in Fig. 5a is generated. The registration packet REG comprises a communication information PAY, a transport header TH6 including a source and destination port MHT-6-2 and HAT-6-2 as well as BU option field BUO. Furthermore, in step S10b.4 the second protocol IPv6 home agent address HAA-6-2 and the second protocol second network first terminal foreign address MHA-6-2-CoA are added to complete the IPv6 packet.

The aforementioned transport header TH6 contains "transport type" specific information, for example in the form of so-called "ports" in the parameters MHT-6-2 and HAT-6-2. In IP based communication systems, in addition to the address specification a transport type specific information is used. Such a transport type specific information can be a port number when using IPv4/IPv6 type networks. That is, the addresses are necessary for routing purposes in the respective networks, i.e. an address may be a source or a destination address of each transmission information (packet) to be routed through the respective network. On the other hand, for transmitting the information within each network not only an address serving as a unique identifier is necessary but also a transport type specific information such as "Port". This "Port" specifies the type of transportation, for example in the transport layer of the seven layer OSI model. For example, several applications running on the same unit (terminal) may use different port numbers for different types of transportation. Such different types of transportation can for example be a UDP (User Datagram Protocol) transportation or a TCP (Transfer Control Protocol) transportation. Other types of transportation may be a serial or parallel transportation. In the present application, the reference numerals designating the respective transport type specific information are in the following format:

```
referenced unit - T (for "Transport") - protocol version -
                   used in network
```

In the present application, it is only necessary to transmit second-protocol IPv6 transport type specific information used in the second network GV6-1 and the third network GV6-2 through tunnels through the IPv4 first network IN and the IPv4 fourth network GV4 since there is no change of the first-protocol IPv4 transport type specific information in the first and fourth networks IN, GV4 during the transmitting procedures of information (packets) within and between these networks because both the first network IN and the fourth network GV4 are implemented using the same first IPv4 protocol and are using (global) addresses selected from a common address range of said IPv4 protocol for addressing the units within these networks.

The aforementioned IPv6 packet formed of the information SA6, DA6, BUO, TH6, PAY is then encapsulated in step S10b.5 with the IPv4 address header containing the IPv4 destination address DA4 and the IPv4 source address SA4. Thus, the encapsulating unit EU1 of the first terminal MH encapsulates at least the second protocol second network mobile communication terminal foreign address MHA-6-2-CoA with a first protocol fourth network header at least including said first protocol fourth network mobile communication terminal address MHA-G4-4.

Preferably, for example for communicating a communication information from the first terminal MH to another terminal CH, the encapsulating unit EU1 is further adapted to encapsulate at least a communication information PAY with a second-protocol header at least including said second protocol second network mobile communication terminal origin address MHA-6-2-ORIG and a second protocol third network other terminal address CHA-6-3, and with a first protocol fourth network header at least including said first protocol fourth network mobile communication terminal address MHA-G4-4 and a first protocol first network first gateway address HNGWA-G4-1.

Finally, if in Fig. 10b in step S10b.2 the assigned address is indeed not an IPv4 address ("no" in step S10b.2), then the assigned IPv6 address is used as the care-of-address of the mobile host MH in step S10b.6. In such a case step S10b.7 will create an IPv6 packet & BU option with the destination to HA. That is, after step S10b.5 a registration packet REG which at least includes the encapsulated second protocol second network mobile communication terminal foreign address MHA-6-2-CoA and the first protocol fourth network mobile communication terminal address MHA-G4-4 is provided. Furthermore, the registration packet REG includes, in the BU option field BUO, the IPv6 origin address MH_ORIGIN_IPv6_ADDR (= MHA-6-2-ORIG) of the mobile communication terminal MH in the home network GV6-1 because it will finally be used in the home agent mapping correlation HA-MC for placing the MH care-of-address MHA-6-2-CoA in the mapping correlation HA-MC. However, it is not used for the setting of the mapping correlation HNGW-MC.

After finishing the steps in Fig. 10b (after finishing step S4d.1 and S4d.2 in Fig. 4d), the registration packet REG is sent to the home network gateway HNGW through the set-up tunnel TUN1 (which is a result of the encapsulation) through the fourth network GV6, the second gateway FNGW and the first network IN. The registration packet REG is sent from MH with the destination of HA to inform HA of its current location by sending the binding update (BU) option message. The IPv6 packet in the registration packet REG has a source address and a destination address as MH_IPv6_CoA and HA_IPv6 ADDR, as shown in Fig. 5a. In the BU option message the MH_ORIGIN_IPv6_ADDR address is included. Since MH is in the fourth network in a global IPv4 network protocol, MH encapsulates the IPv6 packet with the IPv4 header. Since the fourth network GV4 and the first network IN are both implemented using the global IPv4 first protocol, the second gateway FNGW is able to look up the routing table in step S10a.4 when receiving the IPv4 packets from the first terminal MH in step S10a.3. This means, that the second gateway FNGW is able to read the IPv4 header including the IPv4 source address MH_IPv4_GLO_ADDR and the destination address HNGW_IPv4_GLO_ADDR. Thus, the second gateway FNGW (the foreign network gateway) in step S10a.5 just forwards the encapsulated packet according to the IPv4 destination address of the IPv4 header to the home network gateway HNGW. The use of the same global IPv4 protocol in both the fourth network GV4 and the first network IN is the reason why only one tunnel has to be established from the (roamed) first terminal MH through the fourth network GV4, the second gateway FNGW and the first network IN to the first gateway HNGW in order to transmit the encapsulated IPv6 packet from the roamed first terminal MH to the home network gateway HNGW.

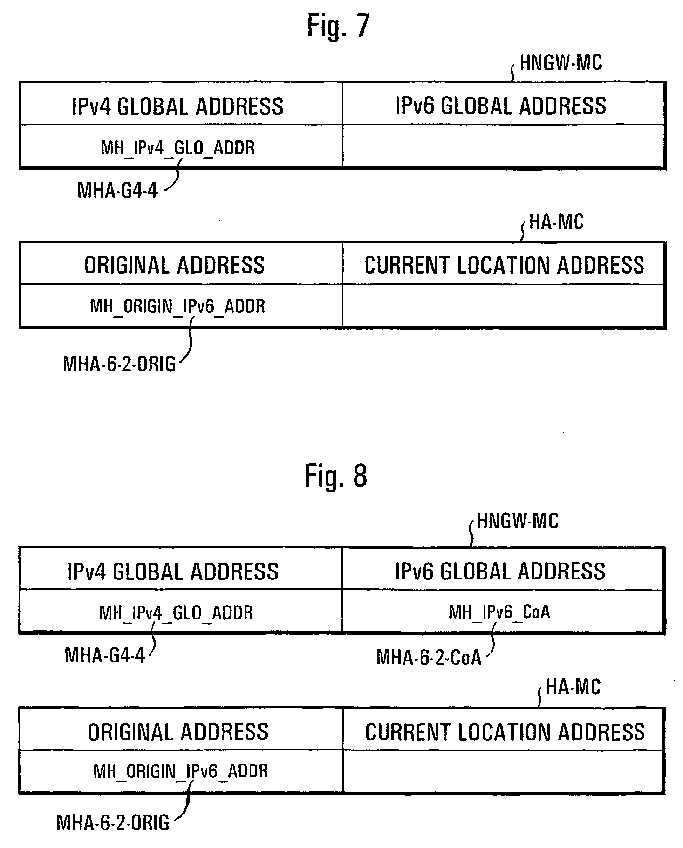

After forwarding the encapsulated registration packet REG from the foreign network gateway FNGW to the home network gateway HNGW in step SlOa.5, the mapping correlation HNGW-MC as shown in Fig. 7 is prepared. HNGW will store or update this entry of the address mapping for MH_IPv4_GLO_ADDR. That is, on one side of the mapping correlation HNGW-MC the parameter MHA-G4-4 of the registration packet REG will be stored as the IPv4 global address of the roamed first terminal MH, as shown in Fig. 7. Furthermore, in step S10a.6 the home network gateway HNGW stores the second protocol IPv6 second network GV6-1 first terminal MH foreign address MHA-6-2-CoA in the mapping table HNGW-MC, as shown in Fig. 8. Also in step S10a.6, a mapping correlation is stored between the first protocol fourth network first terminal address MHA-G4-4 and the second protocol second network first terminal foreign address MHA-6-2-CoA.

The usage of the mapping table HNGW-MC allows the communication between MH and CH. Comparing Fig. 10a and Fig. 4d, it is noted that step S4d.3 corresponds to steps S10a.3, S10a.4 and S10a.5. Step S4d.4 corresponds to steps S10a.6 and S10a.7.

In step S10a.7 the decapsulating unit of the home network gateway HNGW strips off the IPv4 portions SA4, DA4 from the registration packet REG and in step S10a.8 the IPv6 packet, now comprising only the portions SA6, DA6, BUO, TH6 and PAY, is forwarded to the home agent HA. Step S10a.8 corresponds to step S4d.5. When the IPv6 packet is received in the home agent HA, in step S10a.9 the mapping correlation HA-MC in the home agent HA (which, as shown in Fig. 8 still has not stored the current location address of the first terminal) is updated with the second protocol second network first terminal foreign address MHA-6-2-CoA. The home agent can find the corresponding entry in the correlation mapping table HA-MC by means of the MH_ORIGIN_IPv6_ADDR address which is contained in the BU option field BUO of the IPv6 packet sent from the home network gateway HNGW to the home agent HA. After step S10a.9, all mapping correlations HNGW-MC and HA-MC in the home network gateway HNGW and the home agent HA have been set. In principle this information can now be used during a MH ↔ CH communication. As preferred embodiment of the registration method, steps S10a.10 to S10a.17 in Fig. 10a can be used for acknowledging to the mobile host MH that the mapping correlations MC have been correctly set. To confirm the changing of the new MH's address, the home agent HA will send an IPv6 packet with the binding acknowledgement (BA) option message back to MH. This IPv6 packet is shown with the portions SA6, DA6, BAO, TH6 and PAY in Fig. 5b. As shown in Fig. 5b, the source address of this IPv6 packet is HA_IPv6_ADDR and its IPv6 destination address is MH_IPv6_CoA. Using the home network gateway mapping table HNGW-MC in step S10a.11 the received IPv6 packet will be encapsulated with the IPv4 header containing the first protocol fourth network first terminal address MHA-G4-4 as the destination address in step S10a.12 to result in the encapsulated packet ACK in Fig. 5b. The encapsulated packet ACK is sent to the first terminal MH through the first network IN, the second gateway FNGW and the fourth network GV4 in steps S10a.13, S10a.14 and S10a.15 because the home network gateway mapping correlation HNGW-MC has indicated, on the basis of the IPv6 destination address MH_IPv6_CoA that the new global IPv4 destination address is MH_IPv4_GLO_ADDR which is the first protocol fourth network first terminal address MHA-G4-4 of the first terminal MH roamed to the fourth network GV4. As already explained above, also for transmitting the acknowledging IPv6 packets from the first gateway HNGW to the first terminal MH through the first network IN, the second gateway FNGW and the fourth network GV4 there is only necessary one tunnel which is set up by encapsulating the IPv6 acknowledging packet with an IPv4 header containing the first protocol fourth network first terminal address MHA-G4-4 as destination address. The reason for this is that the first network IN and the fourth network GV4 are implemented using the same global IPv4 first protocol and global IPv4 addresses, i.e. addresses selected from a common address range of said IPv4 first protocol, are assigned to the first gateway HNGW (HNGW_IPv4_GLO_ADDR) and the first terminal MH (MH_IPv4_GLO_ADDR). Thus, the foreign network gateway FNGW is able to read the entries in the IPv4 header of the acknowledging packet in step S10a.14 which is designated with "look up the routing table" and the foreign network gateway FNGW simply forwards the encapsulated acknowledging packet ACK to the first terminal MH in step S10a.15. In step S10a.16, the mobile host MH strips off the IPv4 header and retrieves the acknowledgement BA option message in step S10a.17. Thus, the acknowledgement packet ACK takes, in steps S10a.11 to S10a.15 the reverse route with a reverse mapping compared to the registration packet REG.

For the decapsulation procedure step S10a.16 uses the steps S10c.1 to S10c.5 of Fig. 10c.

This decapsulation flow chart in Fig. 10c is likewise used when receiving any packet, for example an acknowledgement or transmission packet, during a communication between MH and CH.

In step S10c.1 the mobile host MH checks whether there are any encapsulating IPv4 headers. If there are no encapsulating IPv4 headers, then the procedure proceeds to step S10c.3 because the first terminal MH deems that a pure IPv6 packet has been received. If there is a IPv4 header in step S10c.1, then in step S10c.2 the IPv4 header is stripped off. In step S10c.3 it is checked whether the packet contains MH_IPv6_PORTS as transportation destination port. If there are no such ports, the packet is ignored in step S10c.5. If there are packets with such ports in step S10c.3, then the IPv6 packet is processed in step S10c.4, for example to extract the BA option message from the IPv6 packet in step S10a.17.

Thus, the registration (the acknowledgement) procedure in Fig. 10a enables to set in particular the home network gateway HNGW mapping correlation HNGW-MC to allow the conversion unit CU2 of the home network gateway HNGW to convert between the second protocol second network first terminal foreign address MHA-6-2-CoA and the first protocol fourth network first terminal address MHA-G4-4.

The mapping correlation HNGW-MC together with the home network mapping correlation HA-MC allow the communication between the roamed first terminal MH and the corresponding terminal CH in the communication system SYS as shown in Fig. 4a and Fig. 4g.

## MH → CH COMMUNICATION

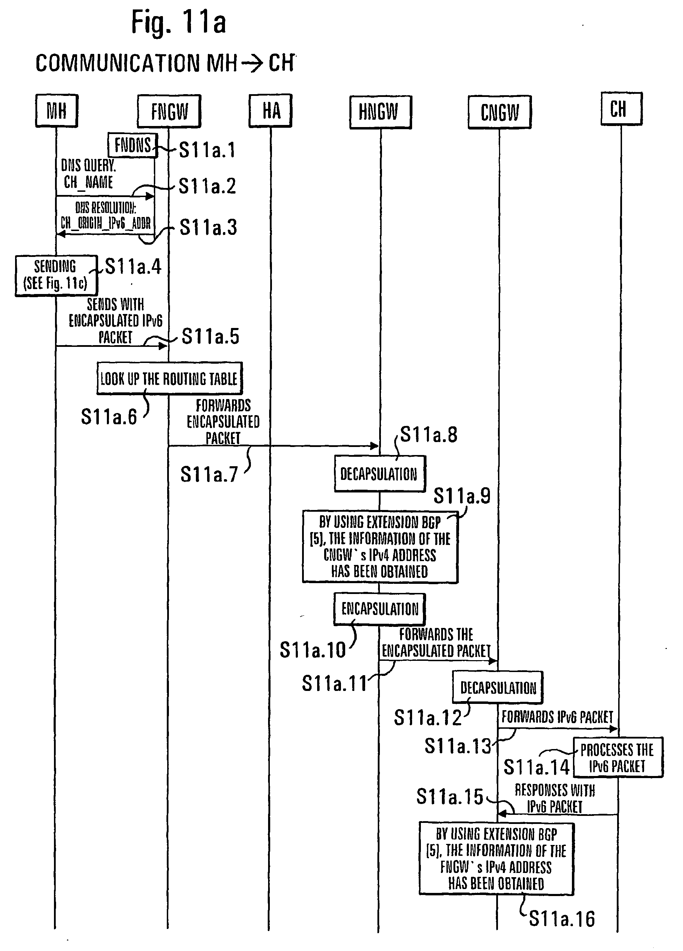

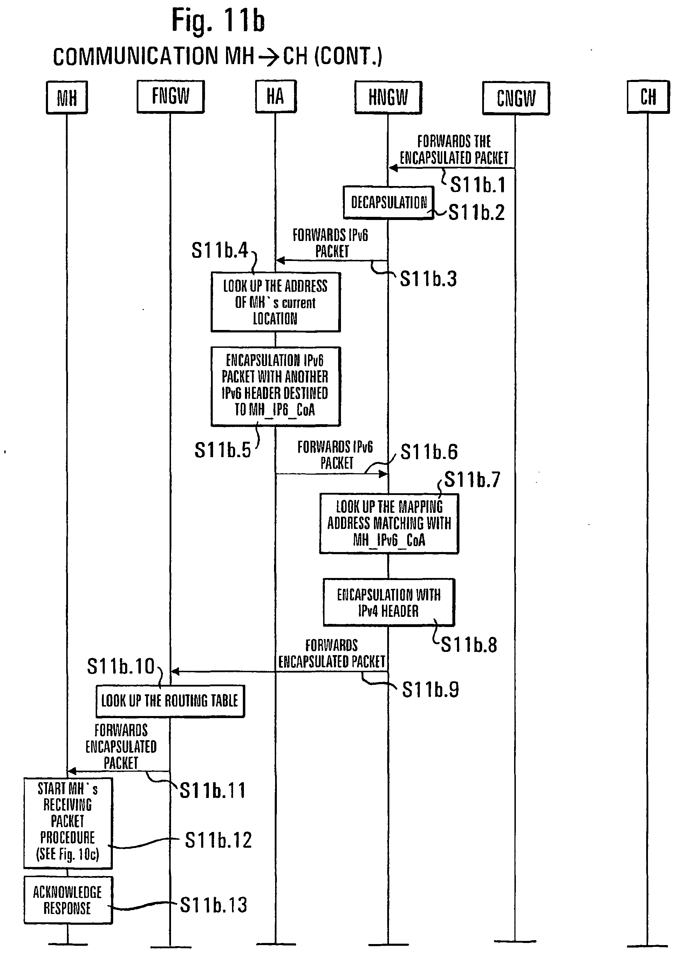

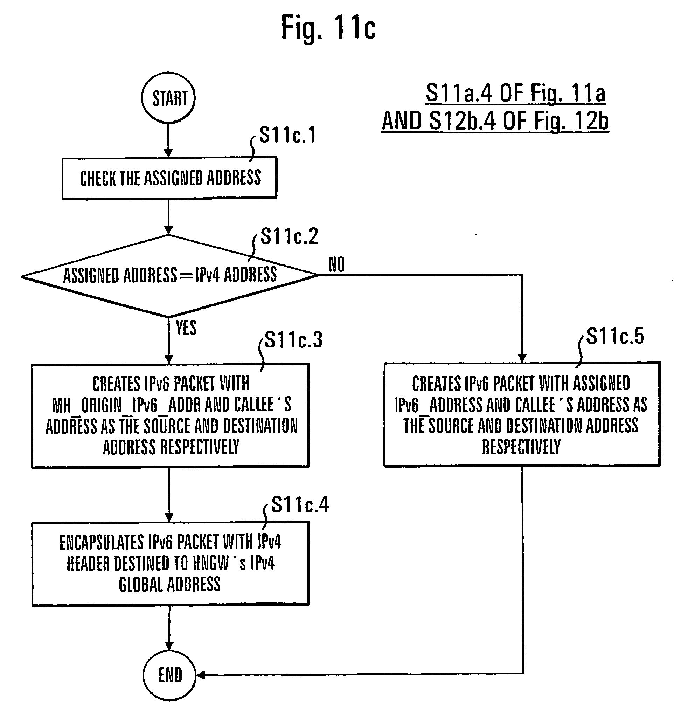

Fig. 4e shows a communication method if the first terminal MH initiates the communication to the second terminal CH in the communication system SYS shown in Fig. 4a. The usage of tunnels is shown in Fig. 4g for this communication of Fig. 4e. More concrete details of the steps S4e.1 to S4e.7 are shown in Fig. 11a and Fig. 11b together with Fig. 11c and Fig. 10c (Fig. 11b is a direct continuation of Fig. 11a).

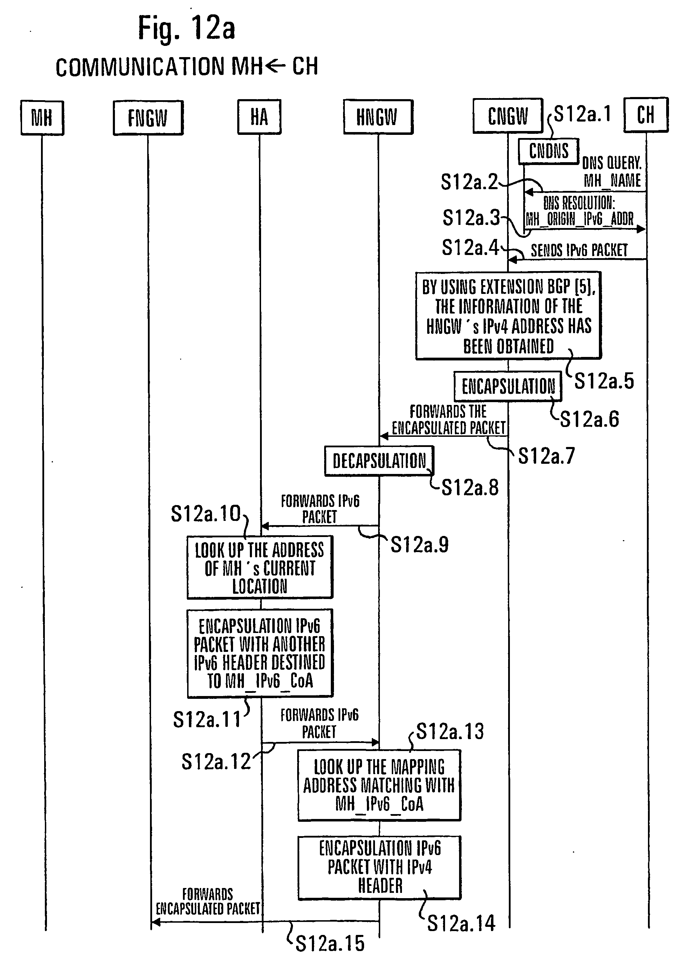

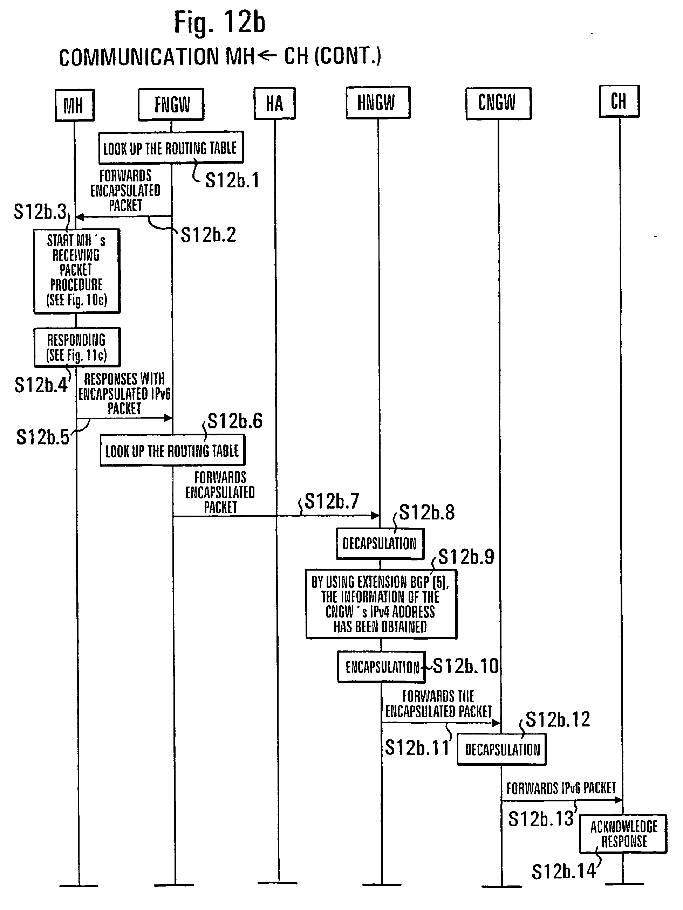

Fig. 4f shows a communication method if the second terminal CH initiates the communication to the first terminal MH. More concrete details of the steps S4f.1 to S4f.7 are shown in Fig. 12a and Fig. 12b (Fig. 12b is a direct continuation of Fig. 12a).

In step S4e.1 a first protocol first tunnel TUN1 is set up between the first terminal MH and the first gateway HNGW through the fourth network GV4, the foreign network gateway FNGW and the first network IN. In step S4e.2 the communication information PAY is transmitted through said first protocol first tunnel TUN1 and it is received in the first gateway HNGW in step S4e.3. In step S4e.4 a first protocol second tunnel TUN2 is set up by the first gateway HNGW between the home network gateway HNGW and the third gateway CNGW.

Thereafter, in step S4e.5, the communication information PAY is transmitted through said first protocol second tunnel TUN2 to the corresponding network gateway CNGW and it is received there in step S4e.6.

Finally, the corresponding network gateway CNGW transmits the communication information PAY through the third network GV6-2 to said second terminal CH in step S4e.7.

As explained above, the respective first and second tunnels TUN1 and TUN2 are set up by the respective tunnel set-up unit in the first terminal MH and the home network gateway HNGW. Essentially, the first terminal MH forms an IPv6 packet including the payload information PAY and this IPv6 packet is then encapsulated with an IPv4 header in order to be encapsulated in the respective tunnels.

Therefore, step S4e.1 can preferably include encapsulating of at least said communication information PAY with a second-protocol header at least including a second protocol second network first terminal origin address MH-6-2-ORIG and a second protocol third network second terminal address CHA-6-3 and with a first protocol fourth network header at least including a first protocol fourth network first terminal address MHA-G4-4 and a first protocol first network first gateway address HNGWA-G4-1.

Furthermore, step S4e.4 preferably includes decapsulating said communication information PAY at least from said first protocol fourth network header and encapsulating said decapsulated communication information PAY with a first protocol first network header at least including a first protocol first network third gateway address CNGWA-G4-1.

Finally, step S4e.6 preferably includes decapsulating said communication information PAY at least from said first protocol first network header.

In this manner the payload information PAY is provided inside an IPv6 packet and is encapsulated and decapsulated with IPv4 headers when being sent through the respective tunnels TUN1 and TUN2 as shown in Fig. 4g.

A special embodiment of the communication initiated by MH using the special IPv4 and IPv6 specifications in the mapping correlations HNGW-MC and HA-MC as shown in Fig. 9 is hereinafter described with reference to Fig. 11a, 11b, 11c, 10c.

As can be seen from Fig. 11a, in association with the fourth network GV4 there is provided preferably a Foreign Networks Domain Name Server FNDNS which can provide, for each corresponding terminal CH of the third network GV6-2, its CH address. Therefore, in step S11a.2 the first terminal MH sends a DNS request for CH's address to the foreign networks domain name server FNDNS and in step S11a.3 the FNDNS replies with the CH_ORIGIN_IPv6_ADDR. In step S11a.4 the first terminal MH sends a IPv6 packet to CH with MH_ORIGIN_IPv6_ADDR and CH_ORIGIN_IPv6_ADDR as the source and the destination address, respectively.

Preferably, step S11a.4 of Fig. 11a comprises the steps S11c.1 to S11c.5 of Fig. 11c. That is, in step S11c.1 the received address from FNDNS is checked and if in step S11c.2 the address received from FNDNS is determined to be a valid IPv4 address ("yes" in step S11c.2), then step S11c.3 creates the IPv6 packet with MH_ORIGIN_IPv6_ADDR and the callee's address as the source and the destination address, respectively. Before this IPv6 packet with the desired payload information PAY can be sent to CH, it needs to be encapsulated with an IPv4 header destined to HNGW's IPv4 global address as shown in step S11c.4.

If the received address from FNDNS is not a IPv4 address, then it is determined in step S11c.2 ("no" in step S11c.2) that the assigned address is an IPv6 address and thus, in step S11c.5, the IPv6 packet is created with the assigned IPv6 address and the callee's address as the source and destination address, respectively.

In step S11a.5, for the transmission through the first tunnel TUN1, the IPv6 packet is encapsulated with an IPv4 header destined to HNGW's IPv4 global address and is sent/forwarded via the first tunnel TUN1 through the fourth network GV4, the foreign network gateway FNGW and the first network IN to the home network gateway HNGW in steps S11a.5, S11a.6 and S11a.7, respectively. Thereby, in step S11a.6, the foreign network gateway FNGW looks up the routing table, i.e. for example reads the encapsulating IPv4 header destined to HNGW's IPv4 global address. This is done in very much the same manner as was done for the registration packet REG shown in Fig. 5a because the only difference between the transmission and registration is that now payload information PAY is actually transmitted to the corresponding host CH. Therefore, in step S11a.7, the foreign network gateway FNGW just forwards the encapsulated packet to the home network gateway HNGW. As already explained for the registration procedure, there is necessary only one first protocol first tunnel TUN1 for the steps S11a.5 to S11a.7 because both the fourth network GV4 and the first network IN are implemented using the same first protocol IPv4 and global IPv4 addresses selected from a common address range of said first protocol IPv4 are assigned to the three components (first terminal MH, foreign network gateway FNGW, home network gateway HNGW) constituting the beginning, middle and end point of the first protocol first tunnel TUN1.

In step S11a.8 the IPv4 header is stripped off (decapsulation). In step 11a.9, the HNGW's receiving and transmitting procedure is used. By using this procedure, step S11a.9 in principle is provided to obtain the information of the CNGW's IPv4 address by using a routing protocol which generally can exchange IPv6 reachability information between each gateway interconnected between IPv6 islands and the IPv4 Internet. A well known example of such a routing protocol is the extension Border Gateway Protocol (BGP). In step S11a.10, the packet is encapsulated with an IPv4 header destined to CNGW by using the obtained information of the CNGW's IPv4 address and the packet is forwarded in step S11a.11 to the corresponding network gateway CNGW where it is decapsulated in step S11a.12.

Finally, the IPv6 packet is forwarded to the corresponding host CH in step S11a.13 which processes the IPv6 packet in step S11a.14 in order to obtain for example the payload information PAY. It should be noted that steps S11a.2 to S11a. 14 is the first transmission of a packet from MH to CH and that further packets from MH will use the same procedure.

Of course, the communication between MH and CH also includes that CH responds to MH with an IPv6 packet in step S11a.15. Likewise, as explained above for step S11a.9, by using for example the extension Border Gateway Protocol (BGP), the information of the FNGW's IPv4 address can be obtained in step S11a.16 in the corresponding network gateway CNGW. In step S11b.1 the IPv6 packet is encapsulated with an IPv4 header destined to the home network gateway and is forwarded to the HNGW whereafter it is decapsulated in step S11b.2.

In step S11b.3, the IPv6 packet is forwarded to the home agent HA and HA will look up its table HA-MC. That is, the forwarded IPv6 packet in step S11b.3 will actually include an address information MH_ORIGIN_IPv6_ADDR (IPv6 origin address of mobile host MH in the home network) as a destination address of the IPv6 packet since the corresponding host CH does not know the current location address of MH. Thus, in step S11b.4, the mapping correlation HA-MC is looked up in order to obtain the current location address of MH. In step S11b.5 the IPv6 packet is encapsulated with another IPv6 header which now contains as a destination address MH_IPv6_CoA, i.e. the care-of-address of the (roamed) first terminal MH in the fourth network GV4.

Subsequently, the IPv6 packet is forwarded to the home network gateway HNGW in step S11b.6. Since the packets received in HNGW contain the care-of-address of the first terminal MH, HNGW can look up its mapping correlation HNGW-MC in step S11b.7 in order to translate MHA-6-2-CoA into MHA-G4-4, i.e. there is an address translation between an IPv6 address to another IPv4 global address in step S11b.7. After obtaining the information in step S11b.7, the IPv6 packet is encapsulated with an IPv4 address header using MHA-G4-4 as IPv4 destination address. Subsequently, in steps S11b.9 to S11b.11, the packet is forwarded to the first terminal MH through the first network IN, the foreign network gateway FNGW and the fourth network GV4. Thereby, as already explained above, the foreign network gateway FNGW in step S11b.10 looks up the routing table, i.e. for example reads the IPv4 header in order to forward the encapsulated packet from FNGW to the mobile host MH in step S11b.11. The mobile host MH starts in step S11b.12 a receiving procedure as shown in Fig. 10c. Fig. 10c is already described above with respect to the receipt of an acknowledgement packet ACK as shown in Fig. 5b. The receiving procedure for any other payload information packet is not different to this such that the same procedure and steps S10c.1 to S10c.5 as was used for the receipt of an acknowledgement packet, is performed for the receipt of the encapsulated packet which was forwarded to MH in step S11b.11.

It is possible, after step S11b.12, to send an acknowledgement packet back to the corresponding host CH in step S11b.13 in order to acknowledge safe receipt of the payload information. However, the transmission of an acknowledgement packet is by no means different to the forwarding of another payload packet and therefore the acknowledgement response sending in step S11b.13 is entirely similar to the sending of a packet beginning with step S11a.4 in Fig. 11a.

As can be seen from Fig. 11a and Fig. 11b, one of the core features of the preferred embodiment of the communication method MH → CH is the usage of the translation tables for addresses in steps S11b.4 and S11b.7. Thus, it will also be understood now that the communication method between MH → CH initiated by MH can only be carried out if the respective information in the mapping correlations HNGW-MC and HA-MC, as shown in Fig. 9, have been previously set during the registration procedure.

### CH → MH COMMUNICATION

Hereinafter, a communication initiated by CH will be generally described with reference to Fig. 4f. The tunnels may be seen from Fig. 4a and Fig. 4g.

As a first step in Fig. 4f, the communication information PAY is transmitted from the second terminal CH through the third network GV6-2 to the third gateway CNGW. In step S4f.2 a first protocol first tunnel which is called the third tunnel TUN3 in Fig. 4g is set up between the third gateway CNGW and the first gateway HNGW. In step S4f.3 the communication information PAY is transmitted through this first protocol first tunnel TUN3 to the home network gateway HNGW. The communication information PAY is received in the first gateway HNGW in step S4f.4 and in step S4f.5 a first protocol second tunnel TUN4, which is called the fourth tunnel in Fig. 4g, is set up between the first gateway HNGW and the first terminal MH. As will be understood, in step S4f.5 the translation table in HNGW and HA will be used as will be explained with more details later.

In step S4f.6 the communication information PAY is transmitted through this first protocol second tunnel TUN4. In step S4f.7 the communication information PAY is received in the first terminal MH.

As already mentioned above, the set up of the tunnels essentially means an encapsulation of an IPv6 packet with IPv4 headers. This type of encapsulation is possible due to the usage of the mapping table HNGW-MC and HA-MC as shown in Fig. 9.

Therefore, preferably, before step S4f.1 at least said communication information PAY is encapsulated at least with a second protocol third network header at least including a second protocol first network second terminal address CHA-6-3 and said second protocol second network first terminal origin address MHA-6-2-ORIG.

Furthermore, the step S4f.2 includes encapsulating of at least said communication information PAY with a first protocol first network first header at least including a first protocol first network first gateway address HNGWA-G4-1.

Furthermore, between steps S4f.4 and S4f.5 said communication information PAY is decapsulated at least from said first protocol first network first header and said decapsulated communication information PAY is transmitted through said second network GV6-1 to a home agent HA of said second network GV6-1.

Also preferably, said decapsulated communication information PAY is encapsulated at least with a second protocol second network first terminal foreign address MHA-6-2-CoA.

It is also preferred that said encapsulated communication information PAY is transmitted through said second network GV6-1 to said first gateway HNGW.

Further preferably, step S4f.5 includes encapsulating of at least said communication information PAY with a first protocol first network second header at least including a first protocol first network first gateway address HNGWA-G4-1 and a first protocol fourth network first terminal address MHA-G4-4.

Further, preferably, step S4f.7 includes decapsulating said communication information PAY at least from said first protocol first network second header.

Also preferably, in step S4f.5 said first protocol fourth tunnel TUN4 between the first gateway HNGW and the first terminal MH is set up through the first network IN, the second gateway FNGW and the fourth network GV4.

The encapsulated communication information PAY received in step S4f.4 is decapsulated from the IPv4 header in the home network gateway HNGW. Then, HNGW forwards the IPv6 packet to the home agent HA. HA will look up its table HA-MC. That is, the packet comprising the communication information PAY, the IPv6 header and the IPv4 header transmitted in step S4f.3 and received in the HNGW in step S4f.4 will actually include an address information MH_ORIGIN_IPv6_ADDR (IPv6 origin address of mobile host MH in the home network) as a destination address in the IPv6 header since the corresponding host CH does not know the current location address of MH. Thus, the mapping correlation HA-MC between the IPv6 origin address MH_ORIGIN_IPv6_ADDR of mobile host MH in the home network and the IPv6 foreign address MH_IPv6_CoA of mobile host in the visited foreign network is looked up in order to obtain the current location address of MH. Then, the home agent HA encapsulates the IPv6 packet with another IPv6 header which now contains as a destination address MH_IPv6_CoA, i.e. the care-of-address of the (roamed) first terminal MH in the fourth network GV4. Thereby, the IPv6 packet is redirected to the current location of the first terminal MH. After this redirection of the packet from HA, HA transmits the packet back to the HNGW. In step S4f.5, HNGW then sets up an IPv4 tunnel to the first terminal MH by encapsulating the IPv6 packet with an IPv4 header. This IPv4 header preferably comprises the global IPv4 address of the first terminal MH in the fourth network GV4 (the first protocol fourth network first terminal address MHA-G4-4) as destination address in the IPv4 address header according to the entry in the mapping table HNGW-MC.

From the steps in Fig. 4f it can be seen that it is essential that the information in Fig. 9 is available. In particular, the HNGW-MC mapping correlation is used in the communication between CH and MH since otherwise the packets to be transmitted by HNGW cannot be encapsulated (tunnelled) through the respective first network IN and the fourth network GV4.

A preferred embodiment of the communication method between MH ← CH initiated by the corresponding host CH is shown in Fig. 12a and 12b (Fig. 12b is a direct continuation of Fig. 12a).

As shown in Fig. 12a, with step S12a.1, there is provided a Correspondent Networks Domain Name Server CNDNS which provides to the corresponding host CH the location address of the first terminal MH in its home network HN (GV6-1). That is, since the corresponding host CH cannot know the current location of MH or any other terminal it wants to call, the only possibility is that the CNDNS provides the location address registered in the home agent HA of the first terminals home network HN (GV6-1). Therefore, in step S12a.2 the CH sends a DNS request for MH's address to CNDNS and in step S12a.3 the CNDNS replies with the MH_ORIGIN_IPv6_ADDR address of the first terminal MH which is of course stored in the home agent HA as original address (see Fig. 9). In step S12a.4 the corresponding host CH sends an IPv6 packet with payload information PAY to a corresponding node gateway CNGW. This packet is a IPv6 packet and it has as destination address MH_ORIGIN_IPv6_ADDR. In step S12a.5, at the border between CN and the IPv4 Internet, the gateway CNGW uses, for example, an extension BGP protocol to get the HNGW IPv4 global address. CNGW encapsulates in step S12a.6 the IPv6 packet with the IPv4 header destined to HNGW. Subsequently, in step S12a.7 the encapsulated packet is forwarded to the home network gateway HNGW where it is decapsulated in step S12a.8. The packet (which is now a IPv6 packet) is forwarded in step S12a.9 to the home agent HA. The home agent HA; in step S12a.10, obtains from the home agent mapping table HA-MC the current location address MH_IPv6_CoA which was assigned to the first terminal MH during its registration procedure.

In step S12a.11 the home agent HA encapsulates the IPv6 packet with another IPv6 header having as destination address MH_IPv6_CoA. In step S12a.12 this IPv6 packet is forwarded to HNGW.

In step S12a.13 the home network gateway HNGW looks up its mapping correlation HNGW-MC in order to obtain the address relating to the global IPv4 address of the (roamed) first terminal MH. That is, the information MHA-6-2-CoA contained in the received IPv6 packet is translated into MHA-G4-4. This translation is obviously necessary in order to encapsulate the IPv6 packet with the new IPv4 header in step S12a.14 (the information on the left-hand side in HNGW-MC of Fig. 9). In this manner, the next destination address is the roamed first terminal MH and therefore, in steps S12a.15, S12b.1 and S12b.2, the encapsulated packet is forwarded through the first network IN, the foreign network gateway FNGW and the fourth network GV4 to the first terminal MH (through the tunnel TUN4; Fig. 4g).

In step S12b.1 (Fig. 12b is a direct continuation of Fig. 12a) the FNGW looks up the routing table, i.e. for example reads the IPv4 header and then just forwards the packet to the mobile host MH in step S12b.2.

In step S12b.3 the mobile host MH starts a receiving procedure for the packet as was already explained with reference to Fig. 10c. Fig. 10c was above already described for the receipt of an acknowledgement packet and the procedure in step S12b.3 is not different when a normal "communication" packet is received. Therefore, a description of Fig. 10c is not repeated here.

In step S12b.4 the first terminal MH will send a response with an IPv6 packet back to CH. The source address of this IPv6 packet will be MH_ORIGIN_IPv6_ADDR instead of MH_IPv6_CoA, because information about MH_IPv6_CoA is not exchanged to other gateways. Again the steps in Fig. 11c described above for the sending of a packet in step S11a.4 of Fig. 11a, is used because at the stage of step S12b.4 there is no difference whether an original (in step S11a.4) or response (in step S12b.4) packet is transmitted. Therefore, the description of Fig. 10c for step S12b.4 is not repeated. However, it should be noted that in step S12b.4 a response packet is sent instead of an original packet.

As may be understood from a comparison of steps S11a.4 to S11a.14 with steps S12b.4 to S12b.14, there is no difference regarding the encapsulation and decapsulation whether an original packet (Fig. 11a) or a response packet (Fig. 12b) is transmitted from MH → CH. Therefore, it should be understood that steps S12b.4 to S12b.14 are corresponding to the steps S11a.4 to S11a.14 and the description is not repeated. The only minor difference is that in step S12b.14 the corresponding host CH will initiate an acknowledge response rather than just processing the IPv6 packet.

## FURTHER EMBODIMENTS

As already explained above for the embodiment of the registration/acknowledgement procedure of the (roamed) mobile host MH with respect to Fig. 10a, the home network gateway HNGW in step S10a.6 stores a mapping correlation HNGW-MC between the second protocol second network first terminal foreign address MHA-6-2-CoA and the first protocol fourth network first terminal address MHA-G4-4. Then, in step S10a.7, the decapsulating unit of the home network gateway HNGW strips off the IPv4 portions SA4, DA4 from the registration packet REG.

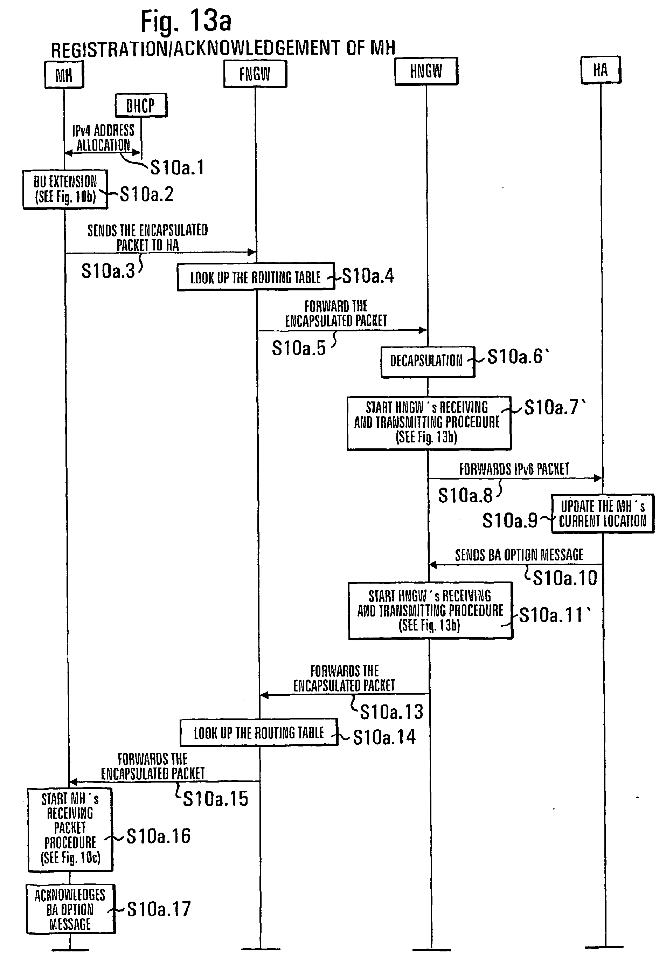

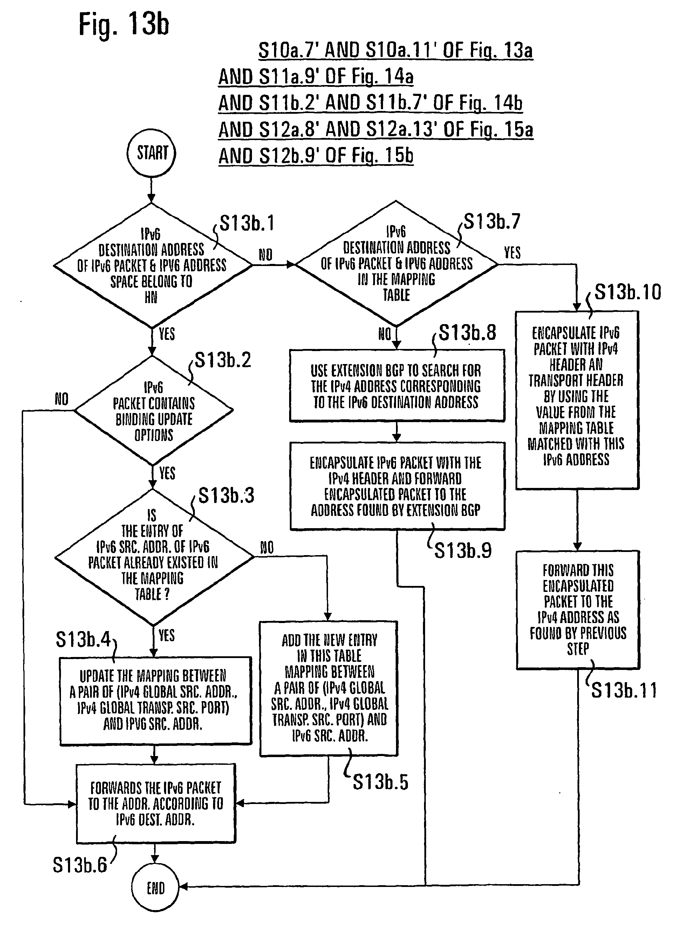

However, according to another embodiment, the registration/acknowledgement procedure of the mobile host MH can also be done as shown in Fig. 13a. The steps S10a.1 to S10a.5 of Fig. 13a are identical to steps S10a.1 to S10a.5 of Fig. 10a. Therefore, the same reference numerals are assigned to these steps in Fig. 13a and the description of these steps will not be repeated here. Step S10a.6' of Fig. 13a shows that the encapsulated packet forwarded from the foreign network gateway FNGW to the home network gateway HNGW in step S10a.5 is decapsulated. This means that in step S10a.6' the decapsulting unit of the home network gateway HNGW strips off the IPv4 portions SA4, DA4 from the registration packet REG. Then, in step S10a.7', the home network gateway HNGW starts its receiving and transmitting procedure as shown in Fig. 13b. The HNGW's receiving and transmitting procedure according to Fig. 13b in general will be described in the following.

In step S13b.1, it is checked whether the IPv6 destination address of the received IPv6 packet is an IPv6 address belonging to the IPv6 address space of the home network HN. If yes ("YES" in step S13b.1), it will be checked in step S13b.2 whether the IPv6 packet contains any Binding Update Options BUO. If no ("NO" in step S13b.2), the IPv6 packet is forwarded to the address according to the IPv6 destination address in step S13b.6. If yes ("YES" in step S13b.2), it is checked in step S13b.3 whether the entry of the IPv6 source address of the IPv6 packet already exists in the mapping table HNGW-MC. This means that it is checked whether there is an entry MHA-6-2-CoA (second protocol second network first terminal foreign address MH_IPv6_CoA) of a certain mobile host MH roamed to a foreign network FN. If no ("NO" in step S13b.3), a new entry is added in the home network gateway mapping correlation HNGW-MC mapping between the first protocol fourth network first terminal address MHA-G4-4 and the IPv6 source address. This means that in step S13b.5 a new mapping correlation is stored in the mapping table HNGW-MC between the second protocol second network first terminal foreign address MHA-6-2-CoA and the first protocol fourth network first terminal address MHA-G4-4. If the result of step S13b.3 is that there already exists an entry of the IPv6 source address of the received IPv6 packet in the mapping table HNGW-MC ("YES" in step S13b.3), then in step S13b.4 the mapping between the first protocol fourth network first terminal address MHA-G4-4 and the IPv6 source address is updated. This means that the values of the parameters MHA-6-2-CoA, MHA-G4-4 are updated. Also, if there was a change in at least one of these two parameters during the updating, the mapping correlation between the second protocol second network first terminal foreign address MHA-6-2-CoA and the first protocol fourth network first terminal address MHA-G4-4 is updated. After step S13b.4 and also after step S13b.5, the IPv6 packet is forwarded to the address according to the IPv6 destination address in step S13b.6. The above described portion of the HNGW's receiving and transmitting procedure according to Fig. 13b in particular concerns to the registration/acknowledgement procedure of the mobile host MH.

However, there is in principal also the possibility that the encapsulated packet forwarded to HNGW for example in step S10a.5 or in other steps of a registration procedure or a communication procedure and decapsulated from the IPv4 header for example in step S10a.6' has an IPv6 destination address which does not belong to the IPv6 address space of the home network HN ("NO" in step S13b.1). In this case, in the following step S13b.7 it is checked whether the IPv6 destination address of the IPv6 packet is an IPv6 address stored in the mapping table HNGW-MC. If no ("NO" in step S13b.7), in step S13b.8 for example the extension Border Gateway Protocol BGP is used to search for the IPv4 address corresponding to the IPv6 destination address. Then, in step S13b.9 the IPv6 packet is encapsulated and the encapsulated packet is forwarded to the address found by extension BGP.

If it is found that the IPv6 destination address of the IPv6 packet is an IPv6 address stored in the mapping table HNGW-MC ("YES" in step S13b.7), in step S13b.10 the IPv6 packet is encapsulated with an IPv4 header by using the values from the mapping table matching with this IPv6 address. Then, in step S13b.11, this encapsulated packet is forwarded to the IPv4 address as found by the previous step S13b.10.

According to the various situations in the steps of the registration/acknowledgement procedure, the communication procedure initiated by the mobile host MH and the communication procedure initiated by the correspondent host CH shown in Fig. 13a, Fig. 14a, Fig. 14b, Fig. 15a and Fig. 15b, it can be logically distinguished in the HNGW's receiving and transmitting procedure according to Fig. 13b between the following three branches:

the left branch comprising the steps S13b.1 to S13b.6;

the middle branch comprising the step S13b.1 and the steps S13b.7 to S13b.9; and

the right branch comprising the step S13b.1, the step S13b.7, the step S13b.10 and the step S13b.11.

In the following, the description of the registration/acknowledgement procedure of the mobile host MH according to Fig. 13a will be continued. In step S10a.7', in the home network gateway the HNGW's receiving and transmitting procedure as described above and which is shown in Fig. 13b is started. Preferably, in step S10a.7' the HNGW's receiving and transmitting procedure will take the left branch with the decision "YES" in step S13b.2 because the IPv6 destination address of the IPv6 packet is the second protocol second network home agent address HAA-6-2. This IPv6 address belongs to the address space of the home network HN and the IPv6 packet of registration packet REG contains a binding update option in the Binding Unit Option field BUO. The following steps S10a.8 to S10a.10 are identical to the registration/acknowledgement procedure according to Fig. 10a. Thus, a description of these steps is omitted here. After sending the binding acknowledgement message from the home agent HA to the home network gateway HNGW in step S10a.10, again the HNGW's receiving and transmitting procedure according to Fig. 13b is started in step S10a.11'. Preferably, in step S10a.11' the HNGW's receiving and transmitting procedure will take the right branch because the IPv6 destination address of the IPv6 packet at this stage is MHA-6-2-CoA which does not belong to the IPv6 address space of the home network HN and because this IPv6 destination address MHA-6-2-CoA is stored in the mapping table HNGW-MC. The following steps S10a.13 to S10a.17 are identical to the registration/acknowledgement procedure of the mobile host MH as shown in Fig. 10a such that the description of these steps will not be repeated hereinafter.

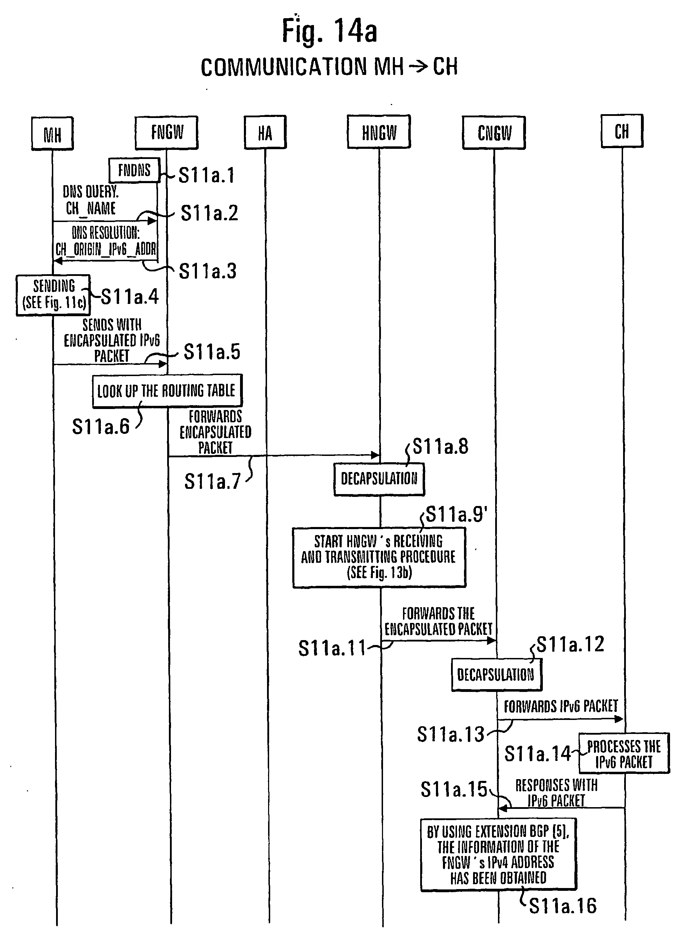

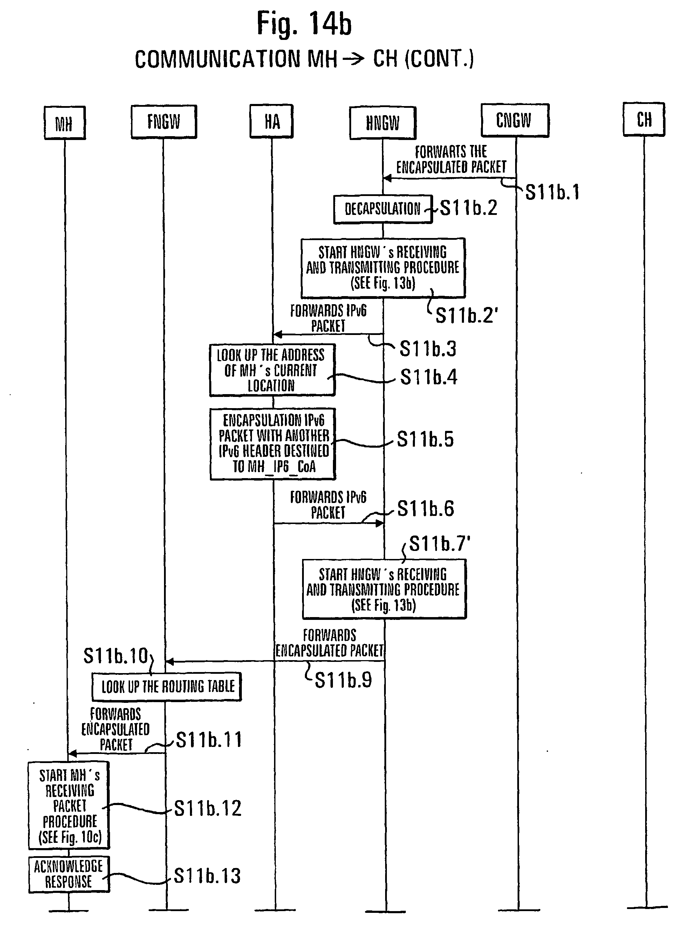

A communication procedure initiated by the first terminal MH to the second terminal CH was described above with respect to Figs. 11a and 11b. However, there is also another embodiment of such a communication procedure as will be explained in view of Figs. 14a and 14b. As can be seen from Fig. 14a, the steps S11a.1 to S11a.8 are identical to the communication procedure as shown in Fig. 11a. After decapsulating the IPv6 packet from any IPv4 header in step S11a.8, the home network gateway HNGW starts its receiving and transmitting procedure according to Fig. 13b in step S11a.9'. Preferably, the HNGW's receiving and transmitting procedure at this stage of the communication will take the middle branch because the IPv6 destination address of the IPv6 packet is the second protocol third network second terminal address CHA-6-3. This IPv6 address does not belong to the IPv6 address space of the home network HN and is not stored in the mapping table HNGW-MC. The HNGW's receiving and transmitting procedure in step S11a.9' is followed by the steps S11a.11 to S11a.16 and by the steps S11b.1 to S11b.2 which are identical to the corresponding steps having the same reference numerals in Figs. 11a and 11b. Therefore, it is referred here to the description of these steps given above. After decapsulating the IPv6 packet from any IPv4 header in step S11b.2, again the HNGW's receiving and transmitting procedure according to Fig. 13b is started in the HNGW in step S11b.2'. Preferably, at this stage of the communication procedure, the HNGW's receiving and transmitting procedure will take the left branch with the decision "NO" in step S13b.2 because the IPv6 destination address of this IPv6 packet is the second protocol second network first terminal origin address MHA-6-2-ORIG and this IPv6 address belongs to the IPv6 address space of the home network HN.

The HNGW's receiving and transmitting procedure in step S11b.2' is followed by the steps S11b.3 to S11b.6 which are already described above with respect to Fig. 11b. After forwarding the IPv6 packet from the home agent HA to the home network gateway HNGW in step S11b.6, again the HNGW's receiving and transmitting procedure of Fig.

13b is started in the HNGW in step S11b.7'. Preferably, the HNGW's receiving and transmitting procedure in step S11b.7' will take the right branch because the IPv6 destination address of the IPv6 packet is the second protocol second network first terminal foreign address MHA-6-2CoA. This IPv6 address does not belong to the IPv6 address space of the home network HN and is stored in the mapping table HNGW-MC. The HNGW's receiving and transmitting procedure in step S11b.7' is followed by the steps S11b.9 to S11b.13 which are already described above with respect to Fig. 11b.

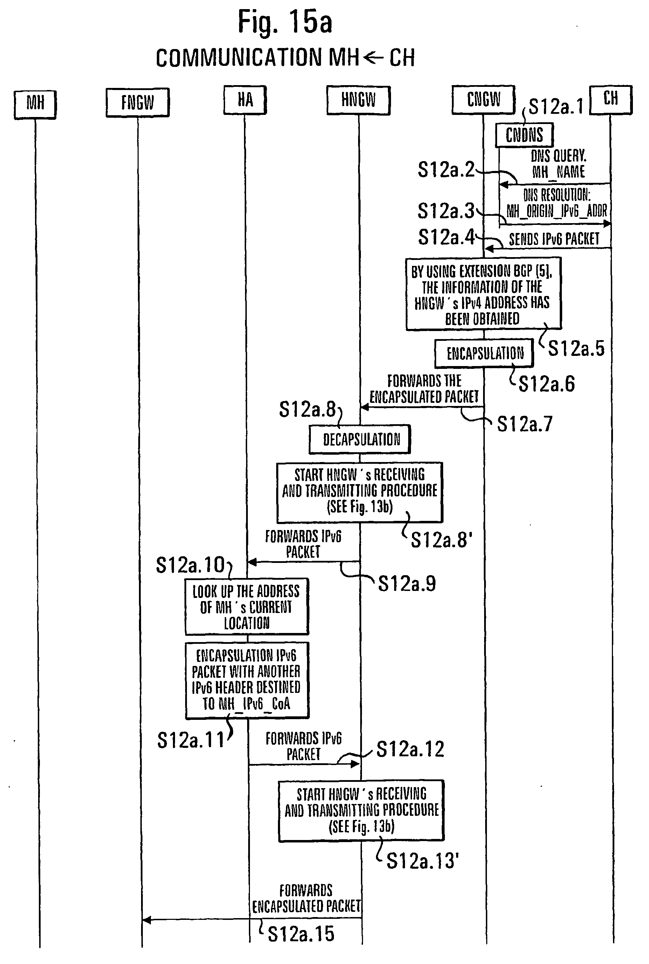

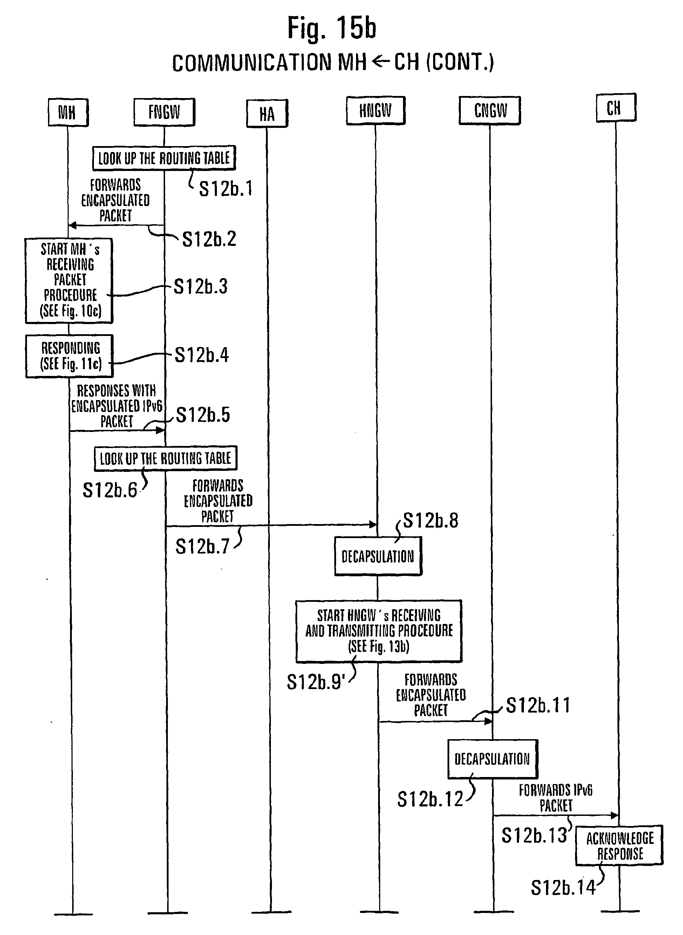

A communication procedure initiated by the second terminal CH to the first terminal MH was described above with respect to Figs. 12a and 12b. However, there is also another embodiment of such a communication procedure which will be described in the following with respect to Figs. 15a and 15b. The steps S12a.1 to S12a.8 are identical to the corresponding steps in Fig. 12a. After decapsulating the IPv6 packet from any IPv4 header in step S12a.8, the HNGW's receiving and transmitting procedure according to Fig. 13b is started in the HNGW in step S12a.8'. Preferably, the HNGW's receiving and transmitting procedure in step S12a.8' will take the left branch with the decision "NO" in step S13b.2 because the IPv6 destination address of the IPv6 packet is the second protocol second network first terminal origin address MHA-6-2-ORIG and this IPv6 address belongs to the IPv6 address space of the home network HN. The HNGW's receiving and transmitting procedure in step S12a.8' is followed by the steps S12a.9 to S12a.12 which are already described above with respect to Fig. 12a. After forwarding the IPv6 packet from the home agent HA the home network gateway HNGW in step S12a.12, again the HNGW's receiving and transmitting procedure according to Fig. 13b is started in the HNGW in step S12a.13'. Preferably, in step S12a.13', the HNGW's receiving and transmitting procedure will take the right branch because the IPv6 destination address of the IPv6 packet is the second protocol second network first terminal foreign address MHA-6-2-CoA. This IPv6 address does not belong to the IPv6 address space of the home network HN and it is stored in the mapping table HNGW-MC.

The HNGW's receiving and transmitting procedure in step S12a.13' is followed by the step S12a.15 and the steps S12b.1 to S12b.8 which are already described above with respect to Figs. 12a and 12b. After decapsulating the IPv6 packet from any IPv4 header in step S12b.8, again the HNGW's receiving and transmitting procedure according to Fig. 13b is started in the HNGW in step S12b.9'. Preferably, the HNGW's receiving and transmitting procedure in step S12b.9' will take the middle branch because the IPv6 destination address of the IPv6 packet is the second protocol third network second terminal address CHA-6-3. This IPv6 address does not belong to the IPv6 address of the home network HN and is not stored in the mapping table HNGW-MC. The HNGW's receiving and transmitting procedure in step S12b.9' is followed by the steps S12b.11 to S12b.14 as already described above with respect to Fig. 12b.

As may be understood from the above description of communications between MH and CH during the registration, acknowledgement and communication procedures, some specific functions and changes of the mobile terminal and the gateway located between the IPv6 home network and the IPv4 Internet need to be made, however, no changes are necessary for both the IPv4 foreign network and the IPv4 Internet. Therefore, an easy implementation to allow the communication between MH and CH in the communication system SYS comprising the four networks as shown in Fig. 4a is achieved. No changes are necessary for other IPv6 networks, except that their gateways must use any kind of routing protocol which can exchange the reachability information, e.g. the BGP extension protocol.

## INDUSTRIAL APPLICABILITY

The present invention describes how communication between a first terminal and a second terminal of a communication system comprising four networks, as shown in Fig. 4a, is described. Only changes in the mobile host MH and the home network gateway HNGW together with the home agent HA are necessary. Although above often the specific examples of an IPv4 and IPv6 protocol is used for the first and second protocols, it should be noted that the invention is not restricted to such protocol use. The present invention may be used in any communication system SYS where first and fourth networks use the first protocol for addressing and the second and the third networks use the second protocol for addressing and where the second and third addresses of the second and third networks are selected from the same address range of said second protocol and where the first and fourth addresses of the first and fourth networks are selected from the same address range of the first protocol. It is pointed out that the invention is also not restricted to the roaming situation where a mobile host roams to a global IPv4 network such that for example the mobile communication terminal MH of the invention is of course also capable of roaming to other protocol type networks like, for example, global IPv6 networks.

Furthermore, it should be noted that the invention comprises other embodiments which have been separately described and claimed in the specification and the claims. Furthermore, further modifications and variations may be carried out by the skilled person on the basis of the teachings disclosed herein.

The invention also includes a program having instructions adapted to carry out one or more of the above mentioned method steps and/or the functional features of one or more of the apparatus or system units described.

Furthermore, the invention also includes a computer program product stored on a computer readable medium comprising code means adapted to carry out one or more of the above mentioned method steps and/or the functional features of one or more of the apparatus or system units described.

The invention also includes a data carrier having computer readable code embodied therein, comprising means adapted to carry out one or more of the above mentioned method steps and/or the functional features of one or more of the apparatus or system units described.

Furthermore, the invention also includes a computer readable medium, in which a program is embodied, wherein the program is to make data processing means execute one or more of the above mentioned method steps and/or the functional features of one or more of the apparatus or system units described.

Reference numerals in the claims only serve clarification purposes and do not limit the scope of these claims.

**Claims**

1.  A method for registration used in a communication system (SYS) including a first network (IN) implemented using a first protocol (IPv4), said first network (IN) being connected to a second network (GV6-1) implemented using a second protocol (IPv6), and a third network (GV4) implemented using said first protocol (IPv4) through a respective first and second gateway (HNGW, FNGW), for registering in said second network (GV6-1) a first terminal (MH) of said second network (GV6-1) having roamed to said third network (GV4);

    said first and second protocols (IPv4, IPv6) being different;

    said first and third networks (IN, GV4) using said first protocol (IPv4) for addressing in said first and third networks (IN, GV4);

    said second network (GV6-1) using said second protocol (IPv6) for addressing in said second network (GV6-1);

    said first, second and third networks (IN, GV6-1, GV4) respectively comprising first, second and third addresses;

    said second addresses being second protocol second network addresses;

    said first and third addresses being respectively first protocol first network addresses and first protocol third network addresses;

    wherein said registration method comprises the following steps:

    a) generating (S 4d.1) in said first terminal (MH) a second protocol second network first terminal foreign address (MHA-6-2-CoA) of said first terminal from a first protocol third network first terminal address (MHA-G4-4);

    b) setting up (S 4d.2) a first protocol tunnel (TUN1) between said first terminal (MH) and said first gateway (HNGW);

    c) transmitting (S 4d.3) said second protocol second network first terminal foreign address (MHA-6-2-CoA) through said first protocol tunnel (TUN1) ;

    d) receiving (S 4d.4) said second protocol second network first terminal foreign address (MHA-6-2-CoA) in said first gateway (HNGW);

    e) transmitting (S 4d.5) said second protocol second network first terminal foreign address (MHA-6-2-CoA) through said second network (GV6-1) to a home agent (HA) in said second network (GV6-1); and wherein

    d1) after said receiving (S 4d.4) step d) there is used a step d1) for setting (S10a.6) a mapping correlation in a second mapping table (HNGW, Fig. 9) between said first protocol third network first terminal address (MHA-G4-4) and said second protocol second network first terminal foreign address (MHA-6-2-CoA) in said first gateway (HNGW), and

    e1) after said transmitting (S 4d.4) step e) there is used a step e1) for setting (S 10a.9) a mapping correlation in a first mapping table (HA-MC, Fig. 9) between a second protocol second network first terminal origin address (MHA-6-2-ORIG) of said first terminal (MH) and said second protocol second network first terminal foreign address (MHA-6-2-CoA) in said home agent (HA).

2.  A registration method according to claim 1, wherein
    before said step a) (S 4d.1) said first protocol third network first terminal address (MHA-G4-4) is distributed from a first protocol address distribution unit to said first terminal (MH).

3.  A registration method according to one of the claims 1 or 2, wherein
    said step b) (S 4d.2) includes encapsulating of at least said second protocol second network first terminal foreign address (MHA-6-2-CoA) with a first protocol third network header at least including said first protocol third network first terminal address (MKA-G4-4).

4.  A registration method according to one of the claims 1 to 3, wherein
    said step d) (S 4d.4) includes decapsulating said encapsulated second protocol second network first terminal foreign address (MHA-6-2-CoA) from said first protocol third network header.

**5.** A registration method according to one of the claims 1 to 4, wherein
in said step b) (S 4d.2) said first protocol tunnel (TUN1) between said first terminal (MH) and said first gateway (HNGW) is set up through said third network (GV4), said second gateway (FNGW), and said first network (IN) .

**6.** A method (Fig. 4f) for communication used in a communication system (SYS) including a first network (IN) implemented using a first protocol (IPv4), said first network (IN) being connected to a second network (GV6-1) implemented using a second protocol (IPv6) and including a home agent (HA), to a fourth network (GV4) implemented using said first protocol (IPv4), and to a third network (GV6-2) implemented using said second protocol (IPv6) through a respective first, second and third gateway (HNGW, FNGW, CNGW), for providing communication information (PAY) between a second terminal (CH) of said third network (GV6-2) and a first terminal (MH) of said second network (GV6-1) having roamed to said fourth network (GV4);
said first and second protocols (IPv4, IPv6) being different;
said first and fourth networks (IN, GV4) using said first protocol (IPv4) for addressing in said first and fourth networks (IN, GV4);
said second and third networks (GV6-1, GV6-2) using said second protocol (IPv6) for addressing in said second and third networks (GV6-1, GV6-2);
said first, second, third and fourth networks (IN, GV6-1, GV6-2, GV4) respectively comprising first, second, third and fourth addresses;
said second and third addresses being respectively second protocol second network addresses and second protocol third network addresses;
said first and fourth addresses being respectively first protocol first network addresses and first protocol fourth network addresses selected from different address ranges of said first protocol;
wherein said communication method comprises the following steps:

   a) transmitting (S 4f.1) said communication information (PAY) from said second terminal (CH) through said third network (GV6-2) to said third gateway (CNGW);
   b) setting up (S 4f.2) a first protocol first tunnel (TUN3) between said third gateway (CNGW) and said first gateway (HNGW);
   c) transmitting (S 4f.3) said communication information (PAY) through said first protocol first tunnel (TUN3) ;
   d) receiving (S 4f.4) said communication information (PAY) in said first gateway (HNGW);
   e) setting up (S 4f.5) a first protocol second tunnel (TUN4) between said first gateway (HNGW) and said first terminal (MH);
   f) transmitting (S 4f.6) said communication information (PAY) through said first protocol second tunnel (TUN4);
   g) receiving (S 4f.7) said communication information (PAY) in said first terminal (MH), wherein
   h) after step d) two address translation steps (S12a.10, S12a.13; S11b.4, S11b.7)) are carried out using a first and second mapping table (HA-MC; HNGW-MC) stored in said home agent (HA) and said first gateway (HNGW), respectively, wherein
   h1) said first address translation using said first mapping table (HA-MC, Fig. 9) performs an address translation between a second protocol second network first terminal origin address (MHA-6-2-ORIG) of said first terminal (MH) and a second protocol second network first terminal foreign address (MHA-6-2-CoA) in said home agent (HA), and
   h2) said second address translation using said second mapping table (HNGW-MC, Fig. 9) performs an address translation between said second protocol second network first terminal foreign address (MHA-6-2-CoA) and a first protocol fourth network first terminal address (MHA-G4-4) in said first gateway (HNGW) .

**7.** A communication method according to claim 6, wherein
before said step a) (S 4f.1) a second protocol second network first terminal origin address (MHA-6-2-ORIG) is distributed from a second protocol address distribution unit to said second terminal (CH).

**8.** A communication method according to one of the claims 6 or 7, wherein
before said step a) (S 4f.1) at least said communication information (PAY) is encapsulated at least with a second protocol third network header at least including a second protocol third network second terminal address (CHA-6-3) and said second protocol second network first terminal origin address (MHA-6-2-ORIG).

**9.** A communication method according to one of the claims 6 to 8, wherein
said step b) (S 4f.2) includes encapsulating of at least said communication information (PAY) with a first protocol first network first header at least including a first protocol first network first gateway address (HNGWA-G4-1).

**10.** A communication method according to one of the claims 6 to 9, wherein
between said step d) (S 4f.4) and said step e) (S 4f.5) :

    a) said communication information (PAY) is decapsulated at least from said first protocol first network first header; and
    b) said decapsulated communication information (PAY) is transmitted through said second network (GV6-1) to a home agent (HA) of said second network (GV6-1) .

**11.** A communication method according to claim 10, wherein
said decapsulated communication information (PAY) is encapsulated at least with a second protocol second network first terminal foreign address (MHA-6-2-CoA).

**12.** A communication method according to claim 11, wherein
said encapsulated communication information (PAY) is transmitted through said second network (GV6-1) to said first gateway (HNGW).

**13.** A communication method according to one of the claims 6 to 12, wherein
said step e) (S 4f.5) includes encapsulating of at least said communication information (PAY) with a first protocol first network second header at least including a first protocol first network first gateway address (HNGWA-G4-1) and a first protocol fourth network first terminal address (MHA-G4-4).

**14.** A communication method according to one of the claims 6 to 13, wherein
said step g) (S 4f.7) includes decapsulating said communication information (PAY) at least from said first protocol first network second header.

**15.** A communication method according to one of the claims 6 to 14, wherein
in said step e) (S 4f.5) said first protocol fourth tunnel (TUN4) between said first gateway (HNGW) and said first terminal (MH) is set up through said first network (IN), said second gateway (FNGW), and said fourth network (GV4).

**16.** A communication method according to claim 6, further including the following steps, for providing communication information (PAY) from said first terminal (MH) of said second network (GV6-1) having roamed to said fourth network (GV4) to said second terminal (CH) of said third network (GV6-2), before said step a) :

    a') setting up (S 4e.1) a first protocol first tunnel (TUN1) between said first terminal (MH) and said first gateway (HNGW) ;
    b') transmitting (S 4e.2) said communication information (PAY) through said first protocol first tunnel (TUN1);
    c') receiving (S 4e.3) said communication information (PAY) in said first gateway (HNGW);
    d') setting up (S 4e.4) a first protocol second tunnel (TUN2) between said first gateway (HNGW) and said third gateway (CNGW);
    e') transmitting (S 4e.5) said communication information (PAY) through said first protocol second tunnel (TUN2);
    f') receiving (S 4e.6) said communication information (PAY) in said third gateway (CNGW);
    g') transmitting (S 4e.7) said communication information (PAY) through said third network (GV6-2) to said second terminal (CH).

**17.** A communication method according to claim 16, wherein
before said step a') (S 4e.1) a second protocol third network second terminal address (CHA-6-3) is distributed from a second protocol address distribution unit to said first terminal (MH).

**18.** A communication method according to one of the claims 16 or 17, wherein
said step a') (S 4e.1) includes encapsulating of at least said communication information (PAY) with a second-protocol header at least including a second protocol second network first terminal origin address (MHA-6-2-ORIG) and a second protocol third network second terminal address (CHA-6-3), and with a first protocol fourth network header at least including a first protocol fourth network first terminal address (MHA-G4-4) and a first protocol first network first gateway address (HNGWA-G4-1).

**19.** A communication method according to one of the claims 16 to 18, wherein
said step d') (S 4e.4) includes:

a) decapsulating said communication information (PAY) at least from said first protocol fourth network header; and

b) encapsulating said decapsulated communication information (PAY) with a first protocol first network header at least including a first protocol first network third gateway address (CNGWA-G4-1).

20. A communication method according to one of the claims 16 to 19, wherein
said step f') (S 4e.6) includes decapsulating said communication information (PAY) at least from said first protocol first network header.

21. A communication system (SYS) including a first network (IN) implemented using a first protocol (IPv4), said first network (IN) being connected to a second network (GV6-1) implemented using a second protocol (IPv6), a third network (GV6-2) implemented using said second protocol (IPv6) and a fourth network (GV4) implemented using said first protocol (IPv4) through a respective first, second and third gateway (HNGW, FNGW, CNGW), for providing communications between a first terminal (MH) of said second network (GV6-1) and having roamed to said fourth network (GV4) and a second terminal (CH) of said third network (GV6-2);
said first and second protocols (IPv4, IPv6) being different;
said first and fourth networks (IN, GV4) using said first protocol (IPv4) for addressing in said first and fourth networks (IN, GV4);
said second and third networks (GV6-1, GV6-2) using said second protocol (IPv6) for addressing in said second and third networks (GV6-1, GV6-2);
said first to fourth networks (IN, GV6-1, GV6-2, GV4) respectively comprising first to fourth addresses;
said second and third addresses being respectively second protocol second network addresses and second protocol third network addresses;
said first and fourth addresses being respectively first protocol first network addresses and first protocol fourth network addresses; wherein

a) said second network (GV6-1) comprises a home agent (HA) adapted to store in a first mapping table (HA-MC) between a second protocol second network first terminal origin address (MHA-6-2-ORIG) assigned in and generated by said second network (GV6-1) to said first terminal (MH) in said second network (GV6-1) and a second protocol second network first terminal foreign address (MHA-6-2-CoA) generated by said first terminal (MH) having roamed to said fourth network (GV4);

b) said first terminal (MH) is capable of communicating using said first protocol (IPv4) and said second protocol (IPv6);

c) said first terminal (MH) comprises a first tunnel set up unit (TS3-1) for setting up a first protocol first tunnel (TUN1) between said first terminal (MH) and said first gateway (HNGW);

d) said first gateway (HNGW) between said second and first networks (GV6-1, IN) comprises
a second tunnel set up unit (TS3-2) for setting up a first protocol second tunnel (TUN2) between said first gateway (HNGW) and said third gateway (CNGW) and a fourth tunnel set up unit (TS3-4) for setting up a first protocol fourth tunnel (TUN4) between
said first gateway (HNGW) and said first terminal (MH)
a second mapping table (HNGW-MC, Fig. 9) between said second protocol second network first terminal foreign address (MHA-6-2-CoA) and a first protocol fourth network first terminal address (MHA-G4-4) in said first gateway (HNGW), and
a conversion unit (CU2) adapted to use said second mapping table (HNGW-MC, Fig. 9) to perform an address translation between said second protocol second network first terminal foreign address (MHA-6-2-CoA) and said first protocol fourth network first terminal address (MHA-G4-4), and

e) said third gateway (CNGW) between said third and first networks (GV6-2, IN) comprises a third tunnel set up unit (TS3-3) for setting up a first protocol third tunnel (TUN3) between said third gateway (CNGW) and said first gateway (HNGW).

22. A communication system (SYS) according to claim 21, wherein
said first terminal (MH) further comprises a storage unit (SU1) for storing at least said second protocol second network first terminal origin address (MHA-6-2-ORIG), a second protocol second network home agent address (HAA-6-2) of said home agent (HA), and a first protocol first network first gateway address (HNGWA-G4-1) of said first gateway (HNGW);

23. A communication system (SYS) according to one of the claims 21 or 22, wherein
said first gateway (HNGW) comprises a storage unit (SU2) for storing said first protocol fourth network first terminal address (MHA-G4-4) and said second protocol second network first terminal foreign address (MHA-6-2-CoA).

24. A communication system (SYS) according to one of the claims 21 to 23, wherein
said second protocol second network addresses and said second protocol third network addresses are selected from a common address range of said second protocol; and
said first protocol first network addresses and said first protocol fourth network addresses are selected from a common address range of said first protocol.

25. A communication system according to claim 21, wherein said first terminal (MH) further comprises
a receiving unit (RU1) for receiving said first protocol fourth network first terminal address (MHA-G4-4) from a first-protocol address distribution unit.

26. A communication system (SYS) according to claim 21, wherein said first terminal (MH) further comprises:

   a generating unit (GU1) for generating said second protocol second network first terminal foreign address (MHA-6-2-CoA);

27. A communication system (SYS) according to claim 21, wherein said first terminal (MH) further comprises
a transmitting unit (TU1) for transmitting at least said second protocol second network first terminal foreign address (MHA-6-2-CoA) to said home agent (HA) through said first-protocol tunnel (TUN1).

28. A communication system (SYS) according to claim 26, wherein
in said generating unit (GU1) said first protocol fourth network first terminal address (MHA-G4-4) is used for generating said second protocol second network first terminal foreign address (MHA-6-2-CoA).

29. A communication system (SYS) according to claim 22, wherein
said second protocol second network first terminal origin address (MHA-6-2-ORIG), said second protocol second network home agent address (HAA-6-2), and said first protocol first network first gateway address (HNGWA-G4-1) are permanently stored in said storage unit (SU1).

30. A communication system (SYS) according to claim 21, wherein said first terminal (MH) further comprises:

   an encapsulating unit (EU1) for encapsulating at least said second protocol second network first terminal foreign address (MHA-6-2-CoA) with a first protocol fourth network header at least including said first protocol fourth network first terminal address (MHA-G4-4).

31. A communication system (SYS) according to claim 30, wherein in said first terminal (MH)
said encapsulating unit (EU1) is further adapted to encapsulate at least a communication information (PAY) with a second-protocol header at least including said second protocol second network first terminal origin address (MHA-6-2-ORIG) and a second protocol third network second terminal address (CHA-6-3), and with a first protocol fourth network header at least including said first protocol fourth network first terminal address (MHA-G4-4) and a first protocol first network first gateway address (ENGWA-G4-1) .

32. A communication system (SYS) according to claim 21, wherein said first terminal (MH) further comprises:

   a decapsulating unit (DU1) for decapsulating a communication information (PAY) received from said second terminal (CH) at least from a first-protocol header.

33. A communication system (SYS) according to claim 21, wherein in said first terminal (MH)
said first tunnel set up unit (TS1) for setting up a first-protocol tunnel (TUN1) between said mobile communication terminal (MH) and said first gateway (HNGW) is adapted to set up said first-protocol tunnel (TUN1) through said fourth network (GV4), said second gateway (FNGW), and said first network (IN).

34. A gateway (HNGW) for a communication system (SYS) including a first network (IN) implemented using a first protocol (IPv4), said first network (IN) being connected to a second network (GV6-1) implemented using a second protocol (IPv6), to a fourth network (GV4) implemented using said first protocol (IPv4), and to a third network (GV6-2) implemented using said second protocol (IPv6) respectively through said gateway (HNGW) forming a first gateway (HNGW), a second and a third gateway (FNGW, CNGW), for providing communication information (PAY) from a second terminal (CH) of said third network (GV6-2) to a first terminal (MH) of said second network (GV6-1) having roamed to said fourth network (GV4) or from said first terminal (MH) to said second terminal (CH);

said first and second protocols (IPv4, IPv6) being different;

said first and fourth networks (IN, GV4) using said first protocol (IPv4) for addressing in said first and fourth networks (IN, GV4);

said second and third networks (GV6-1, GV6-2) using said second protocol (IPv6) for addressing in said second and third networks (GV6-1, GV6-2) ;

said first, second, third and fourth networks (IN, GV6-1, GV6-2, GV4) respectively comprising first, second, third and fourth addresses;

said second and third addresses being respectively second protocol second network addresses and second protocol third network addresses;

said first and fourth addresses being respectively first protocol first network addresses and first protocol fourth network addresses, wherein

said gateway (HNGW) comprises

a mapping table (HNGW-MC, Fig. 9) between a second protocol second network first terminal foreign address (MHA-6-2-CoA) and a first protocol fourth network first terminal address (MHA-G4-4) in said first gateway (HNGW), and

a conversion unit (CU2) adapted to use said mapping table (HNGW-MC, Fig. 9) to perform an address translation between said second protocol second network first terminal foreign address (MHA-6-2-CoA) and said first protocol fourth network first terminal address (MHA-G4-4), and

a first tunnel set up unit (TS2-1) for setting up a first-protocol tunnel between said gateway (HNGW) and said first terminal (MH), and

a second tunnel set up unit (TS2-2) for setting up another first-protocol tunnel between said gateway (HNGW) and said third gateway (CNGW).

35. A gateway (HNGW) according to claim 34, further comprising
a storage unit (SU2) for storing said first protocol fourth network first terminal address (MHA-G4-4) and said second protocol second network first terminal foreign address (MHA-6-2-CoA).

36. A gateway (HNGW) according to one of the claims 35, wherein
in said storage unit (SU2) said mapping table (HNGW-MC) between said first protocol fourth network first terminal address (MHA-G4-4) and said second protocol second network first terminal foreign address (MHA-6-2-CoA) is stored.

37. A gateway (HNGW) according to claim 36, wherein in said mapping table
a mapping correlation is stored between said first protocol fourth network first terminal address (MHA-G4-4) and said second protocol second network first terminal foreign address (MHA-6-2-CoA).

38. A gateway (HNGW) according to claim 34, wherein
said first tunnel set up unit (TS2-1) for setting up a first-protocol tunnel between said gateway (HNGW) and said first terminal (MH) is adapted to set up said first-protocol tunnel through said first network (IN), said second gateway (FNGW), and said fourth network (GV4).

39. A program having instructions adapted to carry out the method steps of the independent method claims 1 or 6.

40. A data carrier having computer readable code embodied therein, comprising means adapted to carry out the method steps of the independent method claims 1 or 6.

**Patentansprüche**

1. Ein Verfahren für Registration, das in einem Kommunikationssystem (SYS) verwendet wird, das enthält ein erstes Netz (IN), das unter Verwendung eines ersten Protokolls (IPv4) implementiert ist, wobei das erste Netz (IN) verbunden ist mit einem zweiten Netz (GV6-1), das unter Verwendung eines zweiten Protokolls (IPv6) implementiert ist, und einem dritten Netz (GV4), das unter Verwendung des ersten Protokolls (IPv4) implementiert ist durch ein jeweiliges erstes und zweites Gateway (HNGW, FNGW), zum Registrieren in dem ersten Netz (GV6-1) eines ersten Endgerätes (MH) des zweiten Netzes (GV6-1), das zu dem dritten Netz (GV4) gewandert ist;
wobei sich die ersten und zweiten Protokolle (IPv4, IPv6) unterscheiden;

die ersten und dritten Netze (IN, GV4) das erste Protokoll (IPv4) für eine Adressierung in den ersten und dritten Netzen (IN, GV4) verwenden;

das zweite Netz (GV6-1) das zweite Protokoll (IPv6) für eine Adressierung in dem zweiten Netz (GV6-1) verwendet;

die ersten, zweiten und dritten Netze (IN, GV6-1, GV4) jeweils erste, zweite und dritte Adressen umfassen;

die zweiten Adressen Adressen des zweiten Netzes des zweiten Protokolls sind;

die ersten und dritten Adressen jeweils Adressen des ersten Netzes des ersten Protokolls und Adressen des dritten Netzes des ersten Protokolls sind;

wobei das Registrationsverfahren die folgenden Schritte umfasst:

a) Generieren (S 4d.1) in dem ersten Endgerät (MH) einer Fremdadresse des ersten Endgerätes des zweiten Netzes des zweiten Protokolls (MHA-6-2-CoA) des ersten Endgerätes aus einer Adresse des ersten Endgerätes des dritten Netzes des ersten Protokolls (MH4-G4-4);

b) Einrichten (S 4d.2) eines Tunnels des ersten Protokolls (TUN1) zwischen dem ersten Endgerät (MH) und dem ersten Gateway (HNGW);

c) Übertragen (S 4d.3) der Fremdadresse des ersten Endgerätes des zweiten Netzes des zweiten Protokolls (MHA-6-2-CoA) durch den Tunnel des ersten Protokolls (TUN1);

d) Empfangen (S 4d.4) der Fremdadresse des ersten Endgerätes des zweiten Netzes des zweiten Protokolls (MHA-6-2-CoA) in dem ersten Gateway (HNGW);

e) Übertragen (S 4d.5) der Fremdadresse des ersten Endgerätes des zweiten Netzes des zweiten Protokolls (MHA-6-2-CoA) durch das zweite Netz (GV6-1) zu einem Heimatagenten (HA, home agent) in dem zweiten Netz (GV6-1); und wobei

d1) nach dem Empfangen (S 4d.4) Schritt d) ein Schritt d1) zum Setzen (S10a.6) einer Abbildungskorrelation in einer zweiten Abbildungstabelle (HNGW, Fig. 9) zwischen der Adresse des ersten Endgerätes des dritten Netzes des ersten Protokolls (MHA-G4-4) und der Fremdadresse des ersten Endgerätes des zweiten Netzes des zweiten Protokolls (MHA-6-2-CoA) in dem ersten Gateway (HNGW) verwendet wird, und

e1) nach dem Übertragen (S 4d.4) Schritt e) ein Schritt e1) zum Setzen (S 10a.9) einer Abbildungskorrelation in einer ersten Abbildungstabelle (HA-MC, Fig. 9) zwischen einer Ursprungsadresse des ersten Endgerätes des zweiten Netzes des zweiten Protokolls (MHA-6-2-ORIG) des ersten Endgerätes (MH) und der Fremdadresse des ersten Endgerätes des zweiten Netzes des zweiten Protokolls (MHA-6-2-CoA) in dem Heimatagenten (HA) verwendet wird.

2. Ein Registrationsverfahren nach Anspruch 1, wobei
vor dem Schritt a) (S 4d.1) die Adresse des ersten Endgerätes des dritten Netzes des ersten Protokolls (MHA-G4-4) von einer ersten Protokolladressverteilungseinheit zu dem ersten Endgerät (MH) verteilt wird.

3. Ein Registrationsverfahren nach einem der Ansprüche 1 oder 2, wobei
der Schritt b) (S 4d.2) Kapseln mindestens der Fremdadresse des ersten Endgerätes des zweiten Netzes des zweiten Protokolls (MHA- 6-2-CoA) mit einem Header des dritten Netzes des ersten Protokolls enthält, der mindestens die Adresse des ersten Endgerätes des dritten Netzes des ersten Protokolls (MHA-G4-4) enthält.

4. Ein Registrationsverfahren nach einem der Ansprüche 1 bis 3, wobei
der Schritt d) (S 4d.4) Entkapseln der gekapselten Fremdadresse des ersten Endgerätes des zweiten Netzes des zweiten Protokolls (MHA-6-2-CoA) aus dem Header des dritten Netzes des ersten Protokolls enthält.

5. Ein Registrationsverfahren nach einem der Ansprüche 1 bis 4, wobei
in dem Schritt b) (S 4d.2) der Tunnel des ersten Protokolls (TUN1) zwischen dem ersten Endgerät (MH) und dem ersten Gateway (HNGW) durch das dritte Netz (GV4), das zweite Gateway (FNGW) und das erste Netz (IN) eingerichtet wird.

6. Ein Verfahren (Fig. 4f) für eine Kommunikation, die in einem Kommunikationssystem (SYS) verwendet wird, das enthält ein erstes Netz (IN), das unter Verwendung eines ersten Protokolls (IPv4) implementiert ist, wobei das erste Netz (IN) verbunden ist mit einem zweiten Netz (GV6-1), das unter Verwendung eines zweiten Protokolls (IPv6) implementiert ist und einen Heimatagenten (HA) enthält, mit einem vierten Netz (GV4), das unter Verwendung des ersten Protokolls (IPv4) implementiert ist, und mit einem dritten Netz (GV6-2), das unter Verwendung des zweiten Protokolls (IPv6) implementiert ist durch ein jeweiliges erstes, zweites und drittes Gateway (HNGW, FNGW, CNGW), zum Vorsehen von Kommunikationsinformation (PAY) zwischen einem zweiten Endgerät (CH) des dritten Netzes (GV6-2) und einem ersten Endgerät (MH) des zweiten Netzes (GV6-1), das zu dem vierten Netz (GV4) gewandert ist; wobei sich die ersten und zweiten Protokolle (IPv4, IPv6) unterscheiden;

die ersten und vierten Netze (IN, GV4) das erste Protokoll (IPv4) für eine Adressierung in den ersten und vierten Netzen (IN, GV4) verwenden;

die zweiten und dritten Netze (GV6-1, GV6-2) das zweite Protokoll (IPv6) für eine Adressierung in den zweiten und dritten Netzen (GV6-1, GV6-2) verwenden;

die ersten, zweiten, dritten und vierten Netze (IN, GV6-1, GV6-2, GV4) jeweils umfassen erste, zweite, dritte und vierte Adressen;

die zweiten und dritten Adressen jeweils Adressen des zweiten Netzes des zweiten Protokolls und Adressen des dritten Netzes des zweiten Protokolls sind;

die ersten und vierten Adressen jeweils Adressen des ersten Netzes des ersten Protokolls und Adressen des vierten Netzes des ersten Protokolls sind, die aus unterschiedlichen Adressbereichen des ersten Protokolls ausgewählt sind;

wobei das Kommunikationsverfahren die folgenden Schritte umfasst:

a) Übertragen (S 4f.1) der Kommunikationsinformation (PAY) von dem zweiten Endgerät (CH) durch das dritte Netz (GV6-2) zu dem dritten Gateway (CNGW);

b) Einrichten (S 4f.2) eines ersten Tunnels des ersten Protokolls (TUN3) zwischen dem dritten Gateway (CNGW) und dem ersten Gateway (HNGW);

c) Übertragen (S 4f.3) der Kommunikationsinformation (PAY) durch den ersten Tunnel des ersten Protokolls (TUN3);

d) Empfangen (S 4f.4) der Kommunikationsinformation (PAY) in dem ersten Gateway (HNGW);

e) Einrichten (S 4f.5) des zweiten Tunnels des ersten Protokolls (TUN4) zwischen dem ersten Gateway (HNGW) und dem ersten Endgerät (MH);

f) Übertragen (S 4f.6) der Kommunikationsinformation (PAY) durch den zweiten Tunnel des ersten Protokolls (TUN4);

g) Empfangen (S 4f.7) der Kommunikationsinformation (PAY) in dem ersten Endgerät (MH), wobei

h) nach dem Schritt d) zwei Adressübersetzungsschritte (S12a.10, S12a.13; S11b.4, S11b.7) ausgeführt werden unter Verwendung einer ersten und zweiten Abbildungstabelle (HA-MC; HNGW-MC), die in dem Heimatagenten (HA) bzw. dem ersten Gateway (HNGW) gespeichert sind, wobei

h1) die erste Adressübersetzung, die die erste Abbildungstabelle (HA-MC, Fig. 9) verwendet, eine Adressübersetzung zwischen der Ursprungsadresse des ersten Endgerätes des zweiten Netzes des zweiten Protokolls (MHA-6-2-ORIG) des ersten Endgerätes (MH) und einer Fremdadresse des ersten Endgerätes des zweiten Netzes des zweiten Protokolls (MHA-6-2-CoA) in dem Heimatagenten (HA) durchführt, und

h2) die zweite Adressübersetzung, die die zweite Abbildungstabelle (HNGW-MC, Fig. 9) verwendet, eine Adressübersetzung zwischen der Fremdadresse des ersten Endgerätes des zweiten Netzes des zweiten Protokolls (MHA-6-2-CoA) und einer Adresse des ersten Endgerätes des vierten Netzes des ersten Protokolls (MHA-G4-4) in dem ersten Gateway (HNGW) durchführt.

7. Ein Kommunikationsverfahren nach Anspruch 6, wobei
vor dem Schritt a) (S 4f.1) eine Ursprungsadresse des ersten Endgerätes des zweiten Netzes des zweiten Protokolls (MHA-6-2-ORIG) von einer zweiten Protokolladressverteilungseinheit zu dem zweiten Endgerät (CH) verteilt wird.

8. Ein Kommunikationsverfahren nach einem der Ansprüche 6 oder 7, wobei
vor dem Schritt a) (S 4f.1) mindestens die Kommunikationsinformation (PAY) mindestens mit einem Header des dritten Netzes des zweiten Protokolls gekapselt wird, der enthält eine Adresse des zweiten Endgerät des dritten Netzes des zweiten Protokolls (CHA-6-3) und die Ursprungsadresse des ersten Endgerätes des zweiten Netzes des zweiten Protokolls (MHA-6-2-ORIG).

9. Ein Kommunikationsverfahren nach einem der Ansprüche 6 bis 8, wobei
der Schritt b) (S 4f.2) enthält Kapseln von mindestens der Kommunikationsinformation (PAY) mit einem ersten Header des ersten Netzes des ersten Protokolls, der mindestens eine Adresse des ersten Gateway des ersten Netzes des ersten Protokolls (HNGWA-G4-1) enthält.

10. Ein Kommunikationsverfahren nach einem der Ansprüche 6 bis 9, wobei
zwischen dem Schritt d) (S 4f.4) und dem Schritt e) (S 4f.5) :

a) die Kommunikationsinformation (PAY) mindestens von dem ersten Header des ersten Netzes des ersten Protokolls entkapselt wird; und

b) die entkapselte Kommunikationsinformation (PAY) durch das zweite Netz (GV6-1) zu einem Heimatagenten (HA) des zweiten Netzes (GV6-1) übertragen wird.

**11.** Ein Kommunikationsverfahren nach Anspruch 10, wobei
die entkapselte Kommunikationsinformation (PAY) mindestens mit einer Fremdadresse des ersten Endgerätes des zweiten Netzes des zweiten Protokolls (MHA-6-2-CoA) gekapselt wird.

**12.** Ein Kommunikationsverfahren nach Anspruch 11, wobei
die gekapselte Kommunikationsinformation (PAY) durch das zweite Netz (GV6-1) zu dem ersten Gateway (HNGW) übertragen wird.

**13.** Ein Kommunikationsverfahren nach einem der Ansprüche 6 bis 12, wobei
der Schritt e) (S 4f.5) enthält Kapseln mindestens der Kommunikationsinformation (PAY) mit einem zweiten Header des ersten Netzes des ersten Protokolls, der mindestens enthält eine Adresse des ersten Gateway des ersten Netzes des ersten Protokolls (HNGWA-G4-1) und eine Adresse des ersten Endgerätes des vierten Netzes des ersten Protokolls (MHA-G4-4).

**14.** Ein Kommunikationsverfahren nach einem der Ansprüche 6 bis 13, wobei
der Schritt g) (S 4f.7) enthält Entkapseln der Kommunikationsinformation (PAY) mindestens von dem zweiten Header des ersten Netzes des ersten Protokolls.

**15.** Ein Kommunikationsverfahren nach einem der Ansprüche 6 bis 14, wobei
in dem Schritt e) (S 4f.5) der vierte Tunnel des ersten Protokolls (TUN4) zwischen dem ersten Gateway (HNGW) und dem ersten Endgerät (MH) durch das erste Netz (IN), das zweite Gateway (FNGW) und das vierte Netz (GV4) eingerichtet wird.

**16.** Ein Kommunikationsverfahren nach Anspruch 6, ferner enthaltend die folgenden Schritte, zum Bereitstellen von Kommunikationsinformation (PAY) von dem ersten Endgerät (MH) des zweiten Netzes (GVS-1), das zu dem vierten Netz (GV4) gewandert ist, zu dem zweiten Endgerät (CH) des dritten Netzes (GVS-2), vor dem Schritt a):

a') Einrichten (S 4e.1) eines ersten Tunnels des ersten Protokolls (TUN1) zwischen dem ersten Endgerät (MH) und dem ersten Gateway (HNGW);
b') Übertragen (S 4e.2) der Kommunikationsinformation (PAY) durch den ersten Tunnel des ersten Protokolls (TUN1) ;
c') Empfangen (S 4e.3) der Kommunikationsinformation (PAY) in dem ersten Gateway (HNGW);
d') Einrichten (S 4e.4) eines zweiten Tunnels des ersten Protokolls (TUN2) zwischen dem ersten Gateway (HNGW) und dem dritten Gateway (CNGW);
e') Übertragen (S 4e.5) der Kommunikationsinformation (PAY) durch den zweiten Tunnel des ersten Protokolls (TUN2);
f') Empfangen (S 4e.6) der Kommunikationsinformation (PAY) in dem dritten Gateway (CNGW);
g') Übertragen (S 4e.7) der Kommunikationsinformation (PAY) durch das dritte Netz (GV6-2) zu dem zweiten Endgerät (CH).

**17.** Ein Kommunikationsverfahren nach Anspruch 16, wobei
vor dem Schritt a') (S 4e.1) eine Adresse des zweiten Endgerätes des dritten Netzes des zweiten Protokolls (CHA-6-3) von einer zweiten Protokolladressverteilungseinheit zu dem ersten Endgerät (MH) verteilt wird.

**18.** Ein Kommunikationsverfahren nach einem der Ansprüche 16 oder 17, wobei
der Schritt a') (S 4e.1) enthält Kapseln mindestens der Kommunikationsinformation (PAY) mit einem Header des zweiten Protokolls, der mindestens enthält eine Ursprungsadresse des ersten Endgerätes des zweiten Netzes des zweiten Protokolls (MHA-6-2-ORIG) und eine Adresse des zweiten Endgerätes des dritten Netzes des zweiten Protokolls (CHA-6-3), und mit einem Header des vierten Netzes des ersten Protokolls, der mindestens enthält eine Adresse des ersten Endgerätes des vierten Netzes des ersten Protokolls (MHA-G4-4) und eine Adresse des ersten Gateway des ersten Netzes des ersten Protokolls (HNGWA-G4-1) .

**19.** Ein Kommunikationsverfahren nach einem der Ansprüche 16 bis 18, wobei
der Schritt d') (S 4e.4) enthält:

a) Entkapseln der Kommunikationsinformation (PAY) mindestens von dem Header des vierten Netzes des ersten Protokolls; und
b) Kapseln der entkapselten Kommunikationsinformation (PAY) mit einem Header des ersten Netzes des ersten Protokolls, der mindestens eine Adresse des dritten Gateway des ersten Netzes des ersten Protokolls (CNGWA-G4-1) enthält.

20. Ein Kommunikationsverfahren nach einem der Ansprüche 16 bis 19, wobei
der Schritt f') (S 4e.6) Entkapseln der Kommunikationsinformation (PAY) mindestens von dem Header des ersten Netzes des ersten Protokolls enthält.

21. Ein Kommunikationssystem (SYS), das enthält ein erstes Netz (IN), das unter Verwendung eines ersten Protokolls (IPv4) implementiert ist, wobei das erste Netz (IN) verbunden ist mit einem zweiten Netz (GV6-1), das unter Verwendung eines zweiten Protokolls (IPv6) implementiert ist, einem dritten Netz (GV6-2), das unter Verwendung des zweiten Protokolls (IPv6) implementiert ist, und einem vierten Netz (GV4), das unter Verwendung des ersten Protokolls (IPv4) implementiert ist durch ein jeweiliges erstes, zweites und drittes Gateway (HNGW, FNGW, CNGW), zum Bereitstellen von Kommunikationen zwischen einem ersten Endgerät (MH) des zweiten Netzes (GV6-1) und das zu dem vierten Netz (GV4) gewandert ist und einem zweiten Endgerät (CH) des dritten Netzes (GV6-2);
wobei die ersten und zweiten Protokolle (IPv4, IPv6) verschieden sind;
die ersten und vierten Netze (IN, GV4) das erste Protokoll (IPv4) für eine Adressierung in den ersten und vierten Netzen (IN, GV4) verwenden;
die zweiten und dritten Netze (GV6-1, GV6-2) das zweite Protokoll (IPv6) für eine Adressierung in den zweiten und dritten Netzen (GV6-1, GV6-2) verwenden;
die ersten bis vierten Netze (IN, GV6-1, GV6-2, GV4) jeweils erste bis vierte Adressen umfassen;
die zweiten und dritten Adressen jeweils Adressen des zweiten Netzes des zweiten Protokolls und Adressen des dritten Netzes des zweiten Protokolls sind;
die ersten und vierten Adressen jeweils Adressen des ersten Netzes des ersten Protokolls und Adressen des vierten Netzes des ersten Protokolls sind; wobei

a) das zweite Netz (GV6-1) umfasst einen Heimatagenten (HA), der angepasst ist zu speichern in einer ersten Abbildungstabelle (HA-MC) zwischen einer Ursprungsadresse des ersten Endgerätes des zweiten Netzes des zweiten Protokolls (MHA-6-2-ORIG), die zugewiesen ist in dem und generiert wird durch das zweite(n) Netz (GV6-1) zu dem ersten Endgerät (MH) in dem zweiten Netz (GV6-1) und einer Fremdadresse des ersten Endgerätes des zweiten Netzes des zweiten Protokolls (MHA-6-2-CoA), die durch das erste Endgerät (MH) generiert wird, das zu dem vierten Netz (GV4) gewandert ist;
b) das erste Endgerät (MH) fähig ist zum Kommunizieren unter Verwendung des ersten Protokolls (IPv4) und des zweiten Protokolls (IPv6);
c) das erste Endgerät (MH) eine Einrichtungseinheit des ersten Tunnels (TS3-1) umfasst zum Einrichten eines ersten Tunnels des ersten Protokolls (TUN1) zwischen dem ersten Endgerät (MH) und dem ersten Gateway (HNGW);
d) das erste Gateway (HNGW) zwischen den zweiten und ersten Netzen (GV6-1, IN) umfasst
eine Einrichtungseinheit des zweiten Tunnels (TS3-2) zum Einrichten eines zweiten Tunnels des ersten Protokolls (TUN2) zwischen dem ersten Gateway (HNGW) und dem dritten Gateway (CNGW) und eine Einrichtungseinheit des vierten Tunnels (TS3-4) zum Einrichten eines vierten Tunnels des ersten Protokolls (TUN4) zwischen dem ersten Gateway (HNGW) und dem ersten Endgerät (MH),
eine zweite Abbildungstabelle (HNGW-MC, Fig. 9) zwischen der Fremdadresse des ersten Endgerätes des zweiten Netzes des zweiten Protokolls (MHA-6-2-CoA) und einer Adresse des ersten Endgerätes des vierten Netzes des ersten Protokolls (MHA-G4-4) in dem ersten Gateway (HNGW), und
eine Wandlungseinheit (CU2), die angepasst ist, die zweite Abbildungstabelle (HNGW-MC, Fig. 9) zu verwenden, um eine Adressübersetzung zwischen der Fremdadresse des ersten Endgerätes des zweiten Netzes des zweiten Protokolls (MHA-6-2-CoA) und der Adresse des ersten Endgerätes des vierten Netzes des ersten Protokolls (MHA-G4-4) durchzuführen, und
e) das dritte Gateway (CNGW) zwischen den dritten und ersten Netzen (GV6-2, IN) eine Einrichtungseinheit des dritten Tunnels (TS3-3) umfasst zum Einrichten eines dritten Tunnels des ersten Protokolls (TUN3) zwischen dem dritten Gateway (CNGW) und dem ersten Gateway (HNGW).

22. Ein Kommunikationssystem (SYS) nach Anspruch 21, wobei
das erste Endgerät (MH) ferner umfasst eine Speichereinheit (SU1) zum Speichern mindestens der Ursprungsadresse des ersten Endgerätes des zweiten Netzes des zweiten Protokolls (MHA-6-2-ORIG), einer Heimatagentenadresse des zweiten Netzes des zweiten Protokolls (HAA-6-2) des Heimatagenten (HA) und einer Adresse des ersten Gateway des ersten Netzes des ersten Protokolls (HNGWA-G4-1) des ersten Gateway (HNGW).

**23.** Ein Kommunikationssystem (SYS) nach einem der Ansprüche 21 oder 22, wobei
das erste Gateway (HNGW) umfasst eine Speichereinheit (SU2) zum Speichern der Adresse des ersten Endgerätes des vierten Netzes des ersten Protokolls (MHA-G4-4) und der Fremdadresse des ersten Endgerätes des zweiten Netzes des zweiten Protokolls (MHA-6-2-CoA).

**24.** Ein Kommunikationssystem (SYS) nach einem der Ansprüche 21 bis 23, wobei
die Adressen des zweiten Netzes des zweiten Protokolls und die Adressen des dritten Netzes des zweiten Protokolls aus einem gemeinsamen Adressbereich des zweiten Protokolls ausgewählt werden; und
die Adressen des ersten Netzes des ersten Protokolls und die Adressen des vierten Netzes des ersten Protokolls aus einem gemeinsamen Adressbereich des ersten Protokolls ausgewählt werden.

**25.** Ein Kommunikationssystem nach Anspruch 21, wobei das erste Endgerät (MH) ferner umfasst
eine Empfangseinheit (RU1) zum Empfangen der Adresse des ersten Endgerätes des vierten Netzes des ersten Protokolls (MHA-G4-4) von einer Adressverteilungseinheit des ersten Protokolls.

**26.** Ein Kommunikationssystem (SYS) nach Anspruch 21, wobei das erste Endgerät (MH) ferner umfasst:

eine Generierungseinheit (GU1) zum Generieren der Fremdadresse des ersten Endgerätes des zweiten Netzes des zweiten Protokolls (MHA-6-2-CoA).

**27.** Ein Kommunikationssystem (SYS) nach Anspruch 21, wobei das erste Endgerät (MH) ferner umfasst
eine Übertragungseinheit (TU1) zum Übertragen mindestens der Fremdadresse des ersten Endgerätes des zweiten Netzes des zweiten Protokolls (MHA-6-2-CoA) zu dem Heimatagenten (HA) durch den Tunnel des ersten Protokolls (TUN1).

**28.** Ein Kommunikationssystem (SYS) nach Anspruch 26, wobei
in der Generierungseinheit (GU1) die Adresse des ersten Endgerätes des vierten Netzes des ersten Protokolls (MHA-G4-4) zum Generieren der Fremdadresse des ersten Endgerätes des zweiten Netzes des zweiten Protokolls (MHA-6-2-CoA) verwendet wird.

**29.** Ein Kommunikationssystem (SYS) nach Anspruch 22, wobei
die Ursprungsadresse des ersten Endgerätes des zweiten Netzes des zweiten Protokolls (MHA-6-2-ORIG), die Heimatagentenadresse des zweiten Netzes des zweiten Protokolls (HAA-6-2) und die Adresse des ersten Gateway des ersten Netzes des ersten Protokolls (HNGWA-G4-1) in der Speichereinheit (SU1) permanent gespeichert sind.

**30.** Ein Kommunikationssystem (SYS) nach Anspruch 21, wobei das erste Endgerät (MH) ferner umfasst:

eine Kapselungseinheit (EU1) zum Kapseln mindestens der Fremdadresse des ersten Endgerätes des zweiten Netzes des zweiten Protokolls (MHA-6-2-CoA) mit einem Header des vierten Netzes des ersten Protokolls, der mindestens die Adresse des ersten Endgerätes des vierten Netzes des ersten Protokolls (MHA-G4-4) enthält.

**31.** Ein Kommunikationssystem (SYS) nach Anspruch 30, wobei in dem ersten Endgerät (MH)
die Kapselungseinheit (EU1) ferner angepasst ist, mindestens eine Kommunikationsinformation (PAY) mit einem Header des zweiten Protokolls, der mindestens enthält die Ursprungsadresse des ersten Endgerätes des zweiten Netzes des zweiten Protokolls (MHA-6-2-ORIG) und eine Adresse des zweiten Endgerätes des dritten Netzes des zweiten Protokolls (CHA-6-3), und mit einem Header des vierten Netzes des ersten Protokolls, der mindestens enthält die Adresse des ersten Endgerätes des vierten Netzes des ersten Protokolls (MHA-G4-4) und eine Adresse des ersten Gateway des ersten Netzes des ersten Protokolls (HNGWA-G4-1), zu kapseln.

**32.** Ein Kommunikationssystem (SYS) nach Anspruch 21, wobei das erste Endgerät (MH) ferner umfasst:

eine Entkapselungseinheit (DU1) zum Entkapseln einer Kommunikationsinformation (PAY), die von dem zweiten Endgerät (CH) empfangen wird, mindestens von einem Header des ersten Protokolls.

**33.** Ein Kommunikationssystem (SYS) nach Anspruch 21, wobei in dem ersten Endgerät (MH)
die Einrichtungseinheit des ersten Tunnels (TS1) zum Einrichten eines Tunnels des ersten Protokolls (TUN1) zwischen dem mobilen Kommunikationsendgerät (MH) und dem ersten Gateway (HNGW) angepasst ist, den Tunnel des ersten Protokolls (TUN1) durch das vierte Netz (GV4), das zweite Gateway (FNGW) und das erste Netz (IN) einzurichten.

**34.** Ein Gateway (HNGW) für ein Kommunikationssystem (SYS), das enthält ein erstes Netz (IN), das unter Verwendung eines ersten Protokolls (IPv4) implementiert ist, wobei das erste Netz (IN) verbunden ist mit einem zweiten Netz (GV6-1), das unter Verwendung eines zweiten Protokolls (IPv6) implementiert ist, mit einem vierten Netz (GV4), das unter Verwendung des ersten Protokolls (IPv4) implementiert ist, und mit einem dritten Netz (GV6-2), das unter Verwendung des zweiten Protokolls (IPv6) implementiert ist jeweils durch das Gateway (HNGW), das ein erstes Gateway (HNGW), ein zweites und ein drittes Gateway (FNGW, CNGW) bildet, zum Bereitstellen von Kommunikationsinformation (PAY) von einem zweiten Endgerät (CH) des dritten Netzes (GV6-2) zu einem ersten Endgerät (MH) des zweiten Netzes (GV6-1), das zu dem vierten Netz (GV4) gewandert ist oder von dem ersten Endgerät (MH) zu dem zweiten Endgerät (CH);
wobei die ersten und zweiten Protokolle (IPv4, IPv6) verschieden sind;
die ersten und vierten Netze (IN, GV4) das erste Protokoll (IPv4) für eine Adressierung in den ersten und vierten Netzen (IN, GV4) verwenden;
die zweiten und dritten Netze (GV6-1, GV6-2) das zweite Protokoll (IPv6) für eine Adressierung in den zweiten und dritten Netzen (GV6-1, GV6-2) verwenden;
die ersten, zweiten, dritten und vierten Netze (IN, GV6-1, GV6-2, GV4) jeweils erste, zweite, dritte und vierte Adressen umfassen;
die zweiten und dritten Adressen jeweils Adressen des zweiten Netzes des zweiten Protokolls und Adressen des dritten Netzes des zweiten Protokolls sind;
die ersten und vierten Adressen jeweils Adressen des ersten Netzes des ersten Protokolls und Adressen des vierten Netzes des ersten Protokolls sind, wobei
das Gateway (HNGW) umfasst
eine Abbildungstabelle (HNGW-MC, Fig. 9) zwischen einer Fremdadresse des ersten Endgerätes des zweiten Netzes des zweiten Protokolls (MHA-6-2-CoA) und einer Adresse des ersten Endgerätes des vierten Netzes des ersten Protokolls (MHA-G4-4) in dem ersten Gateway (HNGW), und
eine Wandlungseinheit (CU2), die angepasst ist, die Abbildungstabelle (HNGW-MC, Fig. 9) zu verwenden, um eine Adressübersetzung zwischen der Fremdadresse des ersten Endgerätes des zweiten Netzes des zweiten Protokolls (MHA-6-2-CoA) und der Adresse des ersten Endgerätes des vierten Netzes des ersten Protokolls (MHA-G4-4) durchzuführen, und
eine Einrichtungseinheit des ersten Tunnels (TS2-1) zum Einrichten eines Tunnels des ersten Protokolls zwischen dem Gateway (HNGW) und dem ersten Endgerät (MH), und
eine Einrichtungseinheit des zweiten Tunnels (TS2-2) zum Einrichten eines anderen Tunnels des ersten Protokolls zwischen dem Gateway (HNGW) und dem dritten Gateway (CNGW).

**35.** Ein Gateway (HNGW) nach Anspruch 34, ferner umfassend
eine Speichereinheit (SU2) zum Speichern der Adresse des ersten Endgerätes des vierten Netzes des ersten Protokolls (MHA-G4-4) und der Fremdadresse des ersten Endgerätes des zweiten Netzes des zweiten Protokolls (MHA-6-2-CoA).

**36.** Ein Gateway (HNGW) nach einem der Ansprüche 35, wobei
in der Speichereinheit (SU2) die Abbildungstabelle (HNGW-MC) zwischen der Adresse des ersten Endgerätes des vierten Netzes des ersten Protokolls (MHA-G4-4) und der Fremdadresse des ersten Endgerätes des zweiten Netzes des zweiten Protokolls (MHA-6-2-CoA) gespeichert ist.

**37.** Ein Gateway (HNGW) nach Anspruch 36, wobei in der Abbildungstabelle
eine Abbildungskorrelation gespeichert ist zwischen der Adresse des ersten Endgerätes des vierten Netzes des ersten Protokolls (MHA-G4-4) und der Fremdadresse des ersten Endgerätes des zweiten Netzes des zweiten Protokolls (MHA-6-2-CoA).

**38.** Ein Gateway (HNGW) nach Anspruch 34, wobei
die Einrichtungseinheit des ersten Tunnels (TS2-1) zum Einrichten eines Tunnels des ersten Protokolls zwischen dem Gateway (HNGW) und dem ersten Endgerät (MH) angepasst ist, den Tunnel des ersten Protokolls durch das erste Netz (IN), das zweite Gateway (FNGW) und das vierte Netz (GV4) einzurichten.

**39.** Ein Programm mit Instruktionen, die angepasst sind, die Verfahrensschritte der unabhängigen Verfahrensansprüche 1 oder 6 auszuführen.

**40.** Ein Datenträger mit computerlesbarem Code, der darin verkörpert ist, umfassend Mittel, die angepasst sind, die Verfahrensschritte der unabhängigen Verfahrensansprüche 1 oder 6 auszuführen.

**Revendications**

**1.** Procédé d'enregistrement utilisé dans un système de communication (SYS) incluant un premier réseau (IN) implémenté en utilisant un premier protocole (IPv4), ledit premier réseau (IN) étant relié à un deuxième réseau (GV6-1) implémenté en utilisant un second protocole (IPv6), et un troisième réseau (GV4) implémenté en utilisant ledit premier protocole (IPv4) par l'intermédiaire de première et seconde passerelles respectives (HNGW, FNGW), pour enregistrer dans ledit deuxième réseau (GV6-1) un premier terminal (MH) dudit deuxième réseau (GV6-1) ayant itinéré vers ledit troisième réseau (GV4) ;
lesdits premier et second protocoles (IPv4, IPv6) étant différents ;
lesdits premier et troisième réseaux (IN, GV4) utilisant ledit premier protocole (IPv4) pour faire l'adressage dans lesdits premier et troisième réseaux (IN, GV4) ;
ledit deuxième réseau (GV6-1) utilisant ledit second protocole (IPv6) pour faire l'adressage dans ledit deuxième réseau (GV6-1) ;
lesdits premier, deuxième et troisième réseaux (IN, GV6-1, GV4) comprenant respectivement des premières, deuxièmes et troisièmes adresses ;
lesdites deuxièmes adresses étant des adresses de deuxième réseau second protocole ;
lesdites premières et troisièmes adresses étant respectivement des adresses de premier réseau premier protocole et des adresses de troisième réseau premier protocole ;
dans lequel ledit procédé d'enregistrement comprend les étapes suivantes consistant à :

a) générer (S 4d.1) dans ledit premier terminal (MH) une adresse étrangère de premier terminal de deuxième réseau second protocole (MHA-6-2-CoA) dudit premier terminal à partir d'une adresse de premier terminal de troisième réseau premier protocole (MHA-G4-4) ;
b) paramétrer (S 4d.2) un tunnel de premier protocole (TUN1) entre ledit premier terminal (MH) et ladite première passerelle (HNGW) ;
c) transmettre (S 4d.3) ladite adresse étrangère de premier terminal de deuxième réseau second protocole (MHA-6-2-CoA) à travers ledit tunnel de premier protocole (TUN1) ;
d) recevoir (S 4d.4) ladite adresse étrangère de premier terminal de deuxième réseau second protocole (MHA-6-2-CoA) dans ladite première passerelle (HNGW) ;
e) transmettre (S 4d.5) ladite adresse étrangère de premier terminal deuxième réseau second protocole (MHA-6-2-CoA) à travers ledit deuxième réseau (GV6-1) à un agent local (HA) dans ledit deuxième réseau (GV6-1) ;
et dans lequel
d1) après ladite étape de réception (S 4d.4) d), une étape d1) est utilisée pour paramétrer (S 10a.6) une corrélation de mise en correspondance dans une seconde table de mise en correspondance (HNGW, fig. 9) entre ladite adresse de premier terminal de troisième réseau premier protocole (MHA-G4-4) et ladite adresse étrangère de premier terminal de deuxième réseau second protocole (MHA-6-2-CoA) dans ladite première passerelle (HNGW), et
e1) après ladite étape de transmission (S 4d.4) e), une étape e1) est utilisée pour paramétrer (S 10a.9) une corrélation de mise en correspondance dans une première table de mise en correspondance (HA-MC, figure 9) entre une adresse d'origine de premier terminal de deuxième réseau second protocole (MHA-6-2-ORIG) dudit premier terminal (MH) et ladite adresse étrangère de premier terminal de deuxième réseau second protocole (MHA-6-2-CoA) dans ledit agent local (HA) .

**2.** Procédé d'enregistrement selon la revendication 1, dans lequel
avant ladite étape a) (S 4d.1) ladite adresse de premier terminal de troisième réseau premier protocole (MHA-G4-4) est distribuée à partir d'une première unité de distribution d'adresse de premier protocole audit premier terminal (MH).

**3.** Procédé d'enregistrement selon l'une des revendications 1 ou 2, dans lequel
ladite étape b) (S 4d.2) inclut l'encapsulation d'au moins ladite adresse étrangère de premier terminal de deuxième réseau second protocole (MHA-6-2-CoA) avec un en-tête de troisième réseau premier protocole au moins incluant ladite adresse de premier terminal de troisième réseau premier protocole (MHA-G4-4).

**4.** Procédé d'enregistrement selon l'une des revendications 1 à 3, dans lequel
ladite étape d) (S 4d.4) inclut la désencapsulation de ladite adresse étrangère encapsulée de premier terminal deuxième réseau second protocole (MHA-6-2-CoA) à partir dudit en-tête de troisième réseau premier protocole.

5. Procédé d'enregistrement selon l'une des revendications 1 à 4, dans lequel
dans ladite étape b) (S 4d.2) ledit tunnel de premier protocole (TUN1) entre ledit premier terminal (MH) et ladite première passerelle (HNGW) est paramétré par l'intermédiaire dudit troisième réseau (GV4), de ladite seconde passerelle (FNGW), et dudit premier réseau (IN).

6. Procédé (fig. 4f) de communication utilisé dans un système de communication (SYS) incluant un premier réseau (IN) implémenté en utilisant un premier protocole (IPv4), ledit premier réseau (IN) étant relié à un deuxième réseau (GV6-1) implémenté en utilisant un second protocole (IPv6) et incluant un agent local (HA), à un quatrième réseau (GV4) implémenté en utilisant ledit premier protocole (IPv4), et à un troisième réseau (GV6-2) implémenté en utilisant ledit second protocole (IPv6) par l'intermédiaire de première, deuxième et troisième passerelles respectives (HNGW, FNGW, CNGW), pour fournir des informations de communication (PAY) entre un second terminal (CH) dudit troisième réseau (GV6-2) et un premier terminal (MH) dudit deuxième réseau (GV6-1) itinéré dans ledit quatrième réseau (GV4) ;
lesdits premier et second protocoles (IPv4, IPv6) étant différents;
lesdits premier et quatrième réseaux (IN, GV4) utilisant ledit premier protocole (IPv4) pour faire l'adressage dans lesdits premier et quatrième réseaux (IN, GV4);
lesdits deuxième et troisième réseaux (GV6-1, GV6-2) utilisant ledit second protocole (IPv6) pour faire l'adressage dans lesdits deuxième et troisième réseaux (GV6-1, GV6-2) ;
lesdits premier, deuxième, troisième et quatrième réseaux (IN, GV6-1, GV6-2, GV4) comprenant respectivement des premières, deuxièmes, troisièmes et quatrièmes adresses ;
lesdites deuxièmes et troisièmes adresses étant respectivement des adresses de deuxième réseau second protocole et des adresses de troisième réseau second protocole ;
lesdites premières et quatrièmes adresses étant respectivement des adresses de premier réseau premier protocole et des adresses de quatrième réseau premier protocole sélectionnées à partir de différentes plages d'adresses dudit premier protocole ;
dans lequel ledit procédé de communication comprend les étapes suivantes consistant à :

a) transmettre (S 4f.1) lesdites informations de communication (PAY) à partir dudit second terminal (CH) par l'intermédiaire dudit troisième réseau (GV6-2) à ladite troisième passerelle (CNGW) ;
b) paramétrer (S 4f.2) un premier tunnel de premier protocole (TUN3) entre ladite troisième passerelle (CNGW) et ladite première passerelle (HNGW) ;
c) transmettre (S 4f.3) lesdites informations de communication (PAY) à travers ledit premier tunnel de premier protocole (TUN3) ;
d) recevoir (S 4f.4) lesdites informations de communication (PAY) dans ladite première passerelle (HNGW) ;
e) paramétrer (S 4f.5) un second tunnel de premier protocole (TUN4) entre ladite première passerelle (HNGW) et ledit premier terminal (MH) ;
f) transmettre (S 4f.6) lesdites informations de communication (PAY) à travers ledit second tunnel de premier protocole (TUN4) ;
g) recevoir (S 4f.7) lesdites informations de communication (PAY) dans ledit premier terminal (MH), dans lequel
h) après l'étape d), deux étapes de traduction d'adresse (S12a.10, S12a.13 ; S11b.4, S11b.7) sont exécutées en utilisant des première et seconde tables de mise en correspondance (HA-MC ; HNGW-MC) stockées respectivement dans ledit agent local (HA) et ladite première passerelle (HNGW), dans lequel
h1) ladite première traduction d'adresse utilisant ladite première table de mise en correspondance (HA-MC, fig. 9) effectue une traduction d'adresse entre une adresse d'origine de premier terminal de deuxième réseau second protocole (MHA-6-2-ORIG) dudit premier terminal (MH) et une adresse étrangère de premier terminal de deuxième réseau second protocole (MHA-6-2-CoA) dans ledit agent local (HA), et
h2) ladite seconde traduction d'adresse utilisant ladite seconde table de mise en correspondance (HNGW-MC, fig. 9) effectue une traduction d'adresse entre ladite adresse étrangère de premier terminal de deuxième réseau second protocole (MHA-6-2-CoA) et une adresse de premier terminal de quatrième réseau premier protocole (MHA-G4-4) dans ladite première passerelle (HNGW).

7. Procédé de communication selon la revendication 6, dans lequel
avant ladite étape a) (S 4f.1) une adresse d'origine de premier terminal de deuxième réseau second protocole (MHA-6-2-ORIG) est distribuée à partir d'une unité de distribution d'adresse de second protocole audit second terminal (CH).

**8.** Procédé de communication selon l'une des revendications 6 ou 7, dans lequel avant ladite étape a) (S 4f.1) au moins lesdites informations de communication (PAY) sont encapsulées au moins avec un en-tête de troisième réseau second protocole au moins incluant une adresse de second terminal de troisième réseau second protocole (CHA-6-3) et ladite adresse d'origine de premier terminal de deuxième réseau second protocole (MHA-6-2-ORIG).

**9.** Procédé de communication selon l'une des revendications 6 à 8, dans lequel ladite étape b) (S 4f.2) inclut l'encapsulation d'au moins lesdites informations de communication (PAY) avec un premier en-tête de premier réseau premier protocole au moins incluant une adresse de première passerelle de premier réseau premier protocole (HNGWA-G4-1).

**10.** Procédé de communication selon l'une des revendications 6 à 9, dans lequel entre ladite étape d) (S 4f.4) et ladite étape e) (S 4f.5):

a) lesdites informations de communication (PAY) sont désencapsulées à partir d'au moins ledit premier en-tête de premier réseau premier protocole ; et
b) lesdites informations de communication (PAY) désencapsulées sont transmises par l'intermédiaire dudit deuxième réseau (GV6-1) à un agent local (HA) dudit deuxième réseau (GV6-1).

**11.** Procédé de communication selon la revendication 10, dans lequel lesdites informations de communication (PAY) désencapsulées sont encapsulées au moins avec une adresse étrangère de premier terminal de deuxième réseau second protocole (MHA-6-2-CoA).

**12.** Procédé de communication selon la revendication 11, dans lequel lesdites informations de communication (PAY) encapsulées sont transmises par l'intermédiaire dudit deuxième réseau (GV6-1) à ladite première passerelle (HNGW).

**13.** Procédé de communication selon l'une des revendications 6 à 12, dans lequel ladite étape e) (S 4f.5) inclut l'encapsulation d'au moins lesdites informations de communication (PAY) avec un second en-tête de premier réseau premier protocole au moins incluant une adresse de première passerelle de premier réseau premier protocole (HNGWA-G4-1) et une adresse de premier terminal de quatrième réseau premier protocole (MHA-G4-4).

**14.** Procédé de communication selon l'une des revendications 6 à 13, dans lequel ladite étape g) (S 4f.7) inclut la désencapsulation desdites informations de communication (PAY) au moins à partir dudit second en-tête de premier réseau premier protocole.

**15.** Procédé de communication selon l'une des revendications 6 à 14, dans lequel dans ladite étape e) (S 4f.5) ledit quatrième tunnel de premier protocole (TUN4) entre ladite première passerelle (HNGW) et ledit premier terminal (MH) est paramétré par l'intermédiaire dudit premier réseau (IN), de ladite deuxième passerelle (FNGW), et dudit quatrième réseau (GV4).

**16.** Procédé de communication selon la revendication 6, incluant en outre les étapes suivantes, pour fournir des informations de communication (PAY) à partir dudit premier terminal (MH) dudit deuxième réseau (GV6-1) ayant itinéré vers ledit quatrième réseau (GV4) vers ledit second terminal (CH) dudit troisième réseau (GV6-2), avant ladite étape a) :

a') paramétrer (S 4e.1) un premier tunnel de premier protocole (TUN1) entre ledit premier terminal (MH) et ladite première passerelle (HNGW) ;
b') transmettre (S 4e.2) lesdites informations de communication (PAY) à travers ledit premier tunnel de premier protocole (TUN1) ;
c') recevoir (S 4e.3) lesdites informations de communication (PAY) dans ladite première passerelle (HNGW) ;
d') paramétrer (S 4e.4) un second tunnel de premier protocole (TUN2) entre ladite première passerelle (HNGW) et ladite troisième passerelle (CNGW);
e') transmettre (S 4e.5) lesdites informations de communication (PAY) à travers ledit second tunnel de premier protocole (TUN2) ;
f') recevoir (S 4e.6) lesdites informations de communication (PAY) dans ladite troisième passerelle (CNGW) ;
g') transmettre (S 4e.7) lesdites informations de communication (PAY) par l'intermédiaire dudit troisième réseau (GV6-2) audit second terminal (CH) .

**17.** Procédé de communication selon la revendication 16, dans lequel
avant ladite étape a') (S 4e.1) une adresse de second terminal de troisième réseau second protocole (CHA-6-3) est distribuée à partir d'une unité de distribution d'adresse de second protocole audit premier terminal (MH)

**18.** Procédé de communication selon l'une des revendications 16 ou 17, dans lequel
ladite étape a') (S 4e.1) inclut l'encapsulation d'au moins lesdites informations de communication (PAY) avec un en-tête de second protocole au moins incluant une adresse d'origine de premier terminal de deuxième réseau second protocole (MHA-6-2-ORIG) et une adresse de second terminal de troisième réseau second protocole (CHA-6-3), et avec un en-tête de quatrième réseau premier protocole au moins incluant une adresse de premier terminal de quatrième réseau premier protocole (MHA-G4-4) et une adresse de première passerelle de premier réseau premier protocole (HNGWA-G4-1).

**19.** Procédé de communication selon l'une des revendications 16 à 18, dans lequel
ladite étape d') (S 4e.4) inclut :

a) la désencapsulation desdites informations de communication (PAY) au moins à partir dudit en-tête de quatrième réseau premier protocole ; et
b) l'encapsulation desdites informations de communication (PAY) désencapsulées avec un en-tête de premier réseau premier protocole au moins incluant une adresse de troisième passerelle de premier réseau premier protocole (CNGWA-G4-1).

**20.** Procédé de communication selon l'une des revendications 16 à 19, dans lequel
ladite étape f') (S 4e.6) inclut la désencapsulation desdites informations de communication (PAY) au moins à partir dudit en-tête de premier réseau premier protocole.

**21.** Système dé communication (SYS) incluant un premier réseau (IN) implémenté en utilisant un premier protocole (IPv4), ledit premier réseau (IN) étant relié à un deuxième réseau (GV6-1) implémenté en utilisant un second protocole (IPv6), un troisième réseau (GV6-2) implémenté en utilisant ledit second protocole (IPv6) et un quatrième réseau (GV4) implémenté en utilisant ledit premier protocole (IPv4) par l'intermédiaire de première, deuxième et troisième passerelles respectives (HNGW, FNGW, CNGW), pour fournir des communications entre un premier terminal (MH) dudit deuxième réseau (GV6-1) ayant itinéré dans ledit quatrième réseau (GV4) et un second terminal (CH) dudit troisième réseau (GV6-2) ;
lesdits premier et second protocoles (IPv4, IPv6) étant différents;
lesdits premier et quatrième réseaux (IN, GV4) utilisant ledit premier protocole (IPv4) pour faire l'adressage dans lesdits premier et quatrième réseaux (IN, GV4);
lesdits deuxième et troisième réseaux (GV6-1, GV6-2) utilisant ledit second protocole (IPv6) pour faire l'adressage dans lesdits deuxième et troisième réseaux (GV6-1, GV6-2) ;
lesdits premier au quatrième réseaux (IN, GV6-1, GV6-2, GV4) comprenant respectivement des premières à quatrièmes adresses ;
lesdites deuxièmes et troisièmes adresses étant respectivement des adresses de deuxième réseau second protocole et des adresses de troisième réseau second protocole;
lesdites premières et quatrièmes adresses étant respectivement des adresses de premier réseau premier protocole et des adresses de quatrième réseau premier protocole ; dans lequel

a) ledit deuxième réseau (GV6-1) comprend un agent local (HA) conçu pour stocker dans une première table de mise en correspondance (HA-MC) entre une adresse d'origine de premier terminal de deuxième réseau second protocole (MHA-6-2-ORIG) attribuée dans et générée par ledit deuxième réseau (GV6-1) pour ledit premier terminal (MH) dans ledit deuxième réseau (GV6-1) et une adresse étrangère de premier terminal de deuxième réseau second protocole (MHA-6-2-CoA) générée par ledit premier terminal (MH) ayant itinéré dans ledit quatrième réseau (GV4) ;
b) ledit premier terminal (MH) est capable de communiquer en utilisant ledit premier protocole (IPv4) et ledit second protocole (IPv6) ;
c) ledit premier terminal (MH) comprend une unité de paramétrage de premier tunnel (TS3-1) pour paramétrer un premier tunnel de premier protocole (TUN1) entre ledit premier terminal (MH) et ladite première passerelle (HNGW) ;
d) ladite première passerelle (HNGW) entre lesdits deuxième et premier réseaux (GV6-1, IN) comprend :

une unité de paramétrage de second tunnel (TS3-2) pour paramétrer un second tunnel de premier protocole (TUN2) entre ladite première passerelle (HNGW) et ladite troisième passerelle (CNGW) et
une unité de paramétrage de quatrième tunnel (TS3-4) pour paramétrer un quatrième tunnel de premier protocole (TUN4) entre ladite première passerelle (HNGW) et ledit premier terminal (MH),
une seconde table de mise en correspondance (HNGW-MC, fig. 9) entre ladite adresse étrangère de premier terminal de deuxième réseau second protocole (MHA-6-2-CoA) et une adresse de premier terminal de quatrième réseau premier protocole (MHA-G4-4) dans ladite première passerelle (HNGW), et
une unité de conversion (CU2) conçue pour utiliser ladite seconde table de mise en correspondance (HNGW-MC, fig. 9) pour effectuer une traduction d'adresse entre ladite adresse étrangère de premier terminal de deuxième réseau second protocole (MHA-6-2-CoA) et ladite adresse de premier terminal de quatrième réseau premier protocole (MHA-G4-4), et

e) ladite troisième passerelle (CNGW) entre lesdits troisième et premier réseaux (GV6-2, IN) comprend une unité de paramétrage de troisième tunnel (TS3-3) pour paramétrer un troisième tunnel de premier protocole (TUN3) entre ladite troisième passerelle (CNGW) et ladite première passerelle (HNGW).

**22.** Système de communication (SYS) selon la revendication 21, dans lequel
ledit premier terminal (MH) comprend en outre une unité de stockage (SU1) pour stocker au moins ladite adresse d'origine de premier terminal de deuxième réseau second protocole (MHA-6-2-ORIG), une adresse d'agent local de deuxième réseau second protocole (HAA-6-2) dudit agent local (HA), et une adresse de première passerelle de premier réseau premier protocole (HNGWA-G4-1) de ladite première passerelle (HNGW).

**23.** Système de communication (SYS) selon l'une des revendications 21 ou 22, dans lequel
ladite première passerelle (HNGW) comprend une unité de stockage (SU2) pour stocker ladite adresse de premier terminal de quatrième réseau premier protocole (MHA-G4-4) et ladite adresse étrangère de premier terminal de deuxième réseau second protocole (MHA-6-2-CoA).

**24.** Système de communication (SYS) selon l'une des revendications 21 à 23, dans lequel
lesdites adresses de deuxième réseau second protocole et lesdites adresses de troisième réseau second protocole sont sélectionnées à partir d'une plage d'adresses commune dudit second protocole; et
lesdites adresses de premier réseau premier protocole et lesdites adresses de quatrième réseau premier protocole sont sélectionnées à partir d'une plage d'adresses commune dudit premier protocole.

**25.** Système de communication selon la revendication 21, dans lequel ledit premier terminal (MH) comprend en outre:

une unité de réception (RU1) pour recevoir ladite adresse de premier terminal de quatrième réseau premier protocole (MHA-G4-4) à partir d'une unité de distribution d'adresse de premier protocole.

**26.** Système de communication (SYS) selon la revendication 21, dans lequel ledit premier terminal (MH) comprend en outre:

une unité de production (GU1) pour générer ladite adresse étrangère de premier terminal de deuxième réseau second protocole (MHA-6-2-CoA).

**27.** Système de communication (SYS) selon la revendication 21, dans lequel ledit premier terminal (MH) comprend en outre :

une unité de transmission (TU1) pour transmettre au moins ladite adresse étrangère de premier terminal de deuxième réseau second protocole (MHA-6-2-CoA) audit agent local (HA) à travers ledit tunnel de premier protocole (TUN1).

**28.** Système de communication (SYS) selon la revendication 26, dans lequel
dans ladite unité de production (GU1), ladite adresse de premier terminal de quatrième réseau premier protocole (MHA-G4-4) est utilisée pour générer ladite adresse étrangère de premier terminal de deuxième réseau second protocole (MHA-6-2-CoA).

**29.** Système de communication (SYS) selon la revendication 22, dans lequel
ladite adresse d'origine de premier terminal de deuxième réseau second protocole (MHA-6-2-ORIG), ladite adresse d'agent local de deuxième réseau second protocole (HAA-6-2), et ladite adresse de première passerelle de premier réseau premier protocole (HNGWA-G4-1) sont stockées de manière permanente dans ladite unité de stockage dite (SU1).

30. Système de communication (SYS) selon la revendication 21, dans lequel ledit premier terminal (MH) comprend en outre :

une unité d'encapsulation (EU1) pour encapsuler au moins ladite adresse étrangère de premier terminal de deuxième réseau second protocole (MHA-6-2-CoA) avec un en-tête de quatrième réseau premier protocole au moins incluant ladite adresse de premier terminal de quatrième réseau premier protocole (MHA-G4-4).

31. Système de communication (SYS) selon la revendication 30, dans lequel, dans ledit premier terminal (MH), ladite unité d'encapsulation (EU1) est en outre conçue pour encapsuler au moins des informations de communication (PAY) avec un en-tête de second protocole au moins incluant ladite adresse d'origine de premier terminal de deuxième réseau second protocole (MHA-6-2-ORIG) et une adresse de second terminal de troisième réseau second protocole (CHA-6-3), et avec un en-tête de quatrième réseau premier protocole au moins incluant ladite adresse de premier terminal de quatrième réseau premier protocole (MHA-G4-4) et une adresse de première passerelle de premier réseau premier protocole (HNGWA-G4-1).

32. Système de communication (SYS) selon la revendication 21, dans lequel ledit premier terminal (MH) comprend en outre :

une unité de désencapsulation (DU1) pour désencapsuler des informations de communication (PAY) reçues à partir dudit second terminal (CH) au moins à partir d'un en-tête de premier protocole.

33. Système de communication (SYS) selon la revendication 21, dans lequel, dans ledit premier terminal (MH), ladite unité de paramétrage de premier tunnel (TS1) pour paramétrer un tunnel de premier protocole (TUN1) entre ledit terminal de communication mobile (MH) et ladite première passerelle (HNGW) est conçue pour paramétrer ledit tunnel de premier protocole (TUN1) par l'intermédiaire dudit quatrième réseau (GV4), de ladite deuxième passerelle (FNGW), et dudit premier réseau (IN).

34. Passerelle (HNGW) pour un système de communication (SYS) incluant un premier réseau (IN) implémenté en utilisant un premier protocole (IPv4), ledit premier réseau (IN) étant relié à un deuxième réseau (GV6-1) implémenté en utilisant un second protocole (IPv6), à un quatrième réseau (GV4) implémenté en utilisant ledit premier protocole (IPv4) et à un troisième réseau (GV6-2) implémenté en utilisant ledit second protocole (IPv6) respectivement par l'intermédiaire de ladite passerelle (HNGW) formant une première passerelle (HNGW), une deuxième et une troisième passerelle (FNGW, CNGW), pour fournir des informations de communication (PAY) en provenance d'un second terminal (CH) dudit troisième réseau (GV6-2) à un premier terminal (MH) dudit deuxième réseau (GV6-1) ayant itinéré vers ledit quatrième réseau (GV4) ou depuis ledit premier terminal (MH) vers ledit second terminal (CH) ;
lesdits premier et second protocoles (IPv4, IPv6) étant différents ;
lesdits premier et quatrième réseaux (IN, GV4) utilisant ledit premier protocole (IPv4) pour faire l'adressage dans lesdits premier et quatrième réseaux (IN, GV4) ;
lesdits deuxième et troisième réseaux (GV6-1, GV6-2) utilisant ledit second protocole (IPv6) pour faire l'adressage dans lesdit deuxième et troisième réseaux (GV6-1, GV6-2);
lesdits premier, deuxième, troisième et quatrième réseaux (IN, GV6-1, GV6-2, GV4) comprenant respectivement des premières, deuxièmes, troisièmes et quatrièmes adresses ;
lesdites deuxièmes et troisièmes adresses étant respectivement des adresses de deuxième réseau second protocole et des adresses de troisième réseau second protocole ;
lesdites premières et quatrièmes adresses étant respectivement des adresses de premier réseau premier protocole et des adresses de quatrième réseau premier protocole, dans laquelle
ladite passerelle (HNGW) comprend :

une table de mise en correspondance (HNGW-MC, fig. 9) entre une adresse étrangère de premier terminal de deuxième réseau second protocole (MHA-6-2-CoA) et une adresse de premier terminal de quatrième réseau premier protocole (MHA-G4-4) dans ladite première passerelle (HNGW), et
une unité de conversion (CU2) conçue pour utiliser ladite table de mise en correspondance (HNGW-MC, fig. 9) pour effectuer une traduction d'adresse entre ladite adresse étrangère de premier terminal de deuxième réseau second protocole (MHA-6-2-CoA) et ladite adresse de premier terminal de quatrième réseau premier protocole (MHA-G4-4), et

une unité de paramétrage de premier tunnel (TS2-1) pour paramétrer un tunnel de premier protocole entre ladite passerelle (HNGW) et ledit premier terminal (MH), et

une seconde unité de paramétrage de tunnel (TS2-2) pour paramétrer un autre tunnel de premier protocole entre ladite passerelle (HNGW) et ladite troisième passerelle (CNGW).

35. Passerelle (HNGW) selon la revendication 34, comprenant en outre :

une unité de stockage (SU2) pour stocker ladite adresse de premier terminal de quatrième réseau premier protocole (MHA-G4-4) et ladite adresse étrangère de premier terminal de deuxième réseau second protocole (MHA-6-2-CoA).

36. Passerelle (HNGW) selon l'une des revendications 35, dans laquelle
dans ladite unité de stockage (SU2) ladite table de mise en correspondance (HNGW-MC) entre ladite adresse de premier terminal de quatrième réseau premier protocole (MHA-G4-4) et ladite adresse étrangère de premier terminal de deuxième réseau second protocole (MHA-6-2-CoA) est stockée.

37. Passerelle (HNGW) selon la revendication 36,
dans laquelle, dans ladite table de mise en correspondance
une corrélation de mise en correspondance est stockée entre ladite adresse de premier terminal de quatrième réseau premier protocole (MHA-G4-4) et ladite adresse étrangère de premier terminal de deuxième réseau second protocole (MHA-6-2-CoA).

38. Passerelle (HNGW) selon la revendication 34,
dans laquelle
ladite unité de paramétrage de premier tunnel (TS2-1) pour paramétrer un tunnel de premier protocole entre ladite passerelle (HNGW) et ledit premier terminal (MH) est conçue pour paramétrer ledit tunnel de premier protocole par l'intermédiaire dudit premier réseau (IN), de ladite deuxième passerelle (FNGW), et dudit quatrième réseau (GV4).

39. Programme ayant des instructions conçues pour effectuer les étapes de procédé des revendications de procédé indépendantes 1 ou 6.

40. Support de données ayant un code lisible par ordinateur incorporé en son sein, comprenant un moyen conçu pour exécuter les étapes de procédé des revendications de procédé indépendantes 1 ou 6.

# Fig. 1
## (PRIOR ART)

EP 1 661 354 B1

## Fig. 2a
### (PRIOR ART)

## Fig. 2b
### (PRIOR ART)

Fig. 3

Fig. 4a

SYS

# Fig. 4b

HNGW

CONVERSION UNIT — CU2

FIRST TUNNEL SETUP UNIT — TS2-1

SECOND TUNNEL SETUP UNIT — TS2-2

STORAGE UNIT — SU2

MHA-G4-4
MHA-6-2-CoA

# Fig. 4c

## MH

| | |
|---|---|
| TUNNEL SETUP UNIT | TS1 |
| GENERATING UNIT | GU1 |
| TRANSMITTING UNIT | TU1 |
| RECEIVING UNIT | RU1 |
| ENCAPSULATING UNIT | EU1 |
| DECAPSULATING UNIT | DU1 |
| STORAGE UNIT | SU1 |

MHA-6-2-ORIG
HAA-6-2
HNGWA-G4-1

# Fig. 4d

```
START
```

GENERATING IN THE FIRST TERMINAL MH A SECOND PROTOCOL SECOND
NETWORK FIRST TERMINAL FOREIGN ADDRESS MHA-6-2-CoA OF THE
FIRST TERMINAL FROM A FIRST PROTOCOL FOURTH NETWORK FIRST
TERMINAL ADDRESS MHA-G4-4 — S4d.1

SETTING UP A FIRST PROTOCOL FIRST TUNNEL TUN1 BETWEEN THE
FIRST TERMINAL MH AND THE FIRST GATEWAY HNGW — S4d.2

TRANSMITTING THE SECOND PROTOCOL SECOND NETWORK FIRST
TERMINAL FOREIGN ADDRESS MHA-6-2-CoA THROUGH THE FIRST
PROTOCOL FIRST TUNNEL TUN1 — S4d.3

RECEIVING THE SECOND PROTOCOL SECOND NETWORK FIRST TERMINAL
FOREIGN ADDRESS MHA-6-2-CoA IN THE FIRST GATEWAY HNGW — S4d.4

TRANSMITTING THE SECOND PROTOCOL SECOND NETWORK FIRST
TERMINAL FOREIGN ADDRESS MHA-6-2-CoA THROUGH THE SECOND
NETWORK GV6-1 TO A HOME AGENT HA IN THE SECOND NETWORK GV6-1 — S4d.5

```
END
```

# Fig. 4e

**START**

S4e.1

SETTING UP A FIRST PROTOCOL FIRST TUNNEL TUN1 BETWEEN THE FIRST TERMINAL MH AND THE FIRST GATEWAY HNGW

S4e.2

TRANSMITTING THE COMMUNICATION INFORMATION PAY THROUGH THE FIRST PROTOCOL FIRST TUNNEL TUN1

S4e.3

RECEIVING THE COMMUNICATION INFORMATION PAY IN THE FIRST GATEWAY HNGW

S4e.4

SETTING UP A FIRST PROTOCOL SECOND TUNNEL TUN2 BETWEEN THE FIRST GATEWAY HNGW AND THE THIRD GATEWAY CNGW

S4e.5

TRANSMITTING THE COMMUNICATION INFORMATION PAY THROUGH THE FIRST PROTOCOL SECOND TUNNEL TUN2

S4e.6

RECEIVING THE COMMUNICATION INFORMATION PAY IN THE THIRD GATEWAY CNGW

S4e.7

TRANSMITTING THE COMMUNICATION INFORMATION PAY THROUGH THE THIRD NETWORK GV6-2 TO THE SECOND TERMINAL CH

**END**

## Fig. 4f

```
START
```

TRANSMITTING THE COMMUNICATION INFORMATION PAY FROM THE SECOND TERMINAL CH THROUGH THE THIRD NETWORK GV6-2 TO THE THIRD GATEWAY CNGW — S4f.1

SETTING UP A FIRST PROTOCOL FIRST TUNNEL TUN3 BETWEEN THE THIRD GETEWAY CNGW AND THE FIRST GATEWAY HNGW — S4f.2

TRANSMITTING THE COMMUNICATION INFORMATION PAY THROUGH THE FIRST PROTOCOL FIRST TUNNEL TUN3 — S4f.3

RECEIVING THE COMMUNICATION INFORMATION PAY IN THE FIRST GATEWAY HNGW — S4f.4

SETTING UP A FIRST PROTOCOL SECOND TUNNEL TUN4 BETWEEN THE FIRST GATEWAY HNGW AND THE FIRST TERMINAL MH — S4f.5

TRANSMITTING THE COMMUNICATION INFORMATION PAY THROUGH THE FIRST PROTOCOL SECOND TUNNEL TUN4 — S4f.6

RECEIVING THE COMMUNICATION INFORMATION PAY IN THE FIRST TERMINAL MH — S4f.7

```
END
```

Fig. 4g

SYS

EP 1 661 354 B1

## Fig. 5a

REG

| SA4 | DA4 | SA6 | DA6 | BUO | TH6 | PAY |
|---|---|---|---|---|---|---|
| IPv4<br>Src. Addr. | IPv4<br>Dst. Addr. | IPv6<br>Src. Addr. | IPv6<br>Dst. Addr. | BU<br>OPTION | TRANSP.<br>HEADER | PAYLOAD |

MH_IPv4_GLO_ADDR  MH_IPv6_CoA

HNGW_IPv4_GLO_ADDR  HA_IPv6_ADDR

MHA-G4-4

MHA-6-2-CoA  MHT-6-2

HNGWA-G4-1

HAA-6-2  Scr. Port: MH_IPv6_Port
Dst. Port: HA_IPv6_Port

HAT-6-2

## Fig. 5b

ACK

| SA4 | DA4 | SA6 | DA6 | BAO | TH6 | PAY |
|---|---|---|---|---|---|---|
| IPv4<br>Src. Addr. | IPv4<br>Dst. Addr. | IPv6<br>Src. Addr. | IPv6<br>Dst. Addr. | BA<br>OPTION | TRANSP.<br>HEADER | PAYLOAD |

HNGW_IPv4_GLO_ADDR  HA_IPv6_ADDR

MH_IPv4_GLO_ADDR  MH_IPv6_CoA

HNGWA-G4-1

HAA-6-2  HAT-6-2

MHA-G4-4

MHA-6-2-CoA  Scr. Port: HA_IPv6_Port
Dst. Port: MH_IPv6_Port

MHT-6-2

EP 1 661 354 B1

# Fig. 6

HNGW-MC     <u>HNGW</u>

| IPv4 GLOBAL ADDRESS | IPv6 GLOBAL ADDRESS |
|---|---|
| | |

HA-MC     <u>HA</u>

| ORIGINAL ADDRESS | CURRENT LOCATION ADDRESS |
|---|---|
| MH_ORIGIN_IPv6_ADDR | |

MHA-6-2-ORIG

52

# Fig. 7

HNGW-MC

| IPv4 GLOBAL ADDRESS | IPv6 GLOBAL ADDRESS |
|---|---|
| MH_IPv4_GLO_ADDR | |

MHA-G4-4

HA-MC

| ORIGINAL ADDRESS | CURRENT LOCATION ADDRESS |
|---|---|
| MH_ORIGIN_IPv6_ADDR | |

MHA-6-2-ORIG

# Fig. 8

HNGW-MC

| IPv4 GLOBAL ADDRESS | IPv6 GLOBAL ADDRESS |
|---|---|
| MH_IPv4_GLO_ADDR | MH_IPv6_CoA |

MHA-G4-4          MHA-6-2-CoA

HA-MC

| ORIGINAL ADDRESS | CURRENT LOCATION ADDRESS |
|---|---|
| MH_ORIGIN_IPv6_ADDR | |

MHA-6-2-ORIG

# Fig. 9

HNGW-MC

| IPv4 GLOBAL ADDRESS | IPv6 GLOBAL ADDRESS |
|---|---|
| MH_IPv4_GLO_ADDR | MH_IPv6_CoA |

MHA-G4-4    MHA-6-2-CoA

HA-MC

| ORIGINAL ADDRESS | CURRENT LOCATION ADDRESS |
|---|---|
| MH_ORIGIN_IPv6_ADDR | MH_IPv6_CoA |

MHA-6-2-ORIG    MHA-6-2-CoA

# Fig. 10a
## REGISTRATION/ACKNOWLEDGEMENT OF MH

# Fig. 10b

# Fig. 10c

S10a16 OF Fig. 10a
AND S11b.12 OF Fig. 11b
AND S12b.3 OF Fig. 12b

START

NO

ANY ENCAP. HEADER ?  S10c.1

YES

DECAPSULATE THE ENCAP. HEADER  S10c.2

S10c.3

TRANSP. DEST. PORT ∈ MH_IPv6_PORTS  NO

YES

S10c.4

PROCESS THE IPv6 PACKET

S10c.5

IGNORE THE PACKETS

END

## Fig. 10d

| IPv4 ADDRESS | MAC ADDRESS |
|---|---|

## Fig. 10e

| FP | GLOBAL IPv4 ADDRESS | 0000 | MAC ADDRESS |
|---|---|---|---|

# Fig. 11a

## COMMUNICATION MH → CH

# Fig. 11b

## COMMUNICATION MH→CH (CONT.)

| MH | FNGW | HA | HNGW | CNGW | CH |
|----|------|-----|------|------|-----|

FORWARDS THE
ENCAPSULATED PACKET
S11b.1

DECAPSULATION S11b.2

FORWARDS IPv6
PACKET
S11b.4
S11b.3

LOOK UP THE ADDRESS
OF MH`s current
LOCATION

ENCAPSULATION IPv6
PACKET WITH ANOTHER
IPv6 HEADER DESTINED
TO MH_IP6_CoA

S11b.5 FORWARDS IPv6 S11b.6
PACKET
S11b.7

LOOK UP THE MAPPING
ADDRESS MATCHING WITH
MH_IPv6_CoA

ENCAPSULATION WITH
IPv4 HEADER
S11b.8

FORWARDS
ENCAPSULATED PACKET
S11b.10
S11b.9

LOOK UP THE ROUTING TABLE

FORWARDS
ENCAPSULATED
PACKET

START MH`s
RECEIVING
PACKET
PROCEDURE
(SEE Fig.10c) S11b.11
S11b.12

ACKNOWLEDGE
RESPONSE S11b.13

EP 1 661 354 B1

# Fig. 11c

START

S11c.1
CHECK THE ASSIGNED ADDRESS

S11c.2
ASSIGNED ADDRESS = IPv4 ADDRESS

NO

YES

S11a.4 OF Fig. 11a
AND S12b.4 OF Fig. 12b

S11c.3
CREATES IPv6 PACKET WITH
MH_ORIGIN_IPv6_ADDR AND CALLEE'S
ADDRESS AS THE SOURCE AND DESTINATION
ADDRESS RESPECTIVELY

S11c.5
CREATES IPv6 PACKET WITH ASSIGNED
IPv6_ADDRESS AND CALLEE'S ADDRESS AS
THE SOURCE AND DESTINATION ADDRESS
RESPECTIVELY

S11c.4
ENCAPSULATES IPv6 PACKET WITH IPv4
HEADER DESTINED TO HNGW's IPv4
GLOBAL ADDRESS

END

# Fig. 12a

## COMMUNICATION MH← CH

# Fig. 12b

## COMMUNICATION MH← CH (CONT.)

# Fig. 13a
## REGISTRATION/ACKNOWLEDGEMENT OF MH

| MH | FNGW | HNGW | HA |
|---|---|---|---|

DHCP

IPv4 ADDRESS
ALLOCATION ⟵⟶
S10a.1

BU EXTENSION
(SEE Fig. 10b) ⟩ S10a.2

SENDS THE ENCAPSULATED
PACKET TO HA

S10a.3

LOOK UP THE ROUTING TABLE ⟩ S10a.4

FORWARD THE
ENCAPSULATED PACKET

S10a.5

DECAPSULATION ⟩ S10a.6`

START HNGW´s RECEIVING
AND TRANSMITTING PROCEDURE
(SEE Fig. 13b) ⟩ S10a.7`

FORWARDS IPv6 PACKET

S10a.8

S10a.9 ⟩ UPDATE THE MH´s
CURRENT LOCATION

SENDS BA OPTION MESSAGE

S10a.10

START HNGW´s RECEIVING
AND TRANSMITTING PROCEDURE
(SEE Fig. 13b) ⟩ S10a.11`

FORWARDS THE
ENCAPSULATED PACKET

S10a.13

LOOK UP THE ROUTING TABLE ⟩ S10a.14

FORWARDS THE
ENCAPSULATED PACKET

S10a.15

START MH´s
RECEIVING
PACKET
PROCEDURE ⟩ S10a.16
(SEE Fig. 10c)

ACKNOWLEDGES
BA OPTION ⟩ S10a.17
MESSAGE

## Fig. 13b

S10a.7' AND S10a.11' OF Fig. 13a
AND S11a.9' OF Fig. 14a
AND S11b.2' AND S11b.7' OF Fig. 14b
AND S12a.8' AND S12a.13' OF Fig. 15a
AND S12b.9' OF Fig. 15b

START

**S13b.1** IPv6 DESTINATION ADDRESS OF IPv6 PACKET & IPV6 ADDRESS SPACE BELONG TO HN — NO →

**S13b.7** IPv6 DESTINATION ADDRESS OF IPv6 PACKET & IPV6 ADDRESS IN THE MAPPING TABLE — YES →

YES ↓

**S13b.2** IPv6 PACKET CONTAINS BINDING UPDATE OPTIONS — NO →

NO ↓ **S13b.8** USE EXTENSION BGP TO SEARCH FOR THE IPv4 ADDRESS CORRESPONDING TO THE IPv6 DESTINATION ADDRESS

**S13b.10** ENCAPSULATE IPv6 PACKET WITH IPv4 HEADER AN TRANSPORT HEADER BY USING THE VALUE FROM THE MAPPING TABLE MATCHED WITH THIS IPv6 ADDRESS

YES ↓

**S13b.3** IS THE ENTRY OF IPv6 SRC. ADDR. OF IPv6 PACKET ALREADY EXISTED IN THE MAPPING TABLE ? — NO →

ENCAPSULATE IPv6 PACKET WITH THE IPv4 HEADER AND FORWARD ENCAPSULATED PACKET TO THE ADDRESS FOUND BY EXTENSION BGP

**S13b.9**

YES ↓

**S13b.4** UPDATE THE MAPPING BETWEEN A PAIR OF (IPv4 GLOBAL SRC. ADDR., IPv4 GLOBAL TRANSP. SRC. PORT) AND IPV6 SRC. ADDR.

ADD THE NEW ENTRY IN THIS TABLE MAPPING BETWEEN A PAIR OF (IPv4 GLOBAL SRC. ADDR., IPv4 GLOBAL TRANSP. SRC. PORT) AND IPv6 SRC. ADDR.

**S13b.5**

FORWARD THIS ENCAPSULATED PACKET TO THE IPv4 ADDRESS AS FOUND BY PREVIOUS STEP

**S13b.11**

FORWARDS THE IPv6 PACKET TO THE ADDR. ACCORDING TO IPv6 DEST. ADDR.

**S13b.6**

END

# Fig. 14a

## COMMUNICATION MH → CH

# Fig. 14b

## COMMUNICATION MH → CH (CONT.)

FORWARTS THE
ENCAPSULATED PACKET
S11b.1

DECAPSULATION — S11b.2

START HNGW's RECEIVING
AND TRANSMITTING PROCEDURE
(SEE Fig. 13b)
S11b.2'

FORWARDS IPv6
PACKET
S11b.3

LOOK UP THE ADDRESS
OF MH's CURRENT
LOCATION
S11b.4

ENCAPSULATION IPv6
PACKET WITH ANOTHER
IPv6 HEADER DESTINED
TO MH_IP6_CoA
S11b.5

FORWARDS IPv6
PACKET
S11b.6

S11b.7'

START HNGW's RECEIVING
AND TRANSMITTING PROCEDURE
(SEE Fig. 13b)

FORWARDS
ENCAPSULATED PACKET
S11b.10
S11b.9

LOOK UP THE ROUTING TABLE

FORWARDS
ENCAPSULATED
PACKET
S11b.11

START MH's
RECEIVING
PACKET
PROCEDURE
(SEE Fig. 10c)
S11b.12

ACKNOWLEDGE
RESPONSE
S11b.13

# Fig. 15a

## COMMUNICATION MH ← CH

| MH | FNGW | HA | HNGW | CNGW | CH |
|----|------|-----|------|------|-----|

S12a.1

CNDNS

S12a.2 — DNS QUERY. MH_NAME

S12a.3 — DNS RESOLUTION: MH_ORIGIN_IPv6_ADDR

S12a.4 — SENDS IPv6 PACKET

BY USING EXTENSION BGP (5), THE INFORMATION OF THE HNGW´s IPv4 ADDRESS HAS BEEN OBTAINED

ENCAPSULATION S12a.5

S12a.6

FORWARDS THE ENCAPSULATED PACKET

S12a.8 S12a.7

DECAPSULATION

START HNGW´s RECEIVING AND TRANSMITTING PROCEDURE (SEE Fig. 13b)

S12a.8'

FORWARDS IPv6 PACKET

S12a.10 S12a.9

LOOK UP THE ADDRESS OF MH´s CURRENT LOCATION

ENCAPSULATION IPv6 PACKET WITH ANOTHER IPv6 HEADER DESTINED TO MH_IPv6_CoA

S12a.11 FORWARDS IPv6 PACKET S12a.12

START HNGW´s RECEIVING AND TRANSMITTING PROCEDURE (SEE Fig. 13b)

S12a.13'

FORWARDS ENCAPSULATED PACKET

S12a.15

# Fig. 15b
## COMMUNICATION MH ← CH (CONT.)

**EP 1 661 354 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PERKINS CE.** MOBILE NETWORKING THROUGH MOBILE IP' EEEE INTERNET COMPUTING. *IEEE SERVICE CENTER,* 1998, vol. 2 (1), 58-69

- **CARPENTER B et al.** RFC 3056. Connection of IPv6 Domains via IPv4 Clouds. *NETWORK WORKING GROUP REQUEST FOR COMMENTS, XX, XX,* February 2001, 1-23